Europäisches Patentamt

European Patent Office

Office européen des brevets

(19)

(11) **EP 1 531 628 A2**

(12) **EUROPEAN PATENT APPLICATION**

(43) Date of publication:
**18.05.2005 Bulletin 2005/20**

(51) Int Cl.⁷: **H04N 7/24**

(21) Application number: **04026680.1**

(22) Date of filing: **10.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **11.11.2003 JP 2003381859**
**30.03.2004 JP 2004100419**

(71) Applicant: **Media Glue Corporation**
**Tokyo 169-0072 (JP)**

(72) Inventors:
• **Hanamura, Tsuyoshi c/o Media Glue Corporation**
**Tokyo 169-0072 (JP)**

• **Nagayoshi, Isao c/o Media Glue Corporation**
**Tokyo 169-0072 (JP)**
• **Wakui, Michiko c/o Waseda University**
**Shinjuku-ku, Tokyo 169-0051 (JP)**
• **Tominaga, Hideyoshi c/o Waseda University**
**Shinjuku-ku, Tokyo 169-0051 (JP)**

(74) Representative: **Schäfer, Matthias W., Dipl.-Ing.**
**Patentanwalt**
**Schwanseestrasse 43**
**81549 München (DE)**

(54) **Scalable video coding**

(57)     A coded signal separating apparatus, coded signal merging apparatus, coded signal separating and merging system, and methods thereof capable of performing scalable transmission of images are provided. There are provided a separating unit 1100, which is a separator separating means for separating a coded stream into a basic coded signal B having a smaller code amount than the coded stream and a plurality of extended coded signals E(m), which are used with the basic coded signal B to reconstruct an image, and a multiplexing unit 1600, which is a separator multiplexing means for optionally combining and multiplexing the basic coded signal B with the plurality of extended coded signals E(m) to generate a plurality of transmission coded signals St(1), to thereby generate and output separated streams St(1), which are multiplexed transmission coded signals. Accordingly, when they are used in a network, transmitting path selection according to a network status can be performed to realize the scalable transmission of images.

Fig. 1

EP 1 531 628 A2

**Description**

**BACKGROUND OF THE INVENTION**

**1. FIELD OF THE INVENTION**

The present invention relates to a coded signal separating apparatus, coded signal merging apparatus, coded signal separating and merging system, and methods thereof capable of performing scalable transmission of images.

**2. DESCRIPTION OF THE RELATED ART**

In the art of digitalizing a moving picture, there is a standard of coding method for digital video and related audio, ISO/IEC 13818 (commonly called "MPEG-2" (Moving Picture Expert Group Phase 2)) as a method of compressing and coding a considerable amount of generated information. A bit stream thus generated in compliant with the MPEG-2 standard (hereinafter, referred to as "MPEG-2 bit stream") is used in a wide range of fields such as communication, television broadcasting, and so on.

The MPEG-2 bit stream has a hierarchical structure and is constituted of respective layers in order from a sequence layer at the top to a GOP (Group of Pictures) layer, a picture layer, a slice layer, a macroblock layer and a block layer.

In MPEG-2, respective images of a moving picture constituted of a series of images are once stored in frame memories, differences between frames are taken out to eliminate redundancy in a time axis direction, and further, plural pixels constituting each frame are subjected to an orthogonal conversion process such as discrete cosine transformation (hereinafter, abbreviated to "DCT") to eliminate redundancy in a spatial axis direction, thereby realizing efficient compression and coding of a moving picture.

The coded signal is sent to a decoder to be decoded and reproduced. In the decoder, an image is reproduced and stored in a first frame memory, and a subsequent image is predicted based on differential information and stored in a second frame memory, and from the two frames, an image to be inserted therebetween is further predicted to thereby construct a series of images to reproduce a moving picture. Such a method is called a bidirectional prediction.

In order to realize this bidirectional prediction, three types of pictures, I picture, P picture and B picture, are defined in MPEG-2. The I picture stands for Intra-coded picture, which is an image coded independently from other pictures as a still image, the P picture stands for Predictive coded picture in a forward direction, which is an image predictively coded based on an I picture or P picture positioned in the past temporally. The B picture stands for Bidirectional predictive coded picture, which is an image predictively coded based on a picture in a forward direction, backward direction, or bidirectional direction using an I picture or P picture located temporally before or after the B picture. Specifically, after the I picture and the P picture are subjected to a coding process in advance, the B picture to be inserted therebetween is coded.

The MPEG-2 bit stream coded in a coder is transmitted at a predetermined transmission rate to a transmitting path, and inputted to a decoder on the transmitting path to be decoded and reproduced. However, the amount of information generated by coding a moving picture is not constant. Particularly, when a scene is changed, the amount of information rapidly increases. In order to transmit such a non-constant coded signal to a transmitting path having a fixed rate, it is necessary to perform a rate control of coded data in advance so that the amount of information of transmission buffer level or more will not be generated.

In MPEG-2, a rate controlling method is described in ISO/IEC JTC1/SC29/WG11/N0400 Test Mode 5 (April, 1993) (hereinafter, abbreviated to "TM5").

In the rate control in the TM5 of MPEG-2, in step 1 first, bits are allocated based on an assigned code amount R for uncoded pictures in a GOP for each picture type. In step 2, a quantization scale used when performing coding processing in macroblock unit is calculated from the occupancy amount of a virtual buffer, which is calculated based on the bit allocation.

Further, there exist a large number of decoders having a compression format other than the MPEG-2 as well as decoders connected to a transmitting path having a different transfer rate, so that a moving picture compressed coded signal converter for converting an MPEG-2 bit stream into a different compression format or a different transfer rate is needed. An apparatus for realizing this is a so-called transcoder. The compressed coded signal of a moving picture transmitted from a coder is converted into an appropriate signal in the transcoder, and the signal is supplied to the respective decoders.

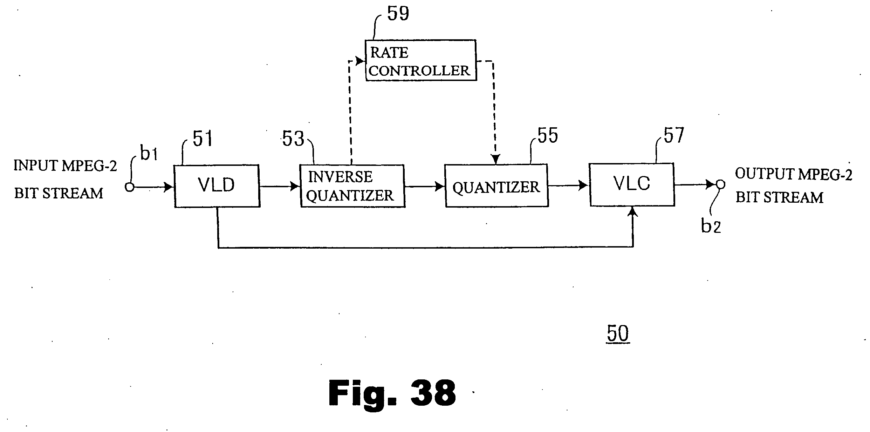

FIG. 38 shows a first example of a general conventional transcoder 50. The conventional transcoder 50 has a variable length decoder (VLD) 51 connected to a first transmitting path (not shown) having a first bit rate and configured to input a first MPEG-2 bit stream b1, an inverse quantizer 53, a quantizer 55, a VLC 57 connected to a second transmitting path (not shown) having a second bit rate and configured to output a second MPEG-2 bit stream b2, and a rate control unit 59 configured to control the amount of generated codes in the quantizer 55. The second bit rate is a transfer rate lower than the first bit rate.

By the VLD 51 and the inverse quantizer 53, the first MPEG-2 bit stream b1 is decoded in a macroblock unit up to a DCT coefficient region, and an obtained DCT coefficient signal is coded by the quantizer 55 and the VLC 57 to generate the second MPEG-2 bit stream b2 having a smaller code amount than the first MPEG-2 bit stream.

In a quantization process in the quantizer 55, coefficients obtained by the DCT transformation is divided by a predetermined quantizing step. Thus, the image signal is compressed. This quantization step is obtained by multiplying plural quantization matrix values included in a predetermined quantization table by a quantization scale.

In the transcoder 50, most of coded information of the sequence layer, GOP layer, picture layer, slice layer and macroblock layer in the first MPEG-2 bit stream b1 is reused. Basically, there is performed only processes of converting the DCT coefficient of the block layer and converting the code of the macroblock layer needed to be modified along with the conversion of the block layer.

In the transcoder 50 configured as such, the rate control unit 59 performs the rate control described in the TM5 of MPEG-2.

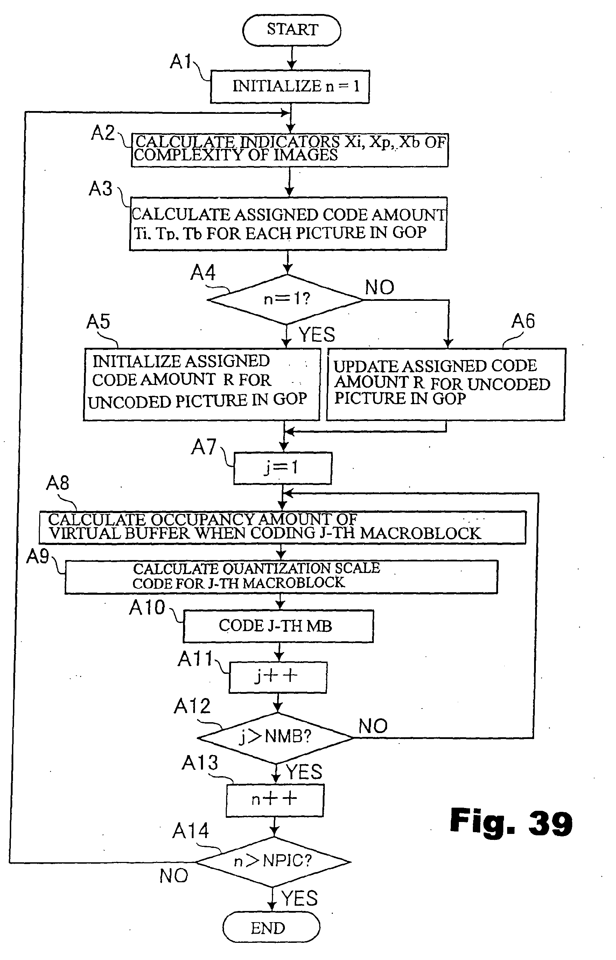

A flowchart of a rate control process in the conventional transcoder 50 is shown in FIG. 39. As shown in the flowchart, the conventional rate control process is constituted of steps A1 to A 14.

In step A1, a variable n is set to 1. Here, the variable n represents a number assigned to each of plural pictures included in an input image signal. Hereinafter, an n-th picture will be referred to as "pic(n)".

In subsequent step A2, indicators Xi, Xp and Xb representing complexity of I, P and B pictures are calculated by the following equation (a1), equation (a2), and equation (a3).

$$Xi = Si \times Qi \qquad\qquad \text{equation (a1)}$$

$$Xp = Sp \times Qp \qquad\qquad \text{equation (a2)}$$

$$Xb = Sb \times Qb \qquad\qquad \text{equation (a3)}$$

Here, Si, Sp and Sb are generated code amounts of the I, P and B pictures respectively, and Qi, Qp and Qb are average quantization parameters which are average values of quantization scale codes of all macroblocks in the I, P and B pictures respectively. However, the average quantization parameters are normalized in a range from 1 to 31.

The indicators Xi, Xp and Xb of complexity of images become large in an image for which a large coded information amount is generated, namely, an image having a low compression rate, and inversely become small in an image having a high compression rate.

Further, initial values of the parameters Xi, Xp, and Xb representing the complexity of images of the I, P and B pictures are provided by the following equation (a4), equation (a5), and equation (a6), respectively.

$$Xi = 160 \times \text{target\_Bitrate/115} \qquad\qquad \text{equation (a4)}$$

$$Xp = 60 \times \text{target\_Bitrate/115} \qquad\qquad \text{equation (a5)}$$

$$Xp = 42 \times \text{target\_Bitrate/115} \qquad\qquad \text{equation (a6)}$$

Here, the "target_Bitrate" is a target bit rate of the transcoder 50.

In subsequent step A3, assigned code amounts Ti, Tp and Tb for the I, P and B pictures in a GOP are calculated by the following equation (a7), equation (a8), and equation (a9) respectively. However, Np and Nb represent the number of uncoded P pictures and the number of uncoded B pictures in the GOP respectively.

$$T_i = \frac{R}{1 + \dfrac{N_p\, X_p}{X_i\, K_p} + \dfrac{N_p\, X_p}{X_i\, K_p}} \qquad\qquad \text{equation (a7)}$$

$$T_p = \frac{R}{N_p + \dfrac{N_b\, K_p\, X_b}{K_b\, X_p}} \qquad \text{equation (a8)}$$

$$T_b = \frac{R}{N_b + \dfrac{N_b\, K_p\, X_b}{K_p\, X_b}} \qquad \text{eqation (a9)}$$

Here, Kp and Kb represent percentages of the quantization scale codes of the P and B pictures on the basis of the quantization scale code of the I picture, and it is presumed that the overall picture quality is constantly optimized when Kp = 1.0 and Kb = 1.4.

In subsequent step A4, whether the variable n is 1 or not is judged. Specifically, whether a picture that is the coding target is a first picture pic(1) or not is judged. If it is the first picture, the flow goes to step A5. If it is not the first picture, the flow goes to step A6. In step A5, an assigned code amount R for an uncoded picture in the GOP at the time of coding the first picture pic(1) in the GOP is obtained by the following equation (a10).

R = target_Bitrate × N/picture_rate + R ... equation (a10)

Here, N is a value representing the total number of pictures in the GOP, the "picture_rate" is a value representing the resolution per time of an input image and representing the number of images decoded and displayed in one second.

In step A6, the assigned code amount R for an uncoded picture in the GOP is updated by one of the following equation (a11), equation (a12) and equation (a13) based on the generated code amount Si, Sp or Sb of the I, P and B pictures at the time when the (n - 1)th picture pic(n-1) is coded.

$$R = R - Si \qquad \text{equation (a11)}$$

$$R = R - Sp \qquad \text{equation (a12)}$$

$$R = R - Sb \qquad \text{equation (a13)}$$

Steps A5 and A6 both go to step A7, and a variable j is set to 1. Here, the variable j represents numbers assigned to plural macroblocks in one picture, and hereinafter, a j-th macroblock will be represented by MB(j).

In subsequent step A8, occupancy amounts di(j), dp(j) and db(j) of virtual buffers at the time of coding the j-th macroblock MB(j) in the I, P and B pictures are calculated by the following equation (a14), equation (a15) and equation (a16) respectively.

$$d_i\,(j) = d_i\,(0) + B\,(j - 1)\,\frac{T_i \times (j - 1)}{NMB} \qquad \text{equation (a14)}$$

$$d_p\,(j) = d_p\,(0) + B\,(j - 1)\,\frac{T_p \times (j - 1)}{NMB} \qquad \text{equation (a15)}$$

$$d_b\,(j) = d_b\,(0) + B\,(j - 1)\,\frac{T_b \times (j - 1)}{NMB} \qquad \text{equation (a16)}$$

Here, B(j - 1) is a generated code amount of all the macroblocks up to (j - 1)th macroblock MB(j -1).

Further, di(0), dp(0) and db(0) are initial values of virtual buffer occupancy amounts of the I, P and B pictures respectively, and provided by the following equation (a17), equation (a18) and equation (a19) respectively.

$$di(0) = 10 \times r/31 \qquad \text{equation (a17)}$$

$$dp(0) = Kp \times di(0) \qquad \text{equation (a18)}$$

$$db(0) = Kb \times di(0) \qquad \text{equation (a19)}$$

Here, "r" is called a reaction parameter, which is shown by the following equation (a20), and controls the response speed of a feedback loop.

$$r = 2 \times target\_Bitrate/picture\_rate \qquad \text{equation (a20)}$$

Further, virtual buffer occupancy amounts at the time of completing coding of the I, P and B pictures, namely, virtual buffer occupancy amounts di(NMB), dp(NMB) and db(NMB) at the time of coding an NMB-th macroblock MB (NMB) are used as initial values di(0), dp(0) and db(0) of virtual buffer occupancy amounts at the time of next coding for respective picture types.

In subsequent step A9, based on the above-described virtual buffer occupancy amount d(j), a quantization scale code Q(j) for a j-th macroblock MB(j) for each picture is obtained by the following equation (a21).

$$Q(j) = d(j) \times 31/r \qquad \text{equation (a21)}$$

In subsequent step A10, the quantization scale code Q(j) calculated in step A9 is used to quantize the j-th macroblock MB(j). In subsequent step A11, the variable j is incremented, and the flow goes to step A12 to judge whether or not the variable j exceeds the macroblock total number NMB. Here, NMB is the total number of macroblocks included in an n-th picture pic(n). When the variable j does not exceed the macroblock total number NMB, the flow returns to step A8. When the variable j exceeds the macroblock total number NMB, the flow goes to step A13.

Thus, the variable j is also used as a loop counter for repeating the coding process in steps A8 to A11. Accordingly, the coding process can be performed sequentially on all macroblocks from a first macroblock MB(1) to an NMB-th macroblock MB(NMB) in an n-th picture pic(n).

In step A13, the variable n is incremented, and the flow goes to step A14 to judge whether or not the variable n exceeds the total number NPIC of pictures which are the coding targets. Here, when the variable n does not exceed the total number NPIC of pictures, the flow returns to step A2. When the variable n exceeds the total number NPIC of pictures, the process is terminated.

Thus, the first transcoder 50 is not able to have information regarding image structures such as I and P picture cycles, so that a method of allocating bits, such as the rate control in TM5 shown in FIG. 39, based on information such as the image GOP structure cannot be carried out without presuming an input image structure.

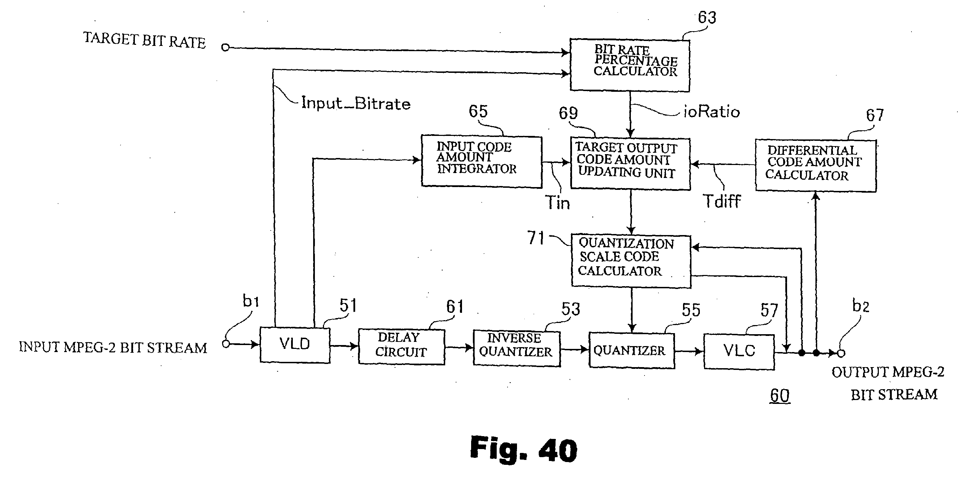

Then, as an example of adopting a method of performing the rate control without presuming a GOP structure, there is a second conventional transcoder 60 shown in FIG. 40. As shown in the diagram, the second conventional transcoder 60 has, in addition to the configuration of the first conventional transcoder 50, a delay circuit 61, a bit rate percentage calculator 63, an input code amount integrator 65, a differential code amount calculator 67, a target output code amount updating unit 69, and a quantization scale code calculator 71.

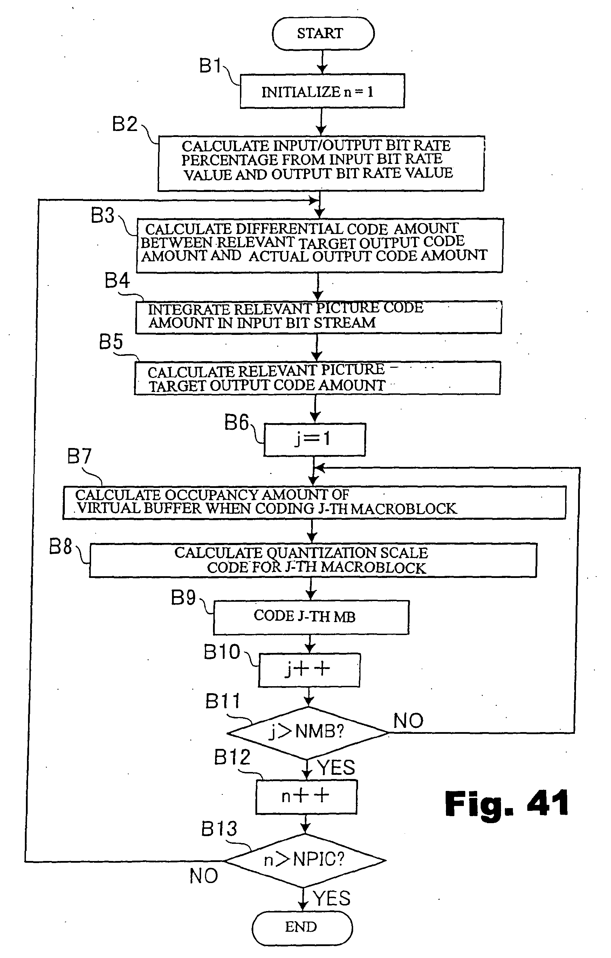

The flow of a process in the transcoder 60 configured as such is shown in FIG. 41. As shown in the view, the process in the transcoder 60 is constituted of steps B 1 to B 13. Steps B6 to B 13 are the same as steps A7 to A14 of the rate processing shown in the above-described first conventional example. However, in step B7, the virtual buffer occupancy amount is calculated based on a target output code amount Tout, which is calculated in the target output code amount updating unit 69.

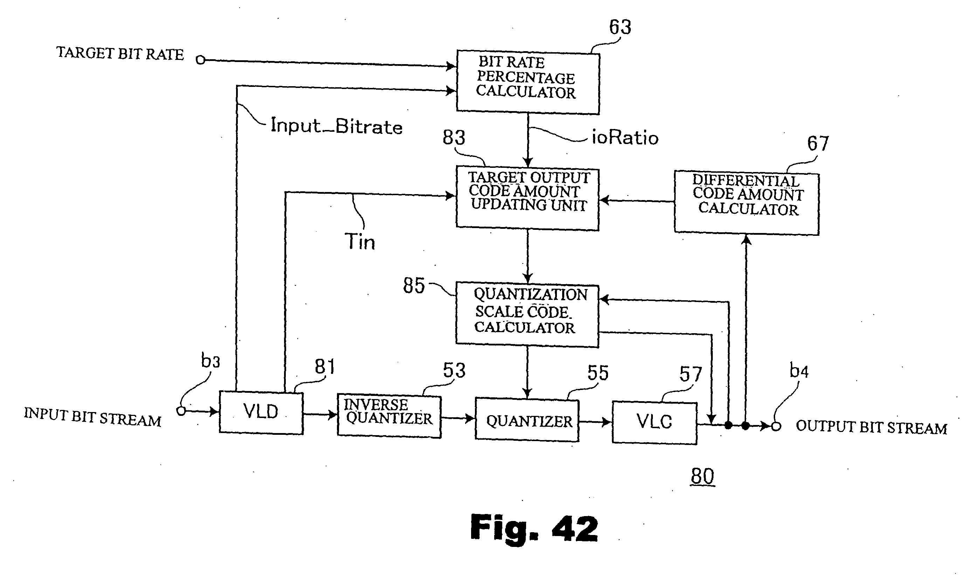

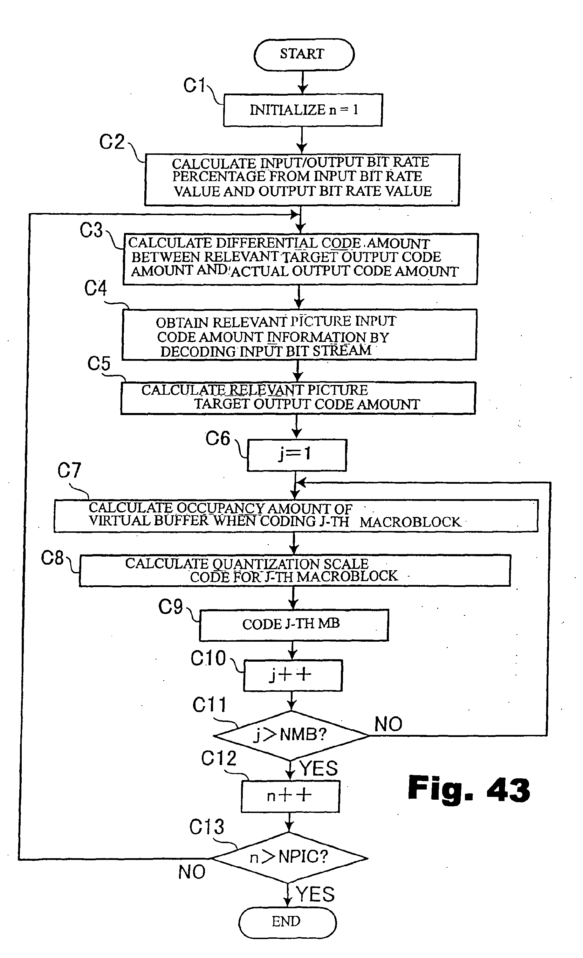

Further, similarly, as another example of adopting a method of performing the rate control without presuming the GOP structure, a third example of a conventional transcoder is shown in FIG. 42 and FIG. 43. As shown in FIG. 42, a third conventional transcoder 80 includes a VLD 81 connected to a first transmitting path having a first bit rate and configured to input an input bit stream b3, as well as an inverse quantizer 53, a quantizer 55, and a VLD 57 which are the same as those of the first conventional transcoder 50, as well as a bit rate percentage calculator 63 and a differential code amount calculator 67 which are the same as those of the transcoder 60 in FIG. 40, and further has a target output code amount updating unit 83 and a quantization scale code calculator 85.

In the third conventional transcoder 80, a code amount is described as information in the bit stream b3 in advance, and the rate control is performed based on this information.

However, the transcoder targets at signals after a coding process, and thus it does not know original signals before the coding. Therefore, in a coding amount control, reduction of the code amount must be realized while restraining deterioration in the image quality by focusing attention not on the distortion of an image itself after a transcode process but on a distortion that is newly generated due to the re-quantization process and restraining this distortion.

Accordingly, the applicant of the present application proposed a method and apparatus of converting a moving picture compression coded signal and a medium recording a conversion program product, which realize calculation of an optimum quantization parameter based on a decoding quantization parameter and a quantization parameter calculated in a preceding stage by considering in advance a re-quantization rate distortion function depending on the decoding quantization parameter and a re-quantization parameter (for example, refer to Japanese Patent Application Laid-open No. Hei 2001-169283 and related corresponding European Patent Application EP 1067798).

In the above described method and apparatus, in a transcoder provided with an inverse quantizer configured to perform inverse quantization and a quantizer configured to perform re-quantization, there is provided a quantization parameter switching part configured to switch the quantization parameter by considering a rate distortion function based on an input quantization parameter, so that errors in the conversion from quantization coefficient area data to re-quantization coefficient area data can be suppressed as much as possible.

Thus, the transcoder is a processor which realizes a bit stream conversion into forms suitable in various use environments.

Furthermore, on a network in which various bands are mixed, a bit rate scaling method and a progressive coding method exist as a technology to realize a scalability for generating and providing image streams suitable in use environments.

For example, in a bit rate scaling transcoder placed in each router on a network, a stream conversion by bit rate reduction according to a required bit rate is realized. Thus, scalability of images corresponding to variances of a network is realized.

However, since the bit rate scaling transcoder itself performs the rate control and the stream conversion, highly technical processing is required in a router, thereby increasing a load on the router.

Further, a stream inputted in advance to a server is converted into a stream having a hierarchical structure, and the scalability is realized by hierarchy selection at a router. This renders the rate control by the transcoder unnecessary, and also eliminates a load such as signal processing at each router on a network. However, since there is a dependent relationship between the streams converted into the hierarchical structure, each hierarchy is given an order of priority, which poses a problem of requiring a control with consideration of the order of priority when selecting a hierarchy.

## SUMMARY OF THE INVENTION

The present invention is made in view of solving such conventional problems, and an object thereof is to provide a coded signal separating apparatus, coded signal merging apparatus, coded signal separating and merging system, and methods thereof capable of generating multiplexed separated streams to perform scalable transmission of images.

A coded signal separating apparatus according to the present invention is characterized by including a separator input means for inputting a first coded signal in which a first moving picture constituted of a plurality of image information is coded; a separator separating means for separating the first coded signal inputted to the separator input means into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal; a separator multiplexing means for optionally combining and multiplexing the basic coded signal with the plurality of extended coded signals, which are separated by the separator separating means, to generate a plurality of transmission coded signals; and a separator output means for outputting the plurality of transmission coded signals multiplexed by the separator multiplexing means.

Preferably, in the coded signal separating apparatus according to the present invention, the separator separating means includes: a first coefficient converting means for converting the first coded signal into first quantization coefficient values for reconstructing the first moving picture; a basic extended hierarchy separating means for separating the first quantization coefficient values converted by the first coefficient converting means into basic hierarchy coefficient values of a basic hierarchy for reconstructing the second moving picture and extended hierarchy coefficient values of an extended hierarchy used when reconstructing the third moving picture; a basic coded signal generating means for generating the basic coded signal from the extended hierarchy coefficient values; and an extended coded signal generating means for generating the plurality of extended coded signals from the extended hierarchy coefficient values.

Incidentally, the basic extended hierarchy separating means may have operation to separate the basic hierarchy coefficient values and the extended hierarchy coefficient values according to the value of an input quantization parameter for quantizing coefficient values of the first moving picture to the first quantization coefficient values and the value of a re-quantization parameter for re-quantizing the first quantization coefficient values.

Further, the separator separating means may include a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between values predicted by the basic quantization coefficient values and the re-quantization parameter and the basic hierarchy coefficient values,

the basic coded signal generating means of the separator separating means may include a basic quantization coefficient sequence coding means for inputting the basic quantization coefficient values and coding the basic quantization coefficient values to a basic quantization coefficient coded sequence which is the basic coded signal, and

the extended coded signal generating means of the separator separating means may be configured to input the prediction error coefficient values converted by the basic quantization coefficient converting means and the extended hierarchy coefficient values separated by the basic extended hierarchy separating means to generate the plurality of extended coded signals from the prediction error coefficient values and the extended hierarchy coefficient values.

Further, the separator separating means may include a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between values predicted by the basic quantization coefficient values and the re-quantization parameter and the basic hierarchy coefficient values, and

the basic coded signal generating means of the separator separating means may include: a basic quantization coefficient sequence coding means for inputting the basic quantization coefficient values and coding the basic quantization coefficient values to a basic quantization coded sequence, a prediction error coefficient sequence coding means for inputting the prediction error coefficient values and coding the prediction error coefficient values to a prediction error coded sequence, and a basic coded signal merging means to merge the basic quantization coded sequence and the prediction error coded sequence to generate the basic coded signal.

Preferably, in the coded signal separating apparatus according to the present invention, the separator multiplexing means generates each of the basic coded signal and the plurality of extended coded signals as each of the transmission coded signals.

Preferably, in the coded signal separating apparatus according to the present invention, the separator multiplexing means multiplexes the basic coded signal to each of the plurality of extended coded signals to generate the plurality of transmission coded signals.

Preferably, in the coded signal separating apparatus according to the present invention, the separator multiplexing means multiplexes the plurality of extended coded signals to generate the plurality of transmission coded signals each having a different code amount.

Preferably, in the coded signal separating apparatus according to the present invention, the basic extended hierarchy separating means of the separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,

the separator separating means further includes: a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating means for separating the plurality of extended hierarchy coefficient values separated by the basic extended hierarchy separating means to generate a plurality of extended quantization coefficient sequences each constituted of the respective separated extended hierarchy coefficient values,

the basic coded signal generating means of the separator separating means codes a basic quantization coefficient sequence constituted of the basic quantization coefficient values converted by the basic quantization coefficient converting means to generate the basic coded signal, and

the extended coded signal generating means of the separator separating means codes a prediction error coefficient sequence constituted of the prediction error coefficient values converted by the basic quantization coefficient converting means and the plurality of extended quantization coefficient sequences separated by the extended quantization coefficient separating means respectively to generate the plurality of extended coded signals.

Preferably, in the coded signal separating apparatus according to the present invention, the extended coded signal generating means of the separator separating means codes quantization parameter reconstructing information, which is for reconstructing the input quantization parameter from the re-quantization parameter, within each of the plurality of extended coded signals.

Furthermore, the basic extended hierarchy separating means of the separator separating means may be configured to generate a re-quantization parameter deriving constant for calculating the re-quantization parameter that is appropriate based on a re-quantization property, calculate the re-quantization parameter from the input quantization parameter according to the re-quantization parameter deriving constant, and separate the basic hierarchy coefficient values and the extended hierarchy coefficient values, and the extended coded signal generating means of the separator separating means may be configured to code information of the re-quantization parameter deriving constant as the quantization parameter reconstructing information within the plurality of extended coded signals.

Furthermore, the extended coded signal generating means may be configured to code differential values between macroblocks of the re-quantization parameter deriving constant as the quantization parameter reconstructing information within the plurality of extended coded signals.

Furthermore, the extended coded signal generating means may be configured to code the extended quantization coefficient sequence by a coding table in accordance with the re-quantization parameter deriving constant.

Preferably, the coded signal separating apparatus according to the present invention further includes a separating information input means for inputting extended hierarchy separating pattern information defining a method of separating the extended hierarchy coefficient values into the plurality of extended quantization coefficient sequences, and the extended quantization coefficient separating means of the separator separating means separates the extended hierarchy coefficient values separated by the basic extended hierarchy separating means according to the extended hierarchy separating pattern information inputted by the separating information input means into the plurality of extended quantization coefficient sequences.

Preferably, in the coded signal separating apparatus according to the present invention, the basic extended hierarchy separating means of the separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,

the separator separating means further includes: a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating means for separating the plurality of extended hierarchy coefficient values separated by the basic extended hierarchy separating means to generate a plurality of extended quantization coefficient sequences each constituted of the respective separated extended hierarchy coefficient values,

the basic coded signal generating means of the separator separating means includes: a basic quantization coefficient sequence coding means for coding a basic quantization coefficient sequence constituted of the basic quantization coefficient values converted by the basic quantization coefficient converting means to generate a basic quantization coded sequence; a prediction error coefficient sequence coding means for coding a prediction error coefficient sequence constituted of the prediction error coefficient values converted by the basic quantization coefficient converting means to generate a prediction error coded sequence; and a basic coded signal multiplexing means for multiplexing the basic quantization coded sequence and the prediction error coded sequence to generate the basic coded signal, and

the extended coded signal generating means of the separator separating means codes the plurality of extended quantization coefficient sequences separated by the extended quantization coefficient separating means respectively to generate the plurality of extended coded signals.

Furthermore, the prediction error coefficient sequence coding means of the basic coded signal generating means may be configured to code the quantization parameter reconstructing information, which is for reconstructing the input quantization parameter from the re-quantization parameter, with the prediction error coefficient sequence to the prediction error coded sequence.

Furthermore, the basic extended hierarchy separating means of the separator separating means may be configured to generate a re-quantization parameter deriving constant for calculating the re-quantization parameter that is appropriate based on a re-quantization property, calculate the re-quantization parameter from the input quantization parameter according to the re-quantization parameter deriving constant, and separate the basic hierarchy coefficient values and the extended hierarchy coefficient values, and the prediction error coefficient sequence coding means of the basic coded signal generating means may be configured to code the information of the re-quantization parameter deriving constant as the quantization parameter reconstructing information with the prediction error coefficient sequence to the prediction error coded sequence.

Furthermore, the prediction error coefficient sequence coding means may be configured to code differential values between macroblocks of the re-quantization parameter deriving constant as the quantization parameter reconstructing information with the prediction error coefficient sequence to the prediction error coded sequence.

Furthermore, the prediction error coefficient sequence coding means may be configured to code the prediction error coefficient sequence by a coding table in accordance with the re-quantization parameter deriving constant.

Furthermore, the extended coded signal generating means of the separator separating means may be configured to code the extended quantization coefficient sequence by the coding table in accordance with the re-quantization parameter deriving constant..

Preferably, the coded signal separating apparatus according to the present invention further includes a separating information input means for inputting extended hierarchy separating pattern information defining a method of separating the extended hierarchy coefficient values into the plurality of extended quantization coefficient sequences, and the extended quantization coefficient separating means of the separator separating means separates the extended hierarchy coefficient values separated by the basic extended hierarchy separating means according to the extended hierarchy separating pattern information inputted by the separating information input means into the plurality of extended quantization coefficient sequences.

Furthermore, the separator multiplexing means may be configured to generate the transmission coded signals so that a code amount ratio of the plurality of transmission coded signals each having a different code amount becomes power of 2.

A coded signal merging apparatus according to the present invention is characterized by including: a merging device input means for inputting a plurality of independent transmission coded signals in which a first moving picture constituted of a plurality of image information is coded; a merging device separating means for separating the plurality of transmission coded signals inputted to the merging device input means into a basic coded signal having a smaller code amount than a first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal; a merging device merging means for merging the basic coded signal with the plurality of extended coded signals, which are separated by the merging device separating means, to generate a third coded signal for reconstructing the third moving picture; and a merging device output means for outputting the third coded signal merged by the merging device merging means.

Preferably, in the coded signal merging apparatus according to the present invention, the merging device merging means includes: a basic coded signal converting means for converting the basic coded signal into basic hierarchy coefficient values of a basic hierarchy for reconstructing the second moving picture; an extended coded signal converting means for converting the plurality of extended coded signals into extended hierarchy coefficient values of an extended hierarchy used when reconstructing the third moving picture; a basic extended hierarchy merging means for merging the basic hierarchy coefficient values converted by the ) basic coded signal converting means with the extended hierarchy coefficient values converted by the extended coded signal converting means to generate third quantization coefficient values; and a third coefficient converting means for converting the third quantization coefficient values merged by the basic extended hierarchy merging means into the third coded signal.

Preferably, in the coded signal merging apparatus according to the present invention, the merging device separating means separates the plurality of transmission coded signals into the plurality of basic coded signals in which the same information is coded and the plurality of extended coded signals.

Preferably, the coded signal merging apparatus according to the present invention further includes a signal error notifying means for selecting a basic coded signal having less received signal errors from a plurality of basic coded signals separated by the merging device separating means and notifying the selected basic coded signal to the merging device merging means, and the merging device merging means selects the basic coded signal notified by the signal error notifying means and merges the selected basic coded signal and the plurality of extended coded signals.

Preferably, the coded signal merging apparatus according to the present invention further includes a merging control means for receiving error correcting status information from an error detector on a network and notifying the error correcting status information to the merging device merging means, and the merging device merging means merges the basic coded signal and the plurality of extended coded signals based on the error correcting status information notified by the merging control means.

Preferably, the coded signal merging apparatus according to the present invention further includes a coded signal decoding apparatus for inputting the third coded signal from the coded signal merging apparatus and decoding the third coded signal to reproduce the third moving picture.

A coded signal separating and merging system according to the present invention is characterized by including: a separator for separating a first coded signal in which a first moving picture constituted of a plurality of image information is coded into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal, and reconstructing and converting the separated signals into a plurality of transmission coded signals to be transmitting to a network;

a transmitting path selector for inputting the plurality of transmission coded signals, selecting the transmission coded signal to be transmitted, and transmitting the selected transmission coded signal; and

a merging device for inputting the plurality of transmission coded signals transmitted by the transmitting path selector and merging a third coded signal for reconstructing the third moving picture,

in which the separator includes: a separator input means for inputting the first coded signal; a separator separating means for separating the first coded signal inputted to the separator input means into the basic coded signal and the plurality of extended coded signals; a separator multiplexing means for optionally combining and multiplexing the basic coded signal with the plurality of extended coded signals, which are separated by the separator separating means, to generate the plurality of transmission coded signals; and a separator output means for outputting the plurality of transmission coded signals multiplexed by the separator multiplexing means, and

the merging device includes: a merging device input means for inputting the plurality of transmission coded signals; a merging device separating means for separating the plurality of transmission coded signals inputted to the merging device input means into the basic coded signal and the plurality of extended coded signals; and a merging device merging means for merging the basic coded signal with the plurality of extended coded signals, which are separated by the merging device separating means, to generate a third coded signal for reconstructing the third moving picture; and a merging device output means for outputting the third coded signal merged by the merging device merging means.

Preferably, in the coded signal separating and merging system according to the present invention, the separator separating means includes: a first coefficient converting means for converting the first coded signal into first quantization coefficient values for reconstructing the first moving picture; a basic extended hierarchy separating means for separating the first quantization coefficient values converted by the first coefficient converting means into basic hierarchy coefficient values of a basic hierarchy for reconstructing the second moving picture and extended hierarchy coefficient values of an extended hierarchy used when reconstructing the third moving picture; a basic coded signal generating means for generating the basic coded signal from the extended hierarchy coefficient values; and an extended coded signal generating means for generating the plurality of extended coded signals from the extended hierarchy coefficient values, and

the merging device merging means includes: a basic coded signal converting means for converting the basic coded signal into the basic hierarchy coefficient values of the basic hierarchy; an extended coded signal converting means for converting the plurality of extended coded signals into the extended hierarchy coefficient values of the extended hierarchy; a basic extended hierarchy merging means for merging the basic hierarchy coefficient values converted by the basic coded signal converting means with the extended hierarchy coefficient values converted by the extended coded signal converting means to generate third quantization coefficient values; and a third coefficient converting means for converting the third quantization coefficient values merged by the basic extended hierarchy merging means into the third coded signal.

Preferably, in the coded signal separating and merging system according to the present invention, in the separator, the separator separating means further includes a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values, the basic coded signal generating means of the separator separating means includes a basic quantization coefficient sequence coding means for inputting the basic quantization coefficient values and coding the basic quantization coefficient values to a basic quantization coefficient coded sequence which is the basic coded signal, and, the extended coded signal generating means of the separator separating means inputs the prediction error coefficient values converted by the basic quantization coefficient converting means and the ) extended hierarchy coefficient values separated by the basic extended hierarchy separating means to generate the plurality of extended coded signals from the prediction error coefficient values and the extended hierarchy coefficient values,

in the merging device, the merging device separating means separates the plurality of transmission coded signals into the basic quantization coded sequence, a prediction error coded sequence in which the prediction error coefficient values are coded, and an extended hierarchy coded sequence in which the extended hierarchy coefficient values are coded, the basic coded signal converting means of the merging device merging means includes a basic quantization coefficient sequence converting means for inputting the basic quantization coded sequence and converting the basic quantization coded sequence into the basic quantization coefficient values, the extended coded signal converting means of the merging device merging means includes: a prediction error coefficient sequence converting means for converting the prediction error coded sequence into the prediction error coefficient values; and a plurality of extended hierarchy coefficient sequence converting means for converting the plurality of extended hierarchy coded sequences into the extended hierarchy coefficient values respectively,

the merging device merging means further includes a basic hierarchy coefficient merging means for converting the basic quantization coefficient values, the re-quantization parameter, and the prediction error coefficient values into the basic hierarchy coefficient values, and the basic extended hierarchy merging means of the merging device merging means merges the basic hierarchy coefficient values and the extended hierarchy coefficient values to generate the third quantization coefficient values.

Preferably, in the coded signal separating and merging system according to the present invention, in the separator, the separator separating means further includes a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values, the basic coded signal generating means of the separator separating means includes: a basic quantization coefficient sequence coding means for inputting the basic quantization coefficient values and coding the basic quantization coefficient values to a basic quantization coded sequence; a prediction error coefficient sequence coding means for inputting the prediction error coefficient values and coding the prediction error coefficient values to a prediction error coded sequence; and a basic coded signal merging means for merging the basic quantization coded sequence with the prediction error coded sequence to generate the basic coded signal,

in the merging device, the merging device merging means further includes a basic coded signal separating means for inputting the basic coded signal and separating the basic coded signal into the basic quantization coded sequence and the prediction error coded sequence, the basic coded signal converting means of the merging device merging means includes: a basic quantization coefficient sequence converting means for inputting the basic quantization coded sequence and converting the basic quantization coded sequence into the basic quantization coefficient values; and a prediction error coefficient sequence converting means for inputting the prediction error coded sequence and converting the prediction error coded sequence into the prediction error coefficient values,

the merging device merging means further includes a basic hierarchy coefficient merging means for converting the basic quantization coefficient values, the re-quantization parameter, and the prediction error coefficient values into the basic hierarchy coefficient values, and the basic extended hierarchy merging means of the merging device merging means merges the basic hierarchy coefficient values and the extended hierarchy coefficient values to generate the third quantization coefficient values.

Preferably, in the coded signal separating and merging system according to the present invention, the basic extended hierarchy separating means of the separator separating means separates the basic ) hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,

the separator separating means further includes: a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating means for separating the plurality of extended hierarchy coefficient values separated by the basic extended hierarchy separating means to generate a plurality of extended quantization coefficient sequences each constituted of the respective separated extended hierarchy coefficient values,

the basic coded signal generating means of the separator separating means codes a basic quantization coefficient sequence constituted of the basic quantization coefficient values converted by the basic quantization coefficient converting means to generate the basic coded signal, the extended coded signal generating means of the separator separating means codes a prediction error coefficient sequence constituted of the prediction error coefficient values converted by the basic quantization coefficient converting means and the plurality of extended quantization coefficient sequences separated by the extended quantization coefficient separating means respectively to generate the plurality of extended coded signals, and

in the merging device, the merging device separating means separates the plurality of transmission coded signals into the basic coded signal, an extended coded signal in which the prediction error coefficient sequence is coded, and an extended coded signal in which the extended quantization coefficient sequence is coded, the basic coded signal converting means of the merging device merging means includes a basic quantization coefficient sequence converting means for converting the basic coded signal into the basic quantization coefficient sequence,

) the extended coded signal converting means of the merging device merging means includes: a prediction error coefficient sequence converting means for converting the extended coded signal in which the prediction error coefficient sequence is coded into the prediction error coefficient sequence; and a plurality of extended quantization coefficient sequence converting means for respectively converting the plurality of extended coded signals in which the extended quantization coefficient sequence is coded into the extended quantization coefficient sequence,

the merging device merging means further includes: a basic quantization coefficient merging means for merging a sequence of the basic hierarchy coefficient values from the basic quantization coefficient sequence, the re-quantization parameter, and the prediction error coefficient sequence; and an extended quantization coefficient merging means for merging a sequence of the extended hierarchy coefficient values from the plurality of extended quantization coefficient sequences, and

the basic extended hierarchy merging means of the merging device merging means merges the sequence of the basic hierarchy coefficient values and the sequence of the extended hierarchy coefficient values to generate the third quantization coefficient values.

Preferably, in the coded signal separating and merging system according to the present invention, the basic extended hierarchy separating means of the separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,

the separator separating means further includes: a basic quantization coefficient converting means for converting the basic hierarchy coefficient values separated by the basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating means for separating the plurality of extended hierarchy coefficient values separated by the basic extended hierarchy separating means to generate a plurality of extended quantization coefficient sequences each constituted of the respective separated extended hierarchy coefficient values,

the basic coded signal generating means of the separator separating means includes: a basic quantization coefficient sequence coding means for coding a basic quantization coefficient sequence constituted of the basic quantization coefficient values converted by the basic quantization coefficient converting means to generate a basic quantization coded sequence; a prediction error coefficient sequence coding means for coding a prediction error coefficient sequence constituted of the prediction error coefficient values converted by the basic quantization coefficient converting means to generate a prediction error coded sequence; and a basic coded signal multiplexing means for multiplexing the basic quantization coded sequence and the prediction error coded sequence to generate the basic coded signal,

the extended coded signal generating means of the separator separating means codes the plurality of extended quantization coefficient sequences separated by the extended quantization coefficient separating means respectively to generate the plurality of extended coded signals,

in the merging device, the basic coded signal converting means of the merging device merging means includes: a basic quantization coefficient separating means for demultiplexing the basic quantization coded sequence and the prediction error coded sequence from the basic coded signal; a basic quantization coefficient sequence converting means for converting the basic quantization coded sequence separated by the basic quantization coefficient separating means into the basic quantization coefficient sequence; and a prediction error coefficient sequence converting means for converting the prediction error coded sequence separated by the basic quantization coefficient separating means into the prediction error coefficient sequence,

the extended coded signal converting means of the merging device merging means includes a plurality of extended quantization coefficient sequence converting means for converting the plurality of extended coded signals into the extended quantization coefficient sequences, respectively,

the merging device merging means further includes: a basic quantization coefficient merging means for merging a sequence of the basic hierarchy coefficient values from the basic quantization coefficient sequence, the re-quantization parameter, and the prediction error coefficient sequence; and an extended quantization coefficient merging means for merging a sequence of the extended hierarchy coefficient values from the plurality of extended quantization coefficient sequences, and

the basic extended hierarchy merging means of the merging device merging means merges the sequence of the basic hierarchy coefficient values and the sequence of the extended hierarchy coefficient values to generate the third quantization coefficient values.

Preferably, in the coded signal separating and merging system according to the present invention, the separator multiplexing means multiplexes the basic coded signal to each of the plurality of extended coded signals to generate the plurality of transmission coded signals, the merging device separating means separates the plurality of transmission coded signals into the plurality of basic coded signals and the plurality of extended coded signals, and the merging device merging means selects one basic coded signal from the plurality of basic coded signals separated by the merging device separating means and merges the selected basic coded signal and the plurality of extended coded signals.

Preferably, in the coded signal separating and merging system according to the present invention, the separator multiplexing means multiplexes the plurality of extended coded signals to generate the plurality of transmission coded signals each having a different code amount, and the merging device separating means separates the plurality of transmission coded signals into the basic coded signal and the plurality of extended coded signals.

Preferably, in the coded signal separating and merging system according to the present invention, the extended coded signal generating means of the separator separating means codes quantization parameter reconstructing information, which is for reconstructing the input quantization parameter from the re-quantization parameter, within each of the plurality of extended coded signals, the extended coded signal converting means of the converting device converting means decodes the quantization parameter reconstructing information from the extended coded signal, the basic quantization coefficient merging means of the merging device merging means merges the sequence of the basic hierarchy coefficient values according to the quantization parameter reconstructing information, and the third coefficient converting means of the converting device converting means codes an input quantization parameter, which is reconstructed according to the re-quantization parameter and the quantization parameter reconstructing information, within the third coded signal.

Preferably, the coded signal separating and merging system according to the present invention further includes a signal error notifying means for selecting a basic coded signal having less received signal errors from a plurality of basic coded signals separated by the merging device separating means and notifying the selected basic coded signal to the merging device merging means, and the merging device merging means selects the basic coded signal notified by the signal error notifying means and merges the selected basic coded signal and the plurality of extended coded signals.

Preferably, in the coded signal separating and merging system according to the present invention, the separator multiplexing means generates the transmission coded signals so that a code amount ratio of the plurality of transmission coded signals each having a different code amount becomes power of 2.

Preferably, the coded signal separating and merging system according to the present invention further includes a merging control means for receiving error correcting status information from an error detector on a network and notifying the error correcting status information to the merging device merging means, and the merging device merging means merges the basic coded signal and the plurality of extended coded signals based on the error correcting status information notified by the merging control means.

Preferably, the coded signal separating and merging system according to the present invention further includes a coded signal decoding apparatus for inputting the third coded signal from the coded signal merging device and decoding the third coded signal to reproduce the third moving picture.

A method of separating a coded signal and a program product for separating a coded signal according to the present invention are characterized by including: a separator input step of inputting a first coded signal in which a first moving picture constituted of a plurality of image information is coded; a separator separating step of separating the first coded signal inputted in the separator input step into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal; and a separator multiplexing step of optionally combining and multiplexing the basic coded signal with the plurality of extended coded signals, which are separated in the separator separating step, to generate a plurality of transmission coded signals; and a separator output step of outputting the plurality of transmission coded signals multiplexed in the separator multiplexing step.

Preferably, in the method of separating a coded signal and the program product for separating a coded signal according to the present invention, the separator separating step includes: a first coefficient converting step of converting the first coded signal into first quantization coefficient values for reconstructing the first moving picture; a basic extended hierarchy separating step of separating the first quantization coefficient values converted in the first coefficient converting step into basic hierarchy coefficient values of a basic hierarchy for reconstructing the second moving picture and extended hierarchy coefficient values of an extended hierarchy used when reconstructing the third moving picture; a basic coded signal generating step of generating the basic coded signal from the extended hierarchy coefficient values; and an extended coded signal generating step of generating the plurality of extended coded signals from the extended hierarchy coefficient values.

Preferably, in the method of separating a coded signal and the program product for separating a coded signal according to the present invention, in the basic extended hierarchy separating step in the separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

the separator separating step further includes: a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating step of separating the plurality of extended hierarchy coefficient values separated in the basic extended hierarchy separating step to generate a plurality of extended quantization coefficient sequences each constituted of the respective separated extended hierarchy coefficient values,

in the basic coded signal generating step in the separator separating step, a basic quantization coefficient sequence constituted of the basic quantization coefficient values converted in the basic quantization coefficient converting step is coded to generate the basic coded signal, and in the extended coded signal generating step in the separator separating step, a prediction error coefficient sequence constituted of the prediction error coefficient values converted in the basic quantization coefficient converting step and the plurality of extended quantization coefficient sequences separated in the extended quantization coefficient separating step are coded respectively to generate the plurality of extended coded signals.

Preferably, in the method of separating a coded signal and the program product for separating a coded signal according to the present invention, in the basic extended hierarchy separating step in the separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

the separator separating step further includes: a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating step of separating the plurality of extended hierarchy coefficient values separated in the basic extended hierarchy separating step to generate a plurality of extended quantization coefficient sequences each constituted of the respective separated extended hierarchy coefficient values,

the basic coded signal generating step in the separator separating step includes: a basic quantization coefficient sequence coding step of coding a basic quantization coefficient sequence constituted of the basic quantization coefficient values converted in the basic quantization coefficient converting step to generate a basic quantization coded sequence; a prediction error coefficient sequence coding step of coding a prediction error coefficient sequence constituted of the prediction error coefficient values converted in the basic quantization coefficient converting step to generate a prediction error coded sequence; and a basic coded signal multiplexing step of multiplexing the basic quantization coded sequence and the prediction error coded sequence to generate the basic coded signal, and

in the extended coded signal generating step in the separator separating step, the plurality of extended quantization coefficient sequences separated in the extended quantization coefficient separating step are coded respectively to generate the plurality of extended coded signals.

Furthermore, in the basic extended hierarchy separating step, the basic hierarchy coefficient values and the extended hierarchy coefficient values may be separated according to the value of the input quantization parameter for quantizing the coefficient values of the first moving picture to the first quantization coefficient values and the value of the re-quantization parameter for re-quantizing the first quantization coefficient values.

Furthermore, the separator separating step may include a basic quantization coefficient converting step of converting the basic hierarchy coefficient values separated in the basic extended hierarchy separating ) step into basic quantization coefficient values, which are re-quantization output coefficients obtained by re-quantizing the basic hierarchy coefficient values with the re-quantization parameter, and prediction error coefficient values obtained from difference between values predicted by the basic quantization coefficient values and the re-quantization parameter and the basic hierarchy coefficient values, the basic coded signal generating step in the separator separating step may include a basic quantization coefficient sequence coding step of inputting the basic quantization coefficient values and coding the basic quantization coefficient values into a basic quantization coded sequence that is the basic coded signal, and in the extended coded signal generating step in the separator separating step, the prediction error coefficient values converted in the basic quantization coefficient converting step and the extended hierarchy coefficient values separated in the basic extended hierarchy separating step may be inputted, and the plurality of extended coded signals may be ) generated from the prediction error coefficient values and the extended hierarchy coefficient values.

Furthermore, the separator separating step may include a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with the re-quantization parameter, and prediction error coefficient values obtained from difference between values predicted by the basic quantization coefficient values and the re-quantization parameter and the basic hierarchy coefficient values, and

the basic coded signal generating step in the separator separating step may include a basic quantization coefficient sequence coding step of inputting the basic quantization coefficient values and coding the basic quantization coefficient values to a basic quantization coded sequence, a prediction error coefficient sequence coding step of inputting the prediction error coefficient values and coding the prediction error coefficient values to a prediction error coded sequence, and a basic coded signal merging step of merging the basic quantization coded sequence with the prediction error coded sequence to generate the basic coded signal.

Furthermore, in the separator multiplexing step, each of the basic coded signal and the plurality of extended coded signals may be generated as each of the transmission coded signals.

Furthermore, in the separator multiplexing step, the basic coded signal may be multiplexed to each of the plurality of extended coded signals to generate the plurality of transmission coded signals.

Furthermore, in the separator multiplexing step, the plurality of extended coded signals may be multiplexed to generate the plurality of transmission coded signals each having a different code amount.

Furthermore, in the separator multiplexing step, the transmission coded signals may be generated so that a code amount ratio of the plurality of transmission coded signals each having a different code amount becomes power of 2.

A method of merging a coded signal and a program product for merging a coded signal according to the present invention are characterized by including: a merging device input step of inputting a plurality of independent transmission coded signals in which a first moving picture constituted of a plurality of image information is coded; a merging device separating step of separating the plurality of transmission coded signals inputted in the merging device input step into a basic coded signal having a smaller code amount than a first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal; a merging device merging step of merging the basic coded signal with the plurality of extended coded signals, which are separated in the merging device separating step, to generate a third coded signal for reconstructing the third moving picture; and a merging device output step of outputting the third coded signal merged in the merging device merging step.

Preferably, in the method of merging a coded signal according to the present invention, in the merging device separating step, the plurality of transmission coded signals are separated into the plurality of basic coded signals in which the same information is coded and the plurality of extended coded signals, and

the method further includes a signal error notifying step of selecting a basic coded signal having less received signal errors from a plurality of basic coded signals separated in the merging device separating step and notifying the selected basic coded signal to the merging device merging step, and in the merging device merging step, the basic coded signal notified in the signal error notifying step is selected and merged with the plurality of extended coded signals.

Preferably, in the program product for merging a coded signal according to the present invention, the merging device merging step includes: a basic coded signal converting step of converting the basic coded signal into basic hierarchy coefficient values of a basic hierarchy for reconstructing the second moving picture; an extended coded signal converting step of converting the plurality of extended coded signals into extended hierarchy coefficient values of an extended hierarchy to be used when reconstructing the third moving picture; a basic extended hierarchy merging step of merging the basic hierarchy coefficient values converted in the basic coded signal converting step with the extended hierarchy coefficient values converted in the extended coded signal converting step to generate third quantization coefficient values; and a third coefficient converting step of converting the third quantization coefficient values merged in the basic extended hierarchy merging step into the third coded signal.

Furthermore, in the merging device separating step, the plurality of transmission coded signals may be separated into the plurality of basic coded signals in which the same information is coded and the plurality of extended coded signals.

Preferably, the program product for merging a coded signal according to the present invention further includes a signal error notifying step of selecting a basic coded signal having less received signal errors from a plurality of basic coded signals separated in the merging device separating step and notifying the selected basic coded signal to the merging device merging step, and in the merging device merging step, the basic coded signal notified in the signal error notifying step is selected and merged with the plurality of extended coded signals.

Preferably, the method of merging a coded signal and the program product for merging a coded signal according to the present invention further includes a merging control step of receiving error correcting status information from an error detector on a network and notifying the error correcting status information to the merging device merging step, and in the merging device merging step, the basic coded signal is ) merged with the plurality of extended coded signals based on the error correcting status information notified in the merging control step.

A method of separating and merging a coded signal and a program product for separating and merging a coded signal according to the present invention is characterized by including: a separator controlling step of controlling a separator for separating a first coded signal in which a first moving picture constituted of a plurality of image information is coded into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal, and reconstructing and converting the separated ) signals into a plurality of transmission coded signals to be transmitting to a network;

a transmitting path selector controlling step of controlling a transmitting path selector for inputting the plurality of transmission coded signals, selecting the transmission coded signal to be transmitted, and transmitting the selected transmission coded signal; and

a merging device controlling step of controlling a merging device for inputting the plurality of transmission coded signals transmitted by the transmitting path selector and merging a third coded signal for reconstructing the third moving picture,

in which the separator controlling step includes: a separator input step of inputting the first coded signal; a separator separating step of separating the first coded signal inputted in the separator input step into the basic coded signal and the plurality of extended coded signals; a separator multiplexing step of optionally combining and multiplexing the basic coded signal with the plurality of extended coded signals, which are separated in the separator separating step, to generate the plurality of transmission coded signals; and a separator output step of outputting the plurality of transmission coded signals multiplexed in the separator multiplexing step, and

the merging device includes: a merging device input step of inputting the plurality of transmission coded signals; a merging device separating step of separating the plurality of transmission coded signals inputted in the merging device input step into the basic coded signal and the plurality of extended coded signals; a merging device merging step of merging the basic coded signal with the plurality of extended coded signals, which are separated in the merging device separating step, to generate a third coded signal for reconstructing the third moving picture; and a merging device output step of outputting the third coded signal merged in the merging device merging step.

Preferably, in the method of separating and merging a coded signal according to the present invention, the separator separating step includes: a first coefficient converting step of converting the first coded signal into first quantization coefficient values for reconstructing the first moving picture; a basic extended hierarchy separating step of separating the first quantization coefficient values converted in the first coefficient converting step into basic hierarchy coefficient values of a basic hierarchy for reconstructing the second moving picture and extended hierarchy coefficient values of an extended hierarchy used when reconstructing the third moving picture; a basic coded signal generating step of generating the basic coded signal from the extended hierarchy coefficient values; and an extended coded signal generating step of generating the plurality of extended coded signals from the extended hierarchy coefficient values, and

the merging device merging step includes: a basic coded signal converting step of converting the basic coded signal into the basic hierarchy coefficient values of the basic hierarchy; an extended coded signal converting step of converting the plurality of extended coded signals into the extended hierarchy coefficient values of the extended hierarchy; a basic extended hierarchy merging step of merging the basic hierarchy coefficient values converted in the basic coded signal converting step with the extended hierarchy coefficient values converted in the extended coded signal converting step to generate third quantization coefficient values; and a third coefficient converting step of converting the third quantization coefficient values merged in the basic extended hierarchy merging step into the third coded signal.

Preferably, in the method of separating and merging a coded signal according to the present invention, in the separator controlling step, the separator separating step further includes a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values, the basic coded signal generating step in the separator separating step includes a basic quantization coefficient sequence coding step of inputting the basic quantization coefficient values and coding the basic quantization coefficient values to a basic quantization coefficient coded sequence which is the basic coded signal, and in the extended coded signal generating step in the separator separating step, the prediction error coefficient values converted in the basic quantization coefficient converting step and the extended hierarchy coefficient values separated in the basic extended hierarchy separating step are inputted to generate the plurality of extended coded signals from the prediction error coefficient values and the extended hierarchy coefficient values, and

in the merging device controlling step, in the merging device separating step, the plurality of transmission coded signals are separated into the basic quantization coded sequence, a prediction error coded sequence in which the prediction error coefficient values are coded, and an extended hierarchy coded sequence in which the extended hierarchy coefficient values are coded, the basic coded signal converting step in the merging device merging step includes a basic quantization coefficient sequence converting step of inputting the basic quantization coded sequence and converting the basic quantization coded sequence into the basic quantization coefficient values, the extended coded signal converting step in the merging device merging step includes: a prediction error coefficient sequence converting step of converting the prediction error coded sequence into the prediction error coefficient values; and a plurality of extended hierarchy coefficient sequence converting steps of converting the plurality of extended hierarchy coded sequences into the extended hierarchy coefficient values respectively,

the merging device merging step further includes a basic hierarchy coefficient merging step of converting the basic quantization coefficient values, the re-quantization parameter, and the prediction error coefficient values into the basic hierarchy coefficient values, and in the basic extended hierarchy merging step in the merging device merging step, the basic hierarchy coefficient values are merged with the extended hierarchy coefficient values to generate the third quantization coefficient values.

Preferably, in the method of separating and merging a coded signal according to the present invention, in the basic extended hierarchy separating step in the separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

the separator separating step further includes: a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating step of separating the plurality of extended hierarchy coefficient values separated in the basic extended hierarchy separating step to generate a plurality of extended quantization coefficient sequences each constituted of the respective separated extended hierarchy coefficient values,

in the basic coded signal generating step in the separator separating step, a basic quantization coefficient sequence constituted of the basic quantization coefficient values converted in the basic quantization coefficient converting step is coded to generate the basic coded signal,

in the extended coded signal generating step in the separator separating step, a prediction error coefficient sequence constituted of the prediction error coefficient values converted in the basic quantization coefficient converting step and the plurality of extended quantization coefficient sequences separated in the extended quantization coefficient separating step are coded respectively to generate the plurality of extended coded signals, and

in the merging device controlling step, in the merging device separating step, the plurality of transmission coded signals are separated into the basic coded signal, an extended coded signal in which the prediction error coefficient sequence is coded, and an extended coded signal in which the extended quantization coefficient sequence is coded, the basic coded signal converting step in the merging device merging step includes a basic quantization coefficient sequence converting step of converting the basic coded signal into the basic quantization coefficient sequence,

the extended coded signal converting step in the merging device merging step includes: a prediction error coefficient sequence converting step of converting the extended coded signal in which the prediction error coefficient sequence is coded into the prediction error coefficient sequence; and a plurality of extended quantization coefficient sequence converting steps of respectively converting the plurality of extended coded signals in which the extended quantization coefficient sequence is coded into the extended quantization coefficient sequence,

the merging device merging step further includes: a basic quantization coefficient merging step of merging a sequence of the basic hierarchy coefficient values from the basic quantization coefficient sequence, the re-quantization parameter, and the prediction error coefficient sequence; and an extended quantization coefficient merging step of merging a sequence of the extended hierarchy coefficient values from the plurality of extended quantization coefficient sequences, and

in the basic extended hierarchy merging step in the merging device merging step, the sequence of the basic hierarchy coefficient values are merged with the sequence of the extended hierarchy coefficient values to generate the third quantization coefficient values.

Preferably, in the method of separating and merging a coded signal according to the present invention, in the basic extended hierarchy separating step in the separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

the separator separating step further includes: a basic quantization coefficient converting step of converting the basic hierarchy coefficient values separated in the basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and an extended quantization coefficient separating step of separating the plurality of extended hierarchy coefficient values separated in the basic extended hierarchy separating step to generate a plurality of extended quantization coefficient sequences each constituted of the respective separated extended hierarchy coefficient values,

the basic coded signal generating step in the separator separating step includes: a basic quantization coefficient sequence coding step of coding a basic quantization coefficient sequence constituted of the basic quantization coefficient values converted in the basic quantization coefficient converting step to generate a basic quantization coded sequence; a prediction error coefficient sequence coding step of coding a prediction error coefficient sequence constituted of the prediction error coefficient values converted in the basic quantization coefficient converting step to generate a prediction error coded sequence; and a basic coded signal multiplexing step of multiplexing the basic quantization coded sequence and the prediction error coded sequence to generate the basic coded signal,

in the extended coded signal generating step in the separator separating step, the plurality of extended quantization coefficient sequences separated in the extended quantization coefficient separating step respectively are coded to generate the plurality of extended coded signals,

in the merging device controlling step, the basic coded signal converting step in the merging device merging step includes: a basic quantization coefficient separating step of demultiplexing the basic quantization coded sequence and the prediction error coded sequence from the basic coded signal; a basic quantization coefficient sequence converting step of converting the basic quantization coded sequence separated in the basic quantization coefficient separating step into the basic quantization coefficient sequence; and a prediction error coefficient sequence converting step of converting the prediction error coded sequence separated in the basic quantization coefficient separating step into the prediction error coefficient sequence,

the extended coded signal converting step in the merging device merging step includes a plurality of extended quantization coefficient sequence converting steps of converting the plurality of extended coded signals into the extended quantization coefficient sequences, respectively,

the merging device merging step further includes: a basic quantization coefficient merging step of merging a sequence of the basic hierarchy coefficient values from the basic quantization coefficient sequence, the re-quantization parameter, and the prediction error coefficient sequence; and an extended quantization coefficient merging step of merging a sequence of the extended hierarchy coefficient values from the plurality of extended quantization coefficient sequences, and

in the basic extended hierarchy merging step in the merging device merging step, the sequence of the basic hierarchy coefficient values is merged with the sequence of the extended hierarchy coefficient values to generate the third quantization coefficient values.

Furthermore, regarding the method of separating and merging a coded signal according to the present invention, each configuration of the above-described coded signal separating and merging system can be replaced with a method (step) to thereby obtain various embodiments. Similarly, regarding the program product for separating and merging a coded signal according to the present invention, each configuration of the above-described coded signal separating and merging system and method of separating and merging a coded signal can be replaced with each step of a program product to form the program product to thereby obtain various embodiments.

Furthermore, the basic extended hierarchy separating means of the separator separating means may be configured to generate a re-quantization parameter deriving constant for calculating the re-quantization parameter that is appropriate based on a re-quantization property, calculate the re-quantization parameter from the input quantization parameter according to the re-quantization parameter deriving constant, and separate the basic hierarchy coefficient values and the extended hierarchy coefficient values, the extended coded signal generating means of the separator separating means may be configured to code information of the re-quantization parameter deriving constant as the quantization parameter reconstructing information within the plurality of extended coded signals, the extended coded signal converting means of the merging device merging means may be configured to decode the re-quantization parameter deriving constant form the extended coded signal, the basic quantization coefficient merging means of the merging device merging means may be configured to merge a sequence of the basic hierarchy coefficient values according to the re-quantization parameter deriving constant, and the third coefficient converting means of the merging device merging means may be configured to code an input quantization parameter reconstructed according to the re-quantization parameter and the re-quantization parameter deriving constant within the third coded signal.

Furthermore, the extended coded signal generating means of the separator separating means may be configured to code differential values between macroblocks of the re-quantization parameter deriving constant as the quantization parameter reconstructing information within the plurality of extended coded signals, the extended coded signal converting means of the merging device merging means may be configured to decode the differential values between the macroblocks of the re-quantization parameter deriving constant from the extended coded signal to obtain the re-quantization parameter deriving constant.

Furthermore, the extended coded signal generating means of the separator separating means may be configured to code the extended quantization coefficient sequence by a coding table in accordance with the re-quantization parameter deriving constant, and the extended coded signal converting means of the merging device merging means may be configured to decode the extended coded signal by the coding table in accordance with the re-quantization parameter deriving constant.

Furthermore, the separator separating means may include a separator separating information input means for inputting extended hierarchy separating pattern information defining a method of separating the extended hierarchy coefficient values into the plurality of extended quantization coefficient sequences, the extended quantization coefficient separating means of the separator separating means may be configured to separate the extended hierarchy coefficient values separated by the basic extended hierarchy separating means into the plurality of extended quantization coefficient sequences according to the extended hierarchy separating pattern information inputted by the separator separating information input means, the merging device merging means may include a merging device separating information input means to input the extended hierarchy separating pattern information, and the extended quantization coefficient merging means of the merging device merging means may be configured to merge the plurality of extended quantization coefficient sequences converted by the extended coded signal converting means with a sequence of the extended hierarchy coefficient values according to the extended hierarchy separating pattern information inputted by the merging device separating information input means.

Furthermore, the separator may include a separator separating information transmitting means for transmitting extended hierarchy separating pattern information by which the extended quantization coefficient separating means of the separator separating means separates the extended hierarchy coefficient values into a plurality of extended quantization coefficient sequences to the merging device, the.merging device may include a merging device separating information receiving means for receiving the extended hierarchy separating pattern information transmitted from the separator, and the merging device separating information input means of the merging device merging means may be configured to input the extended hierarchy separating pattern information received by the merging device separating information receiving means.

Further, the prediction error coefficient sequence coding means of the basic coded signal generating means of the separator may by configured to code the quantization parameter reconstructing information for reconstructing the input quantization parameter from the re-quantization parameter with the prediction error coefficient sequence to the prediction error coded sequence, the prediction error coefficient sequence converting means of the basic coded signal converting means of the merging device merging means may be configured to decode the quantization parameter reconstructing information from the prediction error coded sequence, the basic quantization coefficient merging means of the merging device merging means may be configured to merge a sequence of the basic hierarchy coefficient values according to the quantization parameter reconstructing information, and the third coefficient converting means of the merging device merging means may be configured to code an input quantization parameter reconstructed according to the re-quantization parameter and the quantization parameter reconstructing information within the third coded signal.

Furthermore, the basic extended hierarchy separating means of the separator separating means may be configured to generate a re-quantization parameter deriving constant for calculating the re-quantization parameter that is appropriate based on a re-quantization property, calculate the re-quantization parameter from the input quantization parameter according to the re-quantization parameter deriving constant, and separate the basic hierarchy coefficient values and the extended hierarchy coefficient values, the prediction error coefficient sequence coding means of the basic coded signal generating means of the separator separating means may be configured to code information of the re-quantization parameter deriving constant as the quantization parameter reconstructing information with the prediction error coefficient sequence to the prediction error coded sequence, the prediction error coefficient sequence converting means of the basic coded signal converting means of the merging device merging means may be configured to decode the re-quantization parameter deriving constant from the prediction error coded sequence, the basic quantization coefficient merging means of the merging device merging means may be configured to merge a sequence of the basic hierarchy coefficient values according to the re-quantization parameter deriving constant, and the third coefficient converting means of the merging device merging means may be configured to code an input quantization parameter reconstructed according to the re-quantization parameter and the re-quantization parameter deriving constant within the third coded signal.

Furthermore, the prediction error coefficient sequence coding means of the basic coded signal generating means of the separator separating means may be configured to code differential values between macroblocks of the re-quantization parameter deriving constant as the quantization parameter reconstructing information with the prediction error coefficient sequence to the prediction error coded sequence, and the prediction error coefficient sequence converting means of the basic coded signal converting means of the merging device merging means may be configured to decode the differential values between the macroblocks of the re-quantization parameter deriving constant from the prediction error coefficient sequence to obtain the re-quantization parameter deriving constant.

Furthermore, the prediction error coefficient sequence coding means of the basic coded signal generating means of the separator separating means may be configured to code the prediction error coefficient sequence by a coding table in accordance with the re-quantization parameter deriving constant, and the prediction error coefficient sequence converting means of the basic coded signal converting means of the merging device merging means may be configured to decode the prediction error coded sequence by the coding table in accordance with the re-quantization parameter deriving constant.

Furthermore, the extended coded signal generating means of the separator separating means may be configured to code the extended quantization coefficient sequence by a coding table in accordance with the re-quantization parameter deriving constant, and the extended coded signal converting means of the merging device merging means may be configured to decode the extended coded signal by the coding table in accordance with the re-quantization parameter deriving constant.

Furthermore, the separator separating means may include a separator separating information input means for inputting extended hierarchy separating pattern information defining a method of separating the extended hierarchy coefficient values into the plurality of extended quantization coefficient sequences, the extended quantization coefficient separating means of the separator separating means may be configured to separate the extended hierarchy coefficient values separated by the basic extended hierarchy separating means into the plurality of extended quantization coefficient sequences according to the extended hierarchy separating pattern information inputted by the separator separating information input means, the merging device merging means may include a merging device separating information input means to input the extended hierarchy separating pattern information, and the extended quantization coefficient merging means of the merging device merging means may be configured to merge the plurality of extended quantization coefficient sequences converted by the extended coded signal converting means with a sequence of the extended hierarchy coefficient values according to the extended hierarchy separating pattern information inputted by the merging device separating information input means.

Furthermore, the separator may include a separator separating information transmitting means for transmitting extended hierarchy separating pattern information by which the extended quantization coefficient separating means of the separator separating means separates the extended hierarchy coefficient values into a plurality of extended quantization coefficient sequences to the merging device, the merging device may include a merging device separating information receiving means for receiving the extended hierarchy separating pattern information transmitted from the separator, and the merging device separating information input means of the merging device merging means may be configured to input the extended hierarchy separating pattern information received by the merging device separating information receiving means.

Furthermore, in the extended coded signal generating step in the separator separating step, the quantization parameter reconstructing information for reconstructing the input quantization parameter from the re-quantization parameter may be coded within each of the plurality of extended coded signals,

in the extended coded signal converting step in the merging device merging step, the quantization parameter reconstructing information may be decoded from the extended coded signal,

in the basic quantization coefficient merging step in the merging device merging step, a sequence of the basic hierarchy coefficient values may be merged according to the quantization parameter reconstructing information, and

in the third coefficient converting step in the merging device merging step, an input quantization parameter reconstructed according to the re-quantization parameter and the quantization parameter reconstructing information may be coded within the third coded signal.

Furthermore, the separator separating step may include a separator separating information input step of inputting extended hierarchy separating pattern information defining a method of separating the extended hierarchy coefficient values into the plurality of extended quantization coefficient sequences,

in the extended quantization coefficient separating step in the separator separating step, the extended hierarchy coefficient values separated in the basic extended hierarchy separating step may be separated according to the extended hierarchy separating pattern information inputted in the separator separating information input step into the plurality of extended quantization coefficient sequences, the separator controlling step may include a separator separating information transmitting step of transmitting extended hierarchy separating pattern information by which the extended quantization coefficient separating step of the separator separating step separates the extended hierarchy coefficient values into a plurality of extended quantization coefficient sequences,

the merging device controlling step may further include a merging device separating information receiving step of receiving the extended hierarchy separating pattern information transmitted in the separating device separating information transmitting step in the separator controlling step, and

in the extended quantization coefficient merging step in the merging device merging step, the plurality of extended quantization coefficient sequences converted in the extended coded signal converting step may be merged with a sequence of the extended hierarchy coefficient values according to the extended hierarchy separating pattern information received in the merging device separating information receiving step.

Furthermore, in the prediction error coefficient sequence coding step in the basic coded signal generating step of the separator, quantization parameter reconstructing information for reconstructing the ) input quantization parameter form the re-quantization parameter may be coded with the prediction error coefficient sequence to the prediction error coded sequence,

in the prediction error coefficient sequence converting step in the basic coded signal converting step in the merging device merging step, the quantization parameter reconstructing information may be decoded from the prediction error coded sequence,

in the basic quantization coefficient merging step in the merging device merging step, a sequence of the basic hierarchy coefficient values may be merged according to the quantization parameter reconstructing information, and

in the third coefficient converting step in the merging device merging step, an input quantization parameter reconstructed according to the re-quantization parameter and the quantization parameter reconstructing information may be coded within the third coded signal.

Furthermore, the separator separating step may include a separator separating information input step of inputting extended hierarchy separating pattern information defining a method of separating the extended hierarchy coefficient values into the plurality of extended quantization coefficient sequences;

in the extended quantization coefficient separating step in the separator separating step, the extended hierarchy coefficient values separated in the basic extended hierarchy separating step may be separated according to the extended hierarchy separating pattern information inputted in the separator separating information input step into the plurality of extended quantization coefficient sequences, the separator controlling step may include a separator separating information transmitting step of transmitting extended hierarchy separating pattern information by which the extended quantization coefficient separating step of the separator separating step separates the extended hierarchy coefficient values into a plurality of extended quantization coefficient sequences,

the merging device controlling step may further include a merging device separating information receiving step of receiving the extended hierarchy separating pattern information transmitted in the separating device separating information transmitting step in the separator controlling step, and

in the extended quantization coefficient merging step in the merging device merging step, the plurality of extended quantization coefficient sequences converted in the extended coded signal converting step may be merged with a sequence of the extended hierarchy coefficient values according to the extended hierarchy separating pattern information received in the merging device separating information receiving step.

Furthermore, the present invention may include a coded signal decoding step of inputting the third coded signal generated in the merging device controlling step and decoding the third coded signal to reproduce the third moving picture.

Further, in the extended coded signal generating step in the separator separating step, quantization parameter reconstructing information for reconstructing the input quantization parameter from the re-quantization parameter may be coded within each of the plurality of extended coded signals.

Furthermore, in the basic extended hierarchy separating step in the separator separating step, a re-quantization parameter deriving constant for calculating the re-quantization parameter that is appropriate based on a re-quantization property may be generated, the re-quantization parameter may be calculated from the input quantization parameter according to the re-quantization parameter deriving constant, and the basic hierarchy coefficient values and the extended hierarchy coefficient values may be separated, and in the extended coded signal generating step in the separator separating step, information of the re-quantization parameter deriving constant may be coded as the quantization parameter reconstructing information within the plurality of extended coded signals.

Furthermore, in the extended coded signal generating step, differential values between macroblocks of the re-quantization parameter deriving constant may be coded as the quantization parameter reconstructing information within the plurality of extended coded signals.

Furthermore, in the extended coded signal generating step, the extended quantization coefficient sequence may be coded by a coding table in accordance with the re-quantization parameter deriving constant.

Furthermore, the present invention may include a separating information input step of inputting extended hierarchy separating pattern information defining a method of separating the extended hierarchy coefficient values into the plurality of extended quantization coefficient sequences, and in the extended quantization coefficient separating step in the separator separating step, the extended hierarchy coefficient values separated in the basic extended hierarchy separating step may be separated into the plurality of extended quantization coefficient sequences according to the extended hierarchy separating pattern information inputted in the separating information input step.

Furthermore, in the prediction error coefficient sequence coding step in the basic coded signal generating step, quantization parameter reconstructing information for reconstructing the input quantization parameter from the re-quantization parameter may be coded with the prediction error coefficient sequence to the prediction error coded sequence.

Furthermore, in the basic extended hierarchy separating step in the separator separating step, a re-quantization parameter deriving constant for calculating the re-quantization parameter that is appropriate based on a re-quantization property may be generated, the re-quantization parameter may be calculated from the input quantization parameter according to the re-quantization parameter deriving constant, and the basic hierarchy coefficient values and the extended hierarchy coefficient values may be separated, and in the prediction error coefficient sequence coding step in the basic coded signal generating step, information of the re-quantization parameter deriving constant may be coded as the quantization parameter reconstructing information with the prediction error coefficient sequence to the predicted error coded sequence.

Furthermore, in the prediction error coefficient sequence coding step, differential values between macroblocks of the re-quantization parameter deriving constant may be coded as the quantization parameter reconstructing information with the prediction error coefficient sequence to the prediction error coded sequence.

Furthermore, in the prediction error coefficient sequence coding step, the prediction error coefficient sequence may be coded by a coding table in accordance with the re-quantization parameter deriving constant.

Furthermore, in the extended coded signal generating step in the separator separating step, the extended quantization coefficient sequence may be coded by the coding table in accordance with the re-quantization parameter deriving constant.

Furthermore, the present invention may include a separating information input step of inputting extended hierarchy separating pattern information defining a method of separating the extended hierarchy coefficient values into the plurality of extended quantization coefficient sequences, and in the extended quantization coefficient separating step in the separator separating step, the extended hierarchy coefficient values separated in the basic extended hierarchy separating step may be separated into the plurality of extended quantization coefficient sequences according to the extended hierarchy separating pattern information inputted in the separating information inputting step.

The present invention has an advantage that scalable transmission of images can be realized by generating independent, separated streams and performing transmitting path selection according to a network status in a router or the like having a band selecting function.

Incidentally, when the basic coded signal and the extended coded signal are each transmitted as a separated transmission coded signal, in other words, when the basic coded signal is transmitted independently, this basic coded signal becomes the same kind of signal as conventional transcoded signals, and thus the receiving side can receive the basic coded signal in a conventional manner by a regular receiving device, and can receive a compressed coded signal having a smaller code amount. Further, when the basic coded signal is multiplexed with the extended coded signals respectively and transmitted as transmission coded signals, the basic coded signal can be obtained from any one of the transmission coded signals, so that even when a communication error occurs, the basic coded signal can be obtained from one transmission coded signal. Therefore, images for reproduction can be safely and surely obtained.

Furthermore, when quantization parameter reconstructing information for reconstructing an input quantization parameter is coded within a transmission coded signal, a third coded signal that is the same as the first coded signal can be reconstructed including the input quantization parameter just by transmitting and receiving a small amount of information.

Further, when extended hierarchy coefficient values are separated into two or more according to the extended hierarchy separating pattern information, a manner of separating the extended hierarchy coefficient values can be easily changed by changing the extended hierarchy separating pattern information, and thus the separating manner can be changed for every transmission and reception.

Furthermore, by separately transmitting and receiving the contents of a program product to be transmitted such as images and sounds and the extended hierarchy separating pattern information, or by transmitting and receiving the extended hierarchy separating pattern information to/from a particular person, an unauthorized receiver cannot decode a transmission signal when it is read out in an unauthorized manner, so that the contents thereof cannot be viewed, and thus unauthorized accesses can be prevented as if the transmission signal is scrambled.

**BRIEF DESCRIPTION OF THE DRAWINGS**

FIG. 1 is a block diagram of a coded signal separating and merging system according to a first embodiment of the present invention;

FIG. 2 is a block diagram showing a separator of a server according to the first embodiment of the present invention;

FIG. 3 is a block diagram showing a separator for a method 1 (with a robustness transmitting path) out of two processing methods in the separator of the server in FIG. 2;

FIG. 4 is a block diagram showing a separator for a method 2 (without a robustness transmitting path) out of two processing methods in the separator of the server in FIG. 2;

FIG. 5 is a block diagram showing a transmitting path selector of a router according to the first embodiment of the present invention;

FIG. 6 is a diagram showing an example of transmitting path selection by the transmitting path selector of the router shown in FIG. 5;

FIG. 7 is a block diagram showing a merging device of a receiver according to the first 5 embodiment of the present invention;

FIG. 8 is a block diagram showing a merging device for the method 1 out of two processing methods in the separator of the server in FIG. 2;

FIG. 9 is a block diagram showing a merging device for the method 2 out of the two processing methods in the separator of the server in FIG. 2;

FIG. 10 is a view showing a bit stream format of an extended stream according to the first embodiment;

FIG. 11 is a view showing contents of user data defined in a slice layer according to the first embodiment;

FIG. 12 is a view showing contents of MB attribute information defined in an MB layer according to the first embodiment;

FIG. 13 is a block diagram showing a separating unit of a separator according to the first embodiment;

FIG. 14 is a view showing principles of separating coefficients in a block used in the first embodiment;

FIG. 15 is a block diagram showing a merging unit of a merging device used in the first embodiment;

FIG. 16 is a view showing principles of merging coefficients in a block used in the first embodiment;

FIG. 17 is a view showing principles of merging coefficients in a block when a stream is lost in the first embodiment;

FIG. 18 is a block diagram showing a separating unit for multiplexing a basic quantization coefficient sequence C and a prediction error coefficient sequence D to generate a basic stream B according to a second embodiment of the present invention;

FIG. 19 is a block diagram showing a merging unit for inputting the basic stream B multiplexed from the basic quantization coefficient sequence C and the prediction error coefficient sequence D according to the second embodiment of the present invention;

FIG. 20 is a block diagram showing a separator for the method 1, which multiplexes extended streams in a multiplexing unit, according to a fourth embodiment of the present invention;

FIG. 21 is a block diagram showing a separator for the method 2, which multiplexes extended streams in a multiplexing unit, according to the fourth embodiment of the present invention;

FIG. 22 is a block diagram showing an example of transmitting path selection by a transmitting path selector, which inputs separated streams each having a different rate, according to the fourth embodiment of the present invention;

FIG. 23 is a view showing operations of transmitting path selection (changeover of switches) in the transmitting path selector according to the fourth embodiment of the present invention;

FIG. 24 is a block diagram showing a merging device for the method 1, which separates multiplexed extended streams, according to the fourth embodiment of the present invention;

FIG. 25 is a block diagram showing a merging device for the method 2, which separates multiplexed extended streams, according to the fourth embodiment of the present invention;

FIG. 26 is a block diagram showing a separator for the method 1, which multiplexes extended streams in a multiplexing unit, according to a fifth embodiment of the present invention;

FIG. 27 is a block diagram showing a separator for the method 2, which multiplexes extended streams in the multiplexing unit, according to the fifth embodiment of the present invention;

FIG. 28 is a block diagram showing an example of transmitting path selection by a transmitting path selector, which inputs separated streams each having a different rate, according to the fifth embodiment of the present invention;

FIG. 29 is a view showing operations of transmitting path selection (changeover of switches) in the transmitting path selector according to the fifth embodiment of the present invention;

FIG. 30 is a block diagram showing a merging device for the method 1, which separates multiplexed extended streams, according to the fifth embodiment of the present invention;

FIG. 31 is a block diagram showing a merging device for the method 2, which separates multiplexed extended streams, according to the fifth embodiment of the present invention;

FIG. 32 is a block diagram showing a separating unit of a separator for performing coding processing using a re-quantization parameter deriving constant h according to a sixth embodiment of the present invention;

FIG. 33 is a view showing contents of MB attribute information defined in an MB layer to which information of the re-quantization parameter deriving constant h is added according to the sixth embodiment of the present invention;

FIG. 34 is a view showing a coding table in accordance with the re-quantization parameter constant h according to the sixth embodiment of the present invention;

FIG. 35 is a block diagram showing a merging unit of a merging device for performing decoding processing using the re-quantization parameter deriving constant h according to the sixth embodiment of the present invention;

FIG. 36 is a block diagram showing a separating unit of a separator for performing coding processing using the re-quantization parameter deriving constant h and multiplexing a prediction error coefficient sequence D with a basic quantization coefficient sequence C to generate a basic stream B according to a seventh embodiment of the present invention;

FIG. 37 is a block diagram showing a merging unit of a merging device for separating the basic quantization coefficient sequence C and the prediction error coefficient sequence D from the basic coded signal B. and performing decoding processing using the re-quantization parameter deriving constant h according to the seventh embodiment of the present invention;

FIG. 38 is a schematic block diagram of a conventional transcoder;

FIG. 39 is a flowchart showing a rate control process in TM5 of MPEG-2 in the conventional transcoder;

FIG. 40 is a schematic block diagram of a conventional transcoder;

FIG. 41 is a flowchart showing a process in the conventional transcoder;

FIG. 42 is a schematic block diagram of a conventional transcoder; and

FIG. 43 is a flowchart showing a process in the conventional transcoder.

## DETAILED DESCRIPTION OF THE PREFERRED EMBODIMENTS

Hereinafter, a coded signal separating and merging system according to embodiments of the present invention will be described using the drawings.

A coded signal separating and merging system in each embodiment described below realizes scalable transmission of images by generating independent, separated streams in a transcoder having a stream separating function and carrying out a transmitting path selecting function according to a network status in a router or the like having a band selecting function. Priorities of respective separated streams are substantially equal to each other, so that the scalability can be realized by selecting an optional transmitting path in a router or the like.

(First Embodiment)

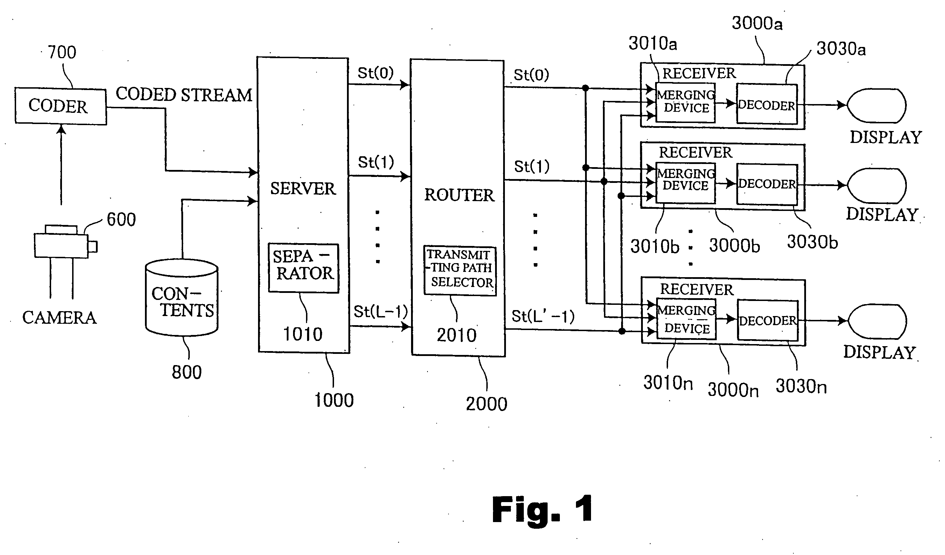

A coded signal separating and merging system according to a first embodiment of the present invention is shown in FIG. 1 and will be described below.

As shown in FIG. 1, the coded signal separating and merging system has a server 1000 configured to transmit images, a router 2000 configured to select a transmitting path on a network, and receivers 3000a, 3000b ..., 3000n configured to receive and reproduce images. There may exist any number of receivers 3000a, 3000b ..., 3000n. In addition, plural routers 2000 may be included.

Here, a stream inputted to the server 1000 is a stream generated in a standard coder, which is, for example, an image captured by a camera 600 and coded by a coder 700, or a stream of contents stored in a contents storage 800. Further, the server 1000 has a separator 1010, and the router 2000 has a transmitting path selector 2010.

Further, the receivers 3000a, 3000b ..., 3000n respectively have merging devices 3010a, 3010b ..., 3010n and decoders 3030a, 3030b ..., 3030n, and the decoders 3030a, 3030b ..., 3030n configured to perform reproduction in the receivers 3000a, 3000b ..., 3000n comply with standard ones.

Here, since the receivers 3000a, 3000b ..., 3000n, the merging devices 3010a, 3010b ..., 3010n and the decoders 3030a, 3030b ..., 3030n are the same ones respectively, one of each of them will be described as a receiver 3000, a merging device 3010, and a decoder 3030 below.

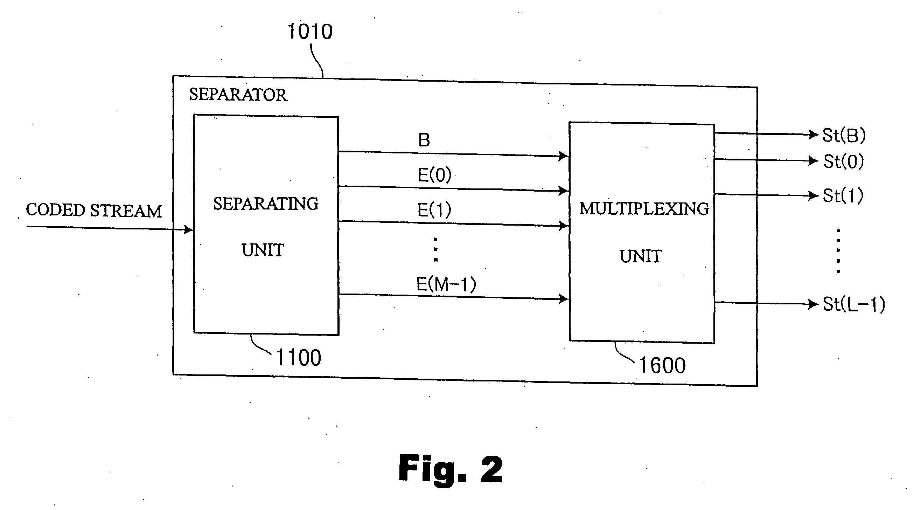

Next, the separator 1010 of the server 1000 is shown in FIG. 2 and will be described below.

As shown in FIG. 2, the separator 1010 inputs a stream which is already coded and stored in an archive and the like or a stream captured by a camera and coded, and separates them into independent streams and outputs them. Further, the separator 1010 has a separating unit (separate) 1100 and a multiplexing unit (MUX) 1600.

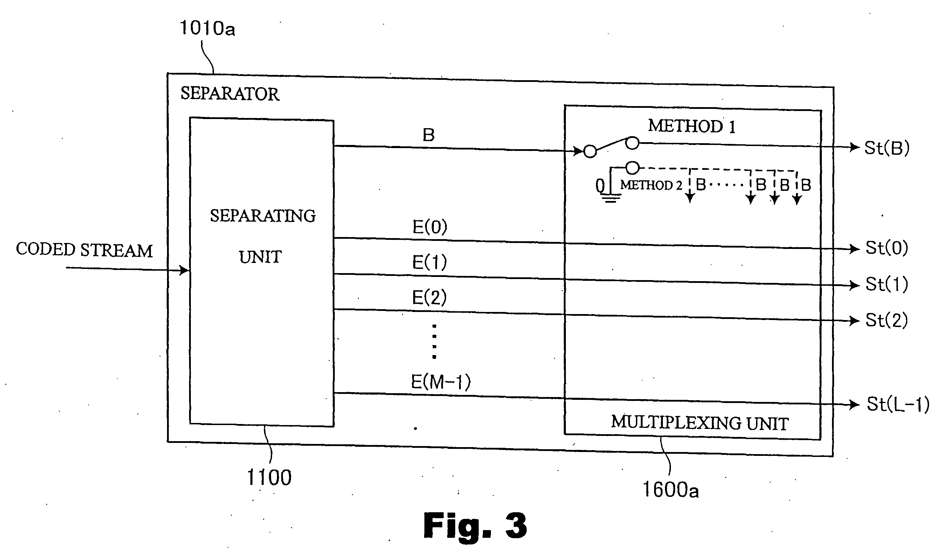

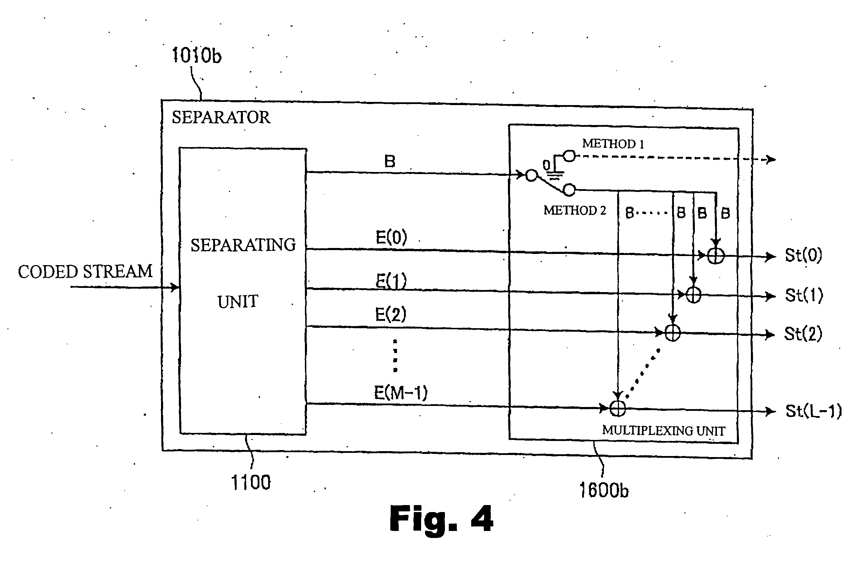

As a method of generating separated streams by the separator 1010, there are two methods described below depending on processes in the multiplexing unit 1600, and process diagrams of these methods are shown in FIG. 3 and FIG. 4, respectively.

A method (1) performs transmission of images in a network with a robustness transmitting path.

A method (2) performs transmission of images in a network without a robustness transmitting path.

The separating unit (separate) 1100 separates an inputted coded stream into one basic stream B and M number of extended streams E(m) ($0 \leq m \leq M - 1$).

The multiplexing unit (MUX) 1600 multiplexes the basic stream B and the extended stream E(m) ($0 \leq m \leq M$

- 1) outputted from the separating unit 1100 according to the property of a transmitting path. As a method thereof, there are method (1) and method (2) described below.

Method (1)

In the method (1), St(B) and L number of streams St(1) ($0 \leq 1 \leq L$ - 1) are outputted as separated streams. The basic stream B is transmitted as a separated stream St(B) to a robustness transmitting path in which transmission errors do not occur, and extended streams E(m) ($0 \leq m \leq M$ - 1) are transmitted respectively as separated streams St (1) ($0 \leq 1 \leq L$ - 1). The St(1) is shown by equation (1).

$$St(1) = E(1) \ (L = M, 0 \leq 1 \leq M - 1) \hfill \text{equation (1)}$$

The bit rate Rate[St(1)] of a first separated stream St(1) can be expressed as equation (2).

$$Rate[St(1)] = Rate[E(1)] \ (L = M, 0 \leq 1 \leq 5 M - 1) \hfill \text{equation (2)}$$

Method (2)

In the method (2), L number of streams St(1) ($0 \leq 1 \leq L$ - 1) are outputted. The basic stream B is copied and multiplexed to all the extended streams E(m). Thus, by transmitting the basic stream B using plural transmitting paths, reproduction that does not depend on a network status is assured. In this case, the separated streams St(1) can be expressed as equation (3). Here, Multiplex [*] represents multiplexing.

$$St(1) = Multiplex \ [B, E(1)] \ (L = M, 0 \leq 1 \leq M - 1) \hfill \text{equation (3)}$$

The bit rate Rate[St(1)] of the separated streams St(1) is represented by equation (4).

$$Rate[St(1)] = Rate[B + E(1)] \ (L = M, 0 \leq 1 \leq M - 1) \hfill \text{equation (4)}$$

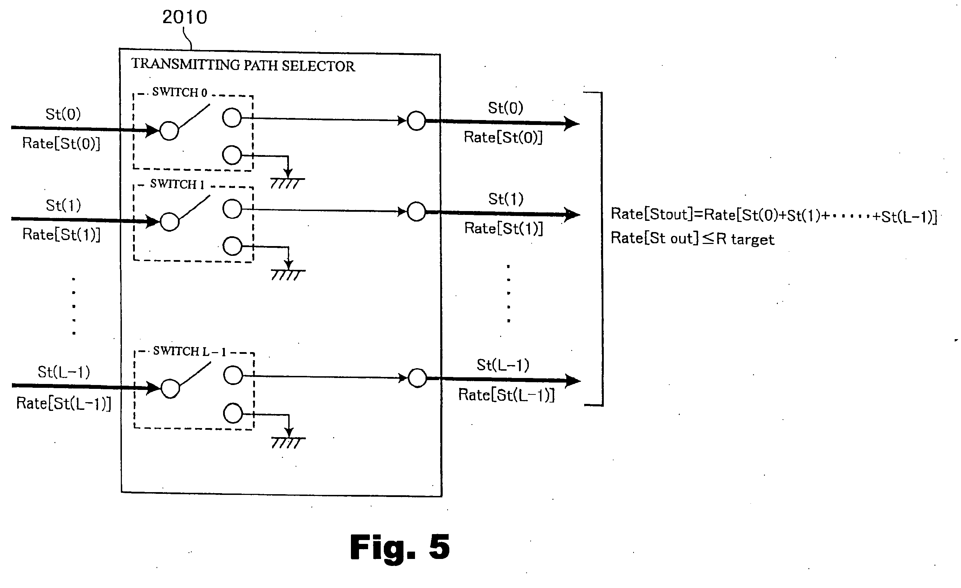

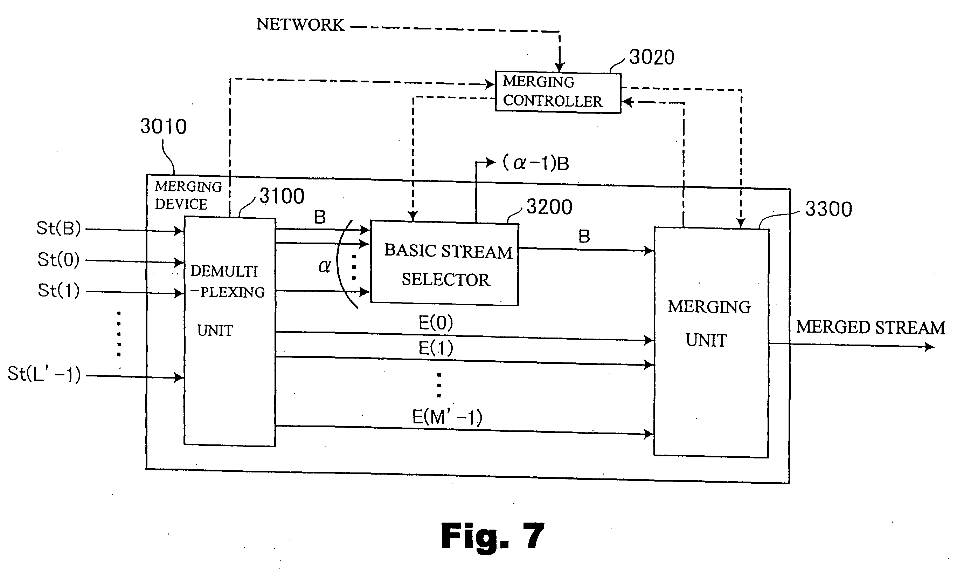

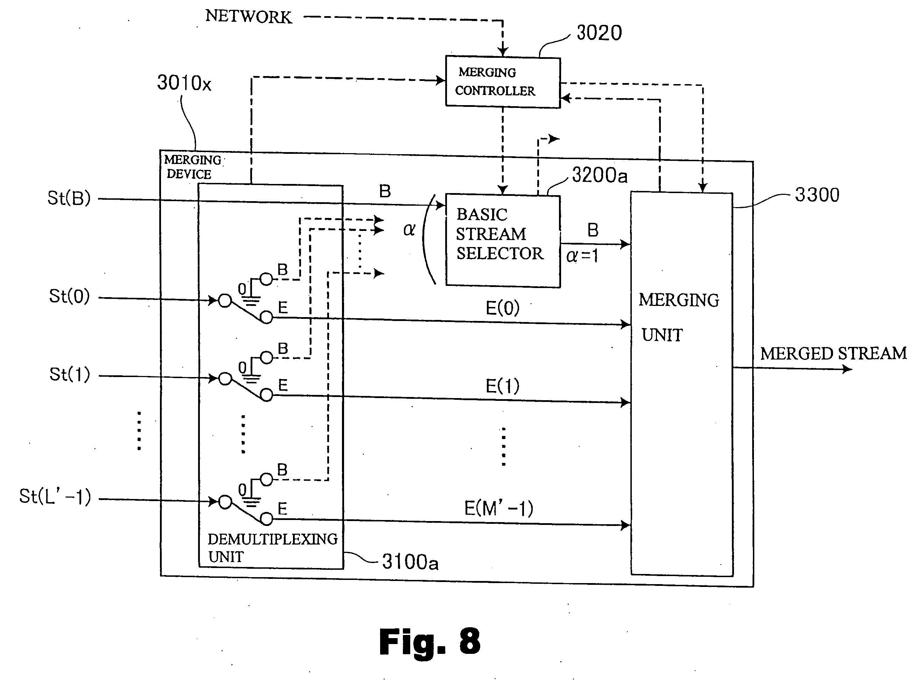

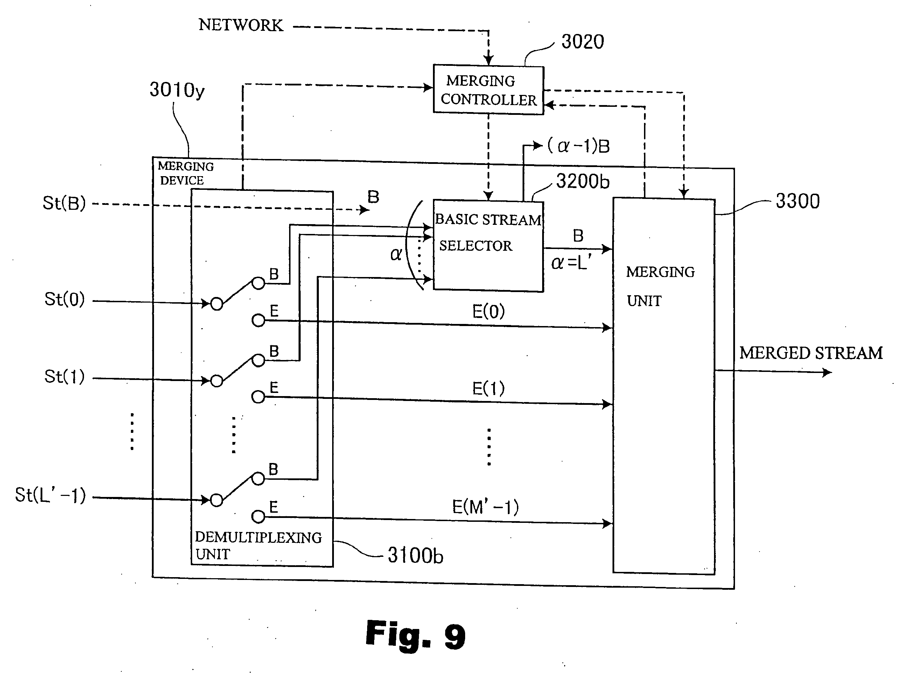

Next, the transmitting path selector 2010 of the router 2000 is shown in FIG. 5 and will be described below.
The router 2000 and the transmission path selector 2010 inputs L number of separated streams St(1) outputted from the server 1000 and controls the rate of a stream to be transmitted by transmitting path selection (on/off of a transmitting path) according to a network status to realize scalability of images. Here, the total rate Rate[St out] of streams outputted from the router 2000 is Rate[St out] = $\Sigma_1$ Rate[St(1)]. When the target total rate of output streams of the router 2000 is Rtarget, transmitting path switches of St(1), which fulfills Rate[St out] $\leq$ Rtarget, are turned on.

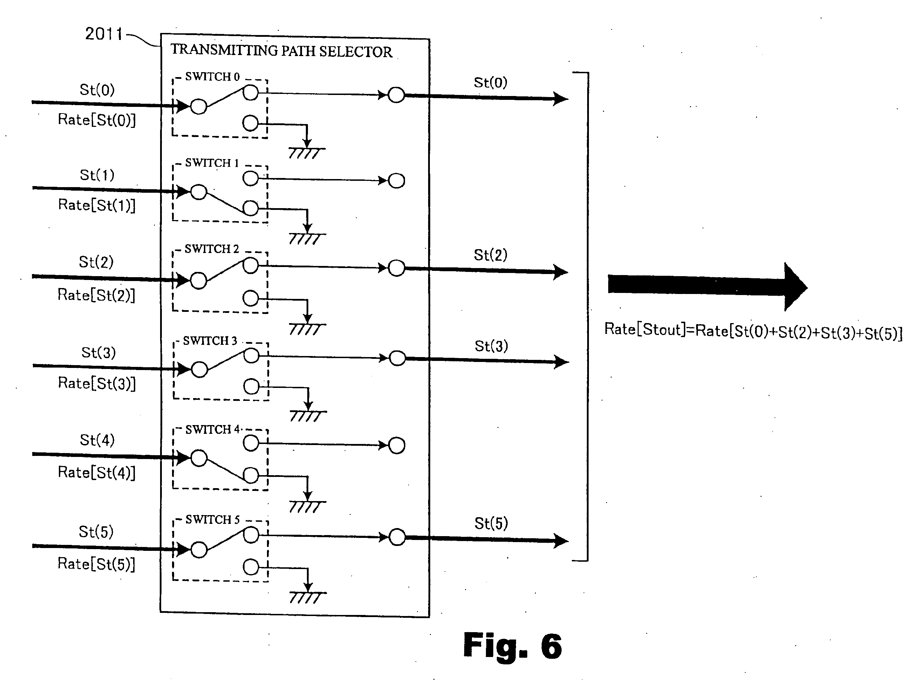

In FIG. 6, a concrete example of transmitting path selection by the transmitting path selector 2010 is shown. In this case, a parameter L which determines the number of separated streams is L = 6. With a target rate Rtarget being given, transmitting path switches of streams St(0), St(2), St(3), St(5) for realizing Rate[St out] $\leq$ Rtarget are turned on to realize Rate[St(0) + St(2) + St(3) + St(5)] $\leq$ Rtarget.
Next, the merging device 3010 of the receiver 3000 will be described. The merging device 3010 5 merges inputted L' number of streams St(1) to reproduce an image. An image quality thereof depends only on the total rate of receiving streams and not on the types of receiving streams. The total rate of receiving streams is determined by transmitting path selection in the router 2000.
A block diagram of the merging device 3010 of the receiver 3000 is shown in FIG. 7 and will be described below.
As shown in FIG. 7, the merging device 3010 has a demultiplexing unit (DEMUX) 3100, a basic stream selector (B-Selector) 3200, and a merging unit (merge) 3300, and furthermore, the receiver 3000 has a merging controller (merge controller) 3020. In addition, the merging controller 3020 may be configured to be included in the merging device 3010.
Further, block diagrams of the merging device 3010 corresponding to the above-described method (1) and method (2) are shown in FIG. 8 and FIG. 9 respectively.
The demultiplexing unit (DEMUX) 3100 divides inputted L' number of streams St(1) into $\alpha$ number of basic streams B and M' number of extended streams E(m). Here, $\alpha$ represents the total number of basic streams B multiplexed in all the separated streams St(1) inputted to the demultiplexing unit 3100, and the number thereof is different depending on the above described method (1) and method (2), which is shown by equation (5).

$$\alpha = \begin{cases} 1 & (Method\,1) \\ L' & (Method\,2) \end{cases} \qquad \text{...... equation (5)}$$

Further, information of errors or the like, which occur in a stream and are detected when the stream is divided, is passed to the merging controller 3020.

The basic stream selector (B-Selector) 3200 receives control from the merging controller 3020, selects one stream having less bit errors from the inputted $\alpha$ number of B streams, and outputs this stream. At this time, ($\alpha$ - 1) number of basic streams B are discarded.

The merging unit (merge) 3300 receives control from the merging controller 3020, merges the inputted basic streams B and the extended streams E(m) ($0 \le m \le M'$ - 1), and outputs a merged stream. Therefore, not all of the extended streams E(m) inputted to the merging unit 3300 are merged.

The merging controller (merge controller) 3020 receives error correction information from an error detector on the network and receives error information detected during processing in the demultiplexing unit 3100 and the merging unit 3300, controls the basic stream selector 3200 with respect to information regarding the basic stream B and controls the merging unit 3300 with respect to information regarding the extended stream E(m), and carries out a process to discard streams for which error correction is determined to be impossible in the merging controller 3020.

(Coding Syntax)

Hereinafter, separation performed in block unit constituting a macroblock, processing of a merging signal, and a data structure constituting a stream will be described.

First, the configuration and the format of the stream will be described.

The mode of a bit stream in this embodiment is such that an MPEG-2 bit stream (MPEG-2 prior to separation) complying the main profile is inputted and separated into a basic stream and M number of extended streams. MPEG-2 will be described below as an example, but regarding other DCT moving picture coding methods with motion compensation and prediction (ITU-T H. 261, ITU-T H. 263, ISO/IEC 14496-2 (commonly called "MPEG-4"), ITU-T H. 264, and the like), the same configuration can be used for the portion of the DCT coefficient coding therein.

The basic stream is reduced in bit rate and outputted as an MPEG-2 bit stream. The extended stream includes a prediction error stream constituted of prediction error information generated in a re-quantization process when reducing a rate, and a differential bit stream constituted of differential information between before and after reducing a rate.

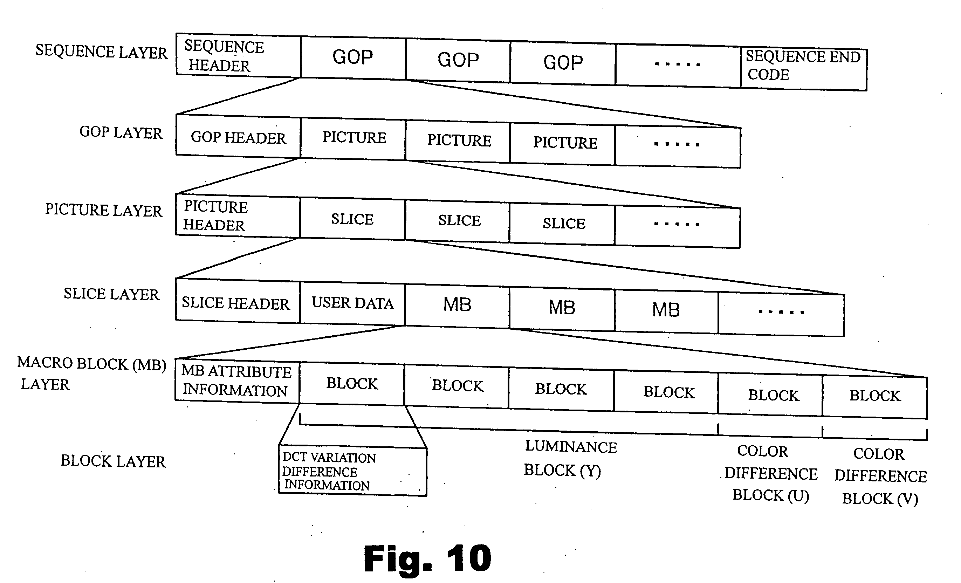

The bit stream format of the extended stream is shown in FIG. 10 and will be described below.

As shown in FIG. 10, the bit stream format of the extended stream is based on a bit stream format of MPEG-2 syntax, and has a hierarchical structure constituted of a sequence layer, a GOP layer, a picture layer, a slice layer, a macroblock (hereinafter, MB) layer, and a block layer. The extended stream begins with a sequence header and continues to picture layers for the certain number of pictures. Picture layer data is constituted of a picture header and picture data. The picture data is constituted of plural slice layer data, and the slice layer data is constituted of a slice header and data of subsequent MB layers.

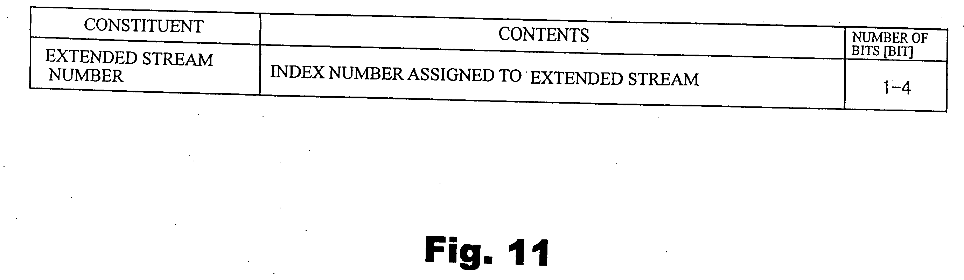

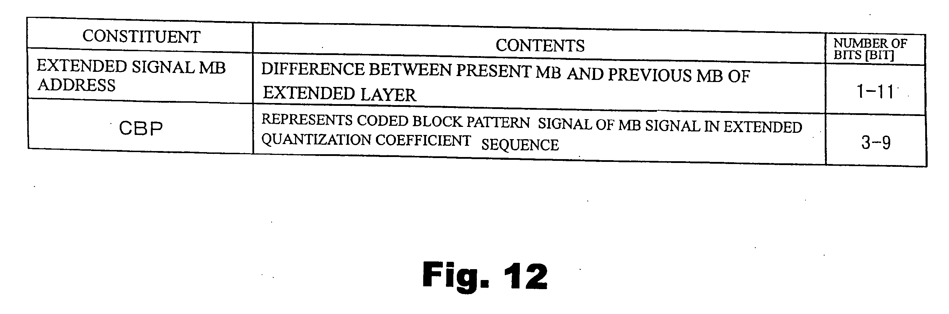

In this embodiment, bit fields of the sequence hearer, GOP header, picture header, and slice header are equal to MPEG-2. However, in the slice layer, user data is defined between the slice header and the MB data, and in the user data, an attribute, which is original to this method, in the slice layer shown in FIG. 11 is described. The MB layer data is constituted by MB attribute information and coefficient information. The MB attribute information is shown in FIG. 12. The user data in the slice layer is used for separation/merging in the slice layer, and the information included in the MB attribute information is used for separation/merging in the MB layer.

Next, synchronization between streams will be described.

The sequence header, the picture header, and the slice header are used for synchronization with an MPEG-2 bit stream to be outputted in GOP unit, picture unit, and slice unit, respectively. In the slice unit which is the smallest unit for synchronization, the synchronization is performed so that SSC (Slice Start Code) in each slice header becomes equal. Here, SSC in the slice header is a synchronization code denoting the start point of a slice layer, in which one last byte of a code represents the vertical position of the slice.

Next, principles of generating a stream will be described.

Re-quantization is performed, and variation difference information of quantization coefficient values before and after the re-quantization is coded in the block layer data. By merging the variation difference information and coded re-quantization output coefficients, coefficient information before the re-quantization can be completely reconstructed. At this time, the re-quantization output coefficients are coded as a basic hierarchy and becomes a basic stream B. When coefficient differential information before and after the re-quantization is an extended hierarchy, the extended hierarchy is separated sequentially into N number of extended quantization coefficient sequences. Prediction error information generated by the re-quantization becomes a prediction error coefficient sequence, and the prediction error coefficient sequence 5 and the extended quantization coefficient sequences are coded respectively to generated M number of extended streams E(m). At this time, the rates of the M number of extended streams E(m) can be generated substantially equal to each other.

Next, the separating unit (separate) 1100 of the separator 1010 will be described.

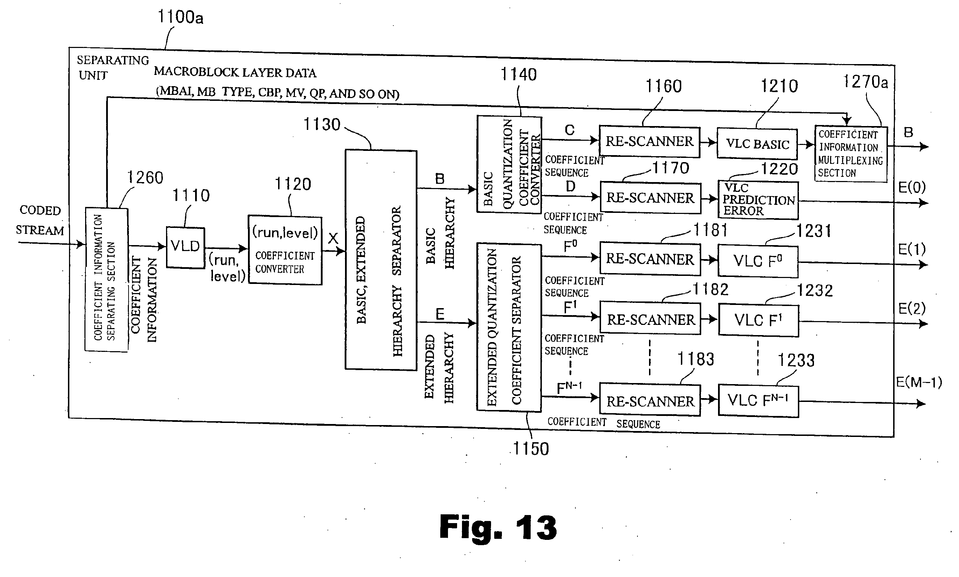

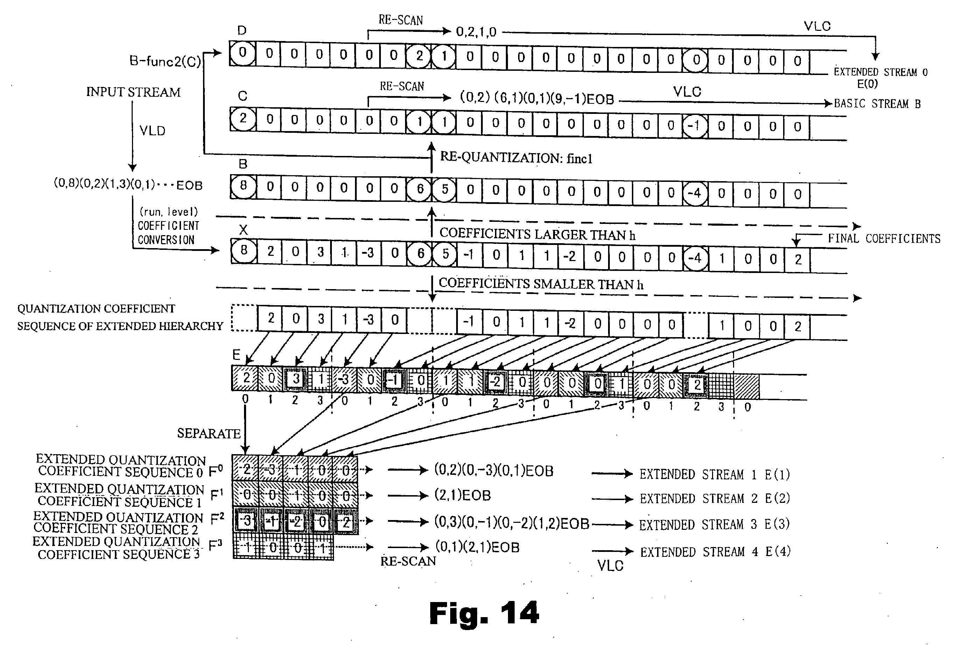

A block diagram of a separating unit (separate) 1100a that is an embodiment of the separating unit (separate) 1100 is shown in FIG. 13. An inputted coded stream is separated into coefficient information and except coefficient information in a coefficient information separating section 1260. In this case, the coefficient information is a quantization coefficient code which is Huffman coded by two-dimensional run length, and the except coefficient information includes data of the MB layer and a DC coefficient code of an intra MB. Data of the except coefficient information is multiplexed with coefficient information, which is 5 decoded from variable length codes and separated, and coded again to variable length codes, and outputted as a stream. The procedure of a process of separating block data will be described for each of the following items. Further, a view of principles of separating coefficients in a block will be shown as an example in FIG. 14. However, stream generating parameters in FIG. 14 are set as N = 4 and M = 5. The values of N and M used here are presented as an example for simplifying their descriptions, and in an actual configuration, any natural number can be specified.

Each of the following items will be described:

Item 1. 1: method of generating a basic hierarchy and an extended hierarchy
Item 1. 2: method of generating a basic quantization coefficient sequence and a prediction error coefficient sequence by re-quantizing the basic hierarchy
Item 1. 3: method of generating a basic stream and coding of the basic quantization coefficient sequence
Item 1. 4: method of generating an extended quantization coefficient sequence by separating the extended hierarchy
Item 1. 5: method of generating extended streams

a. coding of the prediction error coefficient sequence
b. coding of the extended quantization coefficient sequence

However, in the aforementioned processing procedure, for the item 1, 2 and the item 1. 3, the same methods as those described in Japanese Patent Application Laid-open No. 2002-135130 "Device For Separating and Merging Coded Signal, Differential Coded Signal Generator, Method of Separating and Merging the Coded Signal, Method of Generating Differential Coded Signal, Medium In Which Program Product For Separating and Combining Coded Signals Is Stored, And Medium In Which Program Product For Generating the Differential Coded Signal Is Stored," which was filed previously by the applicant of the present application, are used. Further, an integer h in this description is equal to "m" in the equation (8), specifically

$$m = \left\lfloor \frac{MQ_2 - 1}{2\, MQ_1} \right\rfloor,$$

in the paragraph [0324] of the aforementioned Japanese Patent Application Laid-open No. 2002-135130 in the case of intra-picture, and is equal to "m" in the equation (9), specifically

$$m = \left\lfloor \frac{MQ_2 - 1}{MQ_1 + 0\,5} - 1 \right\rfloor,$$

in the paragraph [0324] of the aforementioned Japanese Patent Application Laid-open No. 2002-135130 in the case of inter-picture. Further, a quantization parameter MQ1 prior to re-quantization and a re-quantization parameter MQ2 at the time of re-quantization, which will be described later, are the same as MQ1 and MQ2 in the aforementioned Japanese Patent Application Laid-open No. 2002-135130.

Item 1. 1: method of generating a basic hierarchy and an extended hierarchy

An input quantization coefficient sequence is separated to generate a basic hierarchy and an extended hierarchy. An input quantization coefficient sequence X is defined as equation (6).

$$X = \{x0, x1, x2 ..., xi ...\} \ (0 \leq i \leq 63) \qquad \text{equation (6)}$$

Here, i ($0 \leq i \leq 63$) represents a coefficient position index number when a reference order in a block is the order of a zigzag scan. The basic hierarchy is a sequence of coefficients which are larger than an integer h among input quantization coefficients, and coefficients equal to or smaller than h are coefficients constituting the extended hierarchy.

From the above, the basic hierarchy B and the extended hierarchy E are expressed by equation (7).

$$\begin{cases} B = \{x_i | x_i > h\} \\ E = \{x_i | x_i \leq h\} \end{cases} \text{...... equation (7)}$$

Item 1. 2: method of generating a basic quantization coefficient sequence and a prediction error coefficient sequence by re-quantizing the basic hierarchy

The basic hierarchy B is defined as equation (8).

$$B = \{b0, b1 ..., bi ...\} \ (0 \leq i \leq 63) \qquad \text{equation (8)}$$

Further, when the basic hierarchy B is re-quantized by the re-quantization parameter MQ2, a basic quantization coefficient sequence C which is a re-quantization output coefficient and a prediction error coefficient sequence D are outputted, which are defined respectively as equation (9).

$$\begin{cases} C = \{c_0, c_1, ..., c_i ...\} \\ D = \{d_0, d_1, ..., d_i, ...\} \end{cases} \text{...... equation (9)}$$

Here, values $c_i$ produced by re-quantizing the basic hierarchy coefficients $b_i$ using a re-quantization parameter MQ2 are represented by equation (10) based on the equation (8) and the equation (9).

$$c_i = func1(b_i) \ (0 \leq i \leq 63) \qquad \text{equation (10)}$$

At this time, the re-quantization operation func1 is equal to the description in the paragraph [0393], specifically, QF2 = QF1 x MQ1/MQ2 + sign(QF1)/2, in the above-described Japanese Patent Application Laid-open No. 2002-135130 in the case of intra-picture, and to the description in the paragraph [0395], specifically, QF2 = (QF1 + sign(QF1) x 1/2) x MQ1/MQ2, in the above-described Japanese Patent Application Laid-open No. 2002-135130 in the case of inter-picture. Further, QF1 and QF2 in the paragraphs [0393] and [0395] in the above-described Japanese Patent Application Laid-open No. 2002-135130 are changed to $b_i$ and $c_i$ in this equation.

Prediction error coefficients $d_i$ are obtained by equation (11) based on the equation (9).

$$5 \ d_i = b_i - func2(c_i) \ (0 \leq i \leq 63) \qquad \text{equation (11)}$$

Here, the equation (11) is equal to the process shown by equation (15), specifically

$$\Delta QF\,[\mathrm{w}] = QF\mathrm{nonzero} - \mathrm{in}\,[\mathrm{w}]$$

$$- \left\lfloor QF\mathrm{nonzero} - \mathrm{out}\,[\mathrm{w}] \times \frac{MQ2}{MQ1} + \frac{1}{2} \right\rfloor,$$

in the paragraph [0429] in the above-described Japanese Patent Application Laid-open No. 2002-135130. Further, $\Delta QF[w]$, QFnonzero-in[w], and QFnonzero-out[w] of the equation (15) in the paragraph [0429] in the above-described Japanese Patent Application Laid-open No. 2002-135130 are changed to di, bi, and ci in this equation.

Item 1. 3: method of generating a basic stream

A method of coding the basic quantization coefficient sequence C generated in the item 1. 2 is the run length coding prescribed in MPEG-2.

Item 1. 4: method of generating an extended quantization coefficient sequence by separating the extended hierarchy

An extended hierarchy E is defined as equation (12), and a process of generating an extended quantization coefficient sequence $F^n$ ($0 \leq n \leq N - 1$) is shown below.

$$E = \{e0, e1, e2, ..., es\text{-}1, ...\}\ (0 \leq s \leq S - 1) \qquad\qquad \text{equation (12)}$$

Coefficients in the extended hierarchy E is distributed to N number of $F^n$ ($0 \leq n \leq N\text{-}1$) in order as shown in equation (13).

$$
\begin{cases}
F^0 = \{e_0, e_N, e_{2N}, ..., e_{jN}, ...\} & (j = 0,1,2,...) \\
F^1 = \{e_1, e_{1+N}, e_{1+2N}, ..., e_{1+jN}, ...\} & (j = 0,1,2,...) \\
\vdots & \vdots \\
F^n = \{e_n, e_{n+N}, e_{n+2N}, ..., e_{n+jN}, ...\} & (j = 0,1,2,...) \\
\vdots & \vdots \\
F^{N-1} = \{e_{N-j0}, e_{N-1+N}, e_{N-1+2N}, ..., e_{N-1+jN}, ...\} & (j = 0,1,2,...)
\end{cases}
\quad ...... \text{ equation (13)}
$$

Item 1. 5: method of generating extended streams

a. method of coding the prediction error coefficient sequence

The prediction error coefficient sequence D generated in the item 1. 2 is scanned, and becomes a one-dimensional coefficient sequence constituted of non-zero coefficients only, which is coded to variable length codes to be an extended stream E(0).

b. method of coding the extended quantization coefficient sequence

The extended quantization coefficient sequences $F^n$ ($0 \leq n \leq N - 1$) generated in Item 1. 4 are scanned respectively to be expressed in run length, and thereafter coded to extended streams E(m) ($1 \leq m \leq M - 1$) using a CBP (coded block pattern) and a VLC table in compliance with MPEG-2. At this time, the extended stream number m is incorporated in user data in the slice layer in respective extended streams. Further, the relationship between the extended stream number m and the index number n of the extended quantization coefficient sequence $F^n$ is m = n + 1.
The procedure of coding is shown below.

1. the extended quantization coefficient sequence is expressed by a series of combinations (run, level) of the number of consecutive 0 (run) and the value of coefficient (level).
2. from the first of the (run, level) series, (run, level) events are coded sequentially to variable length codes.
3. when EOB at the end of the series is reached, the EOB is coded.

Next, the merging unit (merge) 3300 of the merging device 3010 will be described.

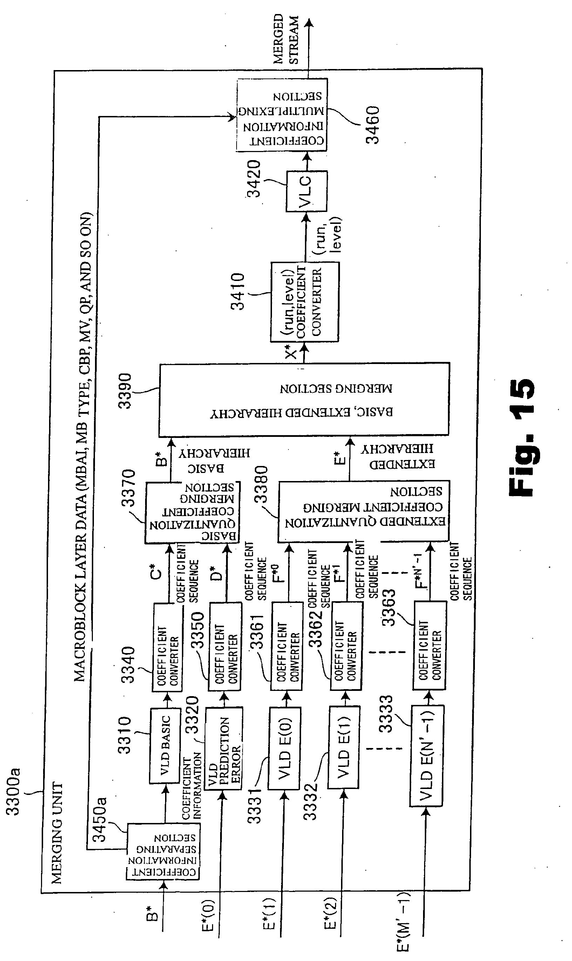

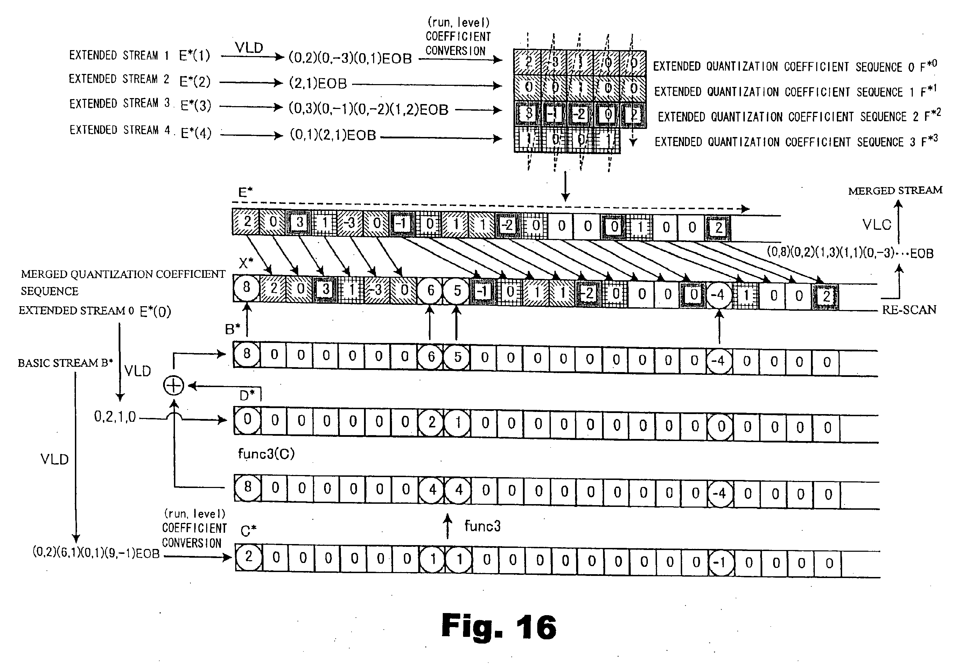

A block diagram of a merging unit (merge) 3300a that is an embodiment of the merging unit (merge) 3300 is shown in FIG. 15, and the procedure of a process of merging will be described for each of the following items. Further, a view of principles of merging coefficients in a block is shown in FIG. 16.

Each of the following items will be described:

Item 2. 1: decoding of a basic stream and decoding of a basic quantization coefficient sequence
Item 2. 2: decoding of extended streams

a. decoding of a prediction error coefficient sequence
b. decoding of extended quantization coefficient sequences

Item 2. 3: method of generating a basic hierarchy by merging the basic quantization coefficient sequence and the prediction error coefficient sequence
Item 2. 4: method of generating an extended hierarchy by merging the extended quantization coefficient sequences
Item 2. 5: method of generating a merged stream by merging the basic hierarchy with the extended hierarchy Item 2. 1: decoding of a basic stream

As a method of decoding the basic stream B, a method prescribed in MPEG-2 is used. The basic stream is decoded from variable length codes up to the expression (run, level). From decoded run values, the order of zigzag scan of signals in a block is calculated, and into the values thereof, level values are inserted to generate a one-dimensional basic quantization coefficient sequence $C^*$.

Item 2. 2: decoding of extended streams

a. decoding of a prediction error coefficient sequence

An extended stream E(0) is decoded from variable length codes to a prediction error coefficient sequence $D^*$. A method of decoding the extended stream E(0) constituted of the prediction error coefficient sequence $D^*$ is the same as a method described in the above-described Japanese Patent Application Laid-open No. 2002-135130. Corresponding patents in respective countries corresponding to this Japanese Patent Application Laid-open No. 2002-135130 are European Patent Laid-open (EP) 1180900, US Patent Application Laid-open 09/931038, Chinese Patent Application 01135747-9, and Korean Patent Application 2001-49741.

b. decoding of extended quantization coefficient sequences

Extended streams E(m) ($1 \leq m \leq M' - 1$) are decoded from variable length codes to be expressed in combinations (run, level) using the CBP (coded block pattern) and the VLC table in compliance with MPEG-2. From decoded run values, the order of zigzag scan is calculated, and level values are inserted sequentially into positions in a block where a basic hierarchy is not inserted to generate one-dimensional extended quantization coefficient sequences $F^{*n}$ ($0 \leq n \leq N' - 1$).

Item 2. 3: method of generating a basic hierarchy by merging the basic quantization coefficient sequence and the prediction error coefficient sequence

The basic quantization coefficient sequence $C^*$ and the prediction error coefficient sequence $D^*$ are merged with each other to generate a basic hierarchy $B^*$. A method of generating the basic hierarchy $B^*$ will be shown below.

$B^*$ is defined as equation (14)

$$B^* = \{b^*0, b^* 1 ..., b^*i ...\} \ (0 \leq i \leq 63) \qquad \text{equation (14)}$$

The basic quantization coefficient sequence $C^*$ and the prediction error coefficient sequence $D^*$ are defined as equation (15).

$$\begin{cases} C^* = \{c_0^*, c_1^*, ..., c_i^*, ...\} \\ D^* = \{d_0^*, d_1^*, ..., d_i^*, ...\} \end{cases} \text{...... equation (15)}$$

From the equation (14) and the equation (15), basic hierarchy coefficients b*i* are generated by adding prediction error coefficients d*i to values produced by subjecting basic quantization coefficients c*i to the function func3, as shown in equation (16).

$$\text{b*i = func3(c*i) + d*i} \qquad \text{equation (16)}$$

Here, the equation (16) is equal to a process shown by equation (16), specifically

$$QF\text{nonzero} - \text{rec}[w] = \Delta QF[w] + \left\lfloor QF\text{nonzero} - \text{out}[w] \times \frac{MQ2}{MQ1} + \frac{1}{2} \right\rfloor ,$$

in the paragraph [0455] in the above-described Japanese Patent Application Laid-open No. 2002-135130. Further, $\Delta QF[w]$, QFnonzero-rec[w], and QFnonzero-out[w] of the equation (16) in the paragraph [0455] in the above-described Japanese Patent Application Laid-open No. 2002-135130 are changed to d*i, b*i, and c*i in this equation.

Item 2. 4: method of generating an extended hierarchy by merging the extended quantization coefficient sequences

An index number n of the extended quantization coefficient sequence is obtained from the extended stream number m defined in the user data (FIG. 11) in the slice layer, and the extended quantization coefficient sequences $F^{*n}$ are merged using n to generate an extended hierarchy E*. Here, m = n+1.
A method of generating the extended hierarchy E* will be described below. The extended hierarchy E* is defined as equation (17).

$$\text{E* = \{e*0, e*1, e*2 ... e*s ...\} } (0 \leq s \leq S - 1) \qquad \text{equation (17)}$$

Further, the extended hierarchy quantization coefficient sequences $F^{*n}$ ($0 \leq m \leq N' - 1$) are defined as equation (18)

$$\begin{cases} F^{*0} = \left\{ f_{(0)}^{*0} f_{(1)}^{*0} f_{(2)}^{*0}, ..., f_{(j)}^{*0}, ... \right\} & (j = 0,1,2,...) \\ F^{*1} = \left\{ f_{(0)}^{*1} f_{(1)}^{*1} f_{(2)}^{*1}, ..., f_{(j)}^{*1}, ... \right\} & (j = 0,1,2,...) \\ \vdots & \\ F^{*n} = \left\{ f_{(0)}^{*n} f_{(1)}^{*n} f_{(2)}^{*n}, ..., f_{(j)}^{*n}, ... \right\} & (j = 0,1,2,...) \\ \vdots & \\ F^{*N'-1} = \left\{ f_{(0)}^{*N'-1} f_{(1)}^{*N'-1} f_{(2)}^{*N'-1}, ..., f_{(j)}^{*N'-1}, ... \right\} & (j = 0,1,2,...) \end{cases} \text{...... equation (18)}$$

The index number n attached to each extended quantization coefficient sequence is used to perform merging as shown in equation (19) to generate the extended hierarchy E*.

$$\text{E* = \{}f^{*0}(0), f^{*1}(0) ..., f^{*n}(0) ..., f^{*N'-1}(0), f^{*0}(1), f^{*1}(1) ..., f^{*n}(1) ..., f^{*N'-1}(1) ..., f^{*0}(j), f^{*1}(j) ...,$$

$$f^{*n}(j) ..., f^{*N'-1}(j) ...\} (j = 0, 1, 2 ...) \qquad \text{equation (19)}$$

Item 2. 5: method of generating a merged stream by merging the basic hierarchy with the extended hierarchy

Coefficient values of the generated basic hierarchy B* are inserted respectively into corresponding positions in the block according to the index number i. Next, coefficients of the extended hierarchy E* are inserted sequentially to the index number where the basic hierarchy is not inserted in the block to generate a merged quantization coefficient sequence X*. A method of generating the merged quantization coefficient sequence X* will be described below.
The merged quantization coefficient sequence is defined as equation (20).

$$X^* = \{x^*0, x^*1, x^*2 ..., x^*i ...\} \ (0 \leq i \leq 63) \hspace{3cm} \text{equation (20)}$$

First, insertion of coefficients of the basic hierarchy B* into the merged quantization coefficient sequence X* provides equation (21).

$$x^*i = b^*i \hspace{3cm} \text{equation (21)}$$

At this point of time, the value of a signal $x^*i$ in the merged quantization coefficient sequence X* into which no coefficient of the basic hierarchy is inserted is 0 (zero). Then, only $x^*i$ into which no coefficient of the basic hierarchy is inserted is extracted and numbered an index number k in order, thereby satisfying equation (22).

$$x^*k = 0 \hspace{3cm} \text{equation (22)}$$

Finally, as shown in equation (23), by inserting coefficients of the extended hierarchy E* reconstructed in the item 2. 4 and shown by the equation (17) into $x^*k$, the merged quantization coefficient sequence X* is generated.

$$x^*k = e^*k \hspace{3cm} \text{equation (23)}$$

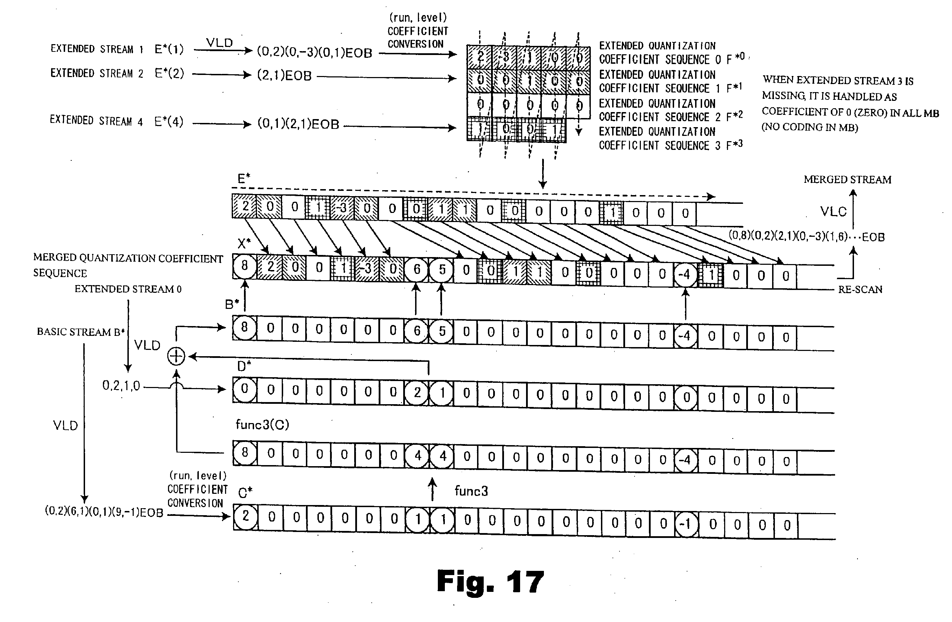

Furthermore, a resistance property to loss of streams will be described.
Merging operation in the case where any of the extended streams E(m) is lost while merging coefficients in a block, for example, in the case where an extended stream E(3) is lost while merging coefficients in a block is shown in FIG. 17.
As shown in FIG. 17, although the number of coefficients decreases in the block merged in the case where one stream is lost, the data structure is maintained and is thus reproducible.

(Second Embodiment)

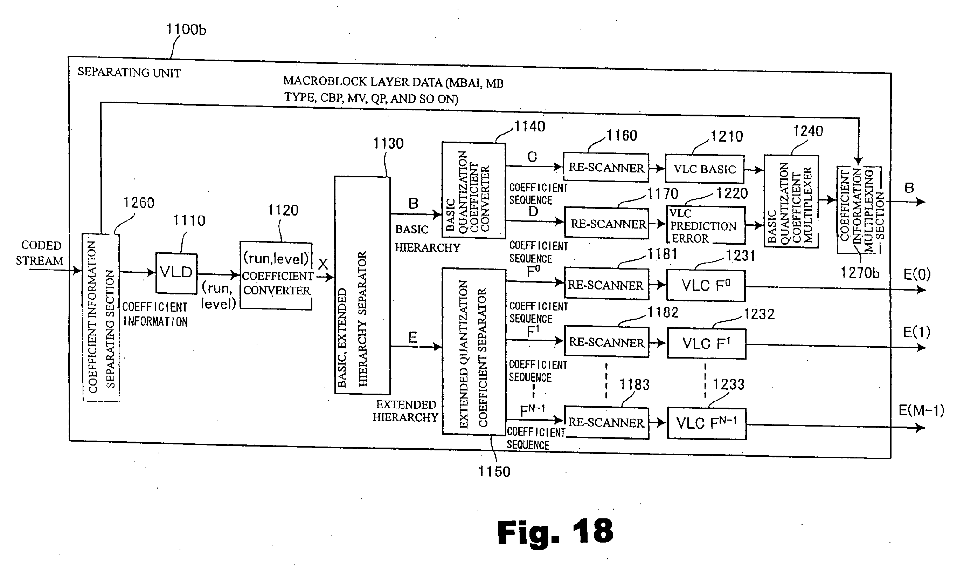

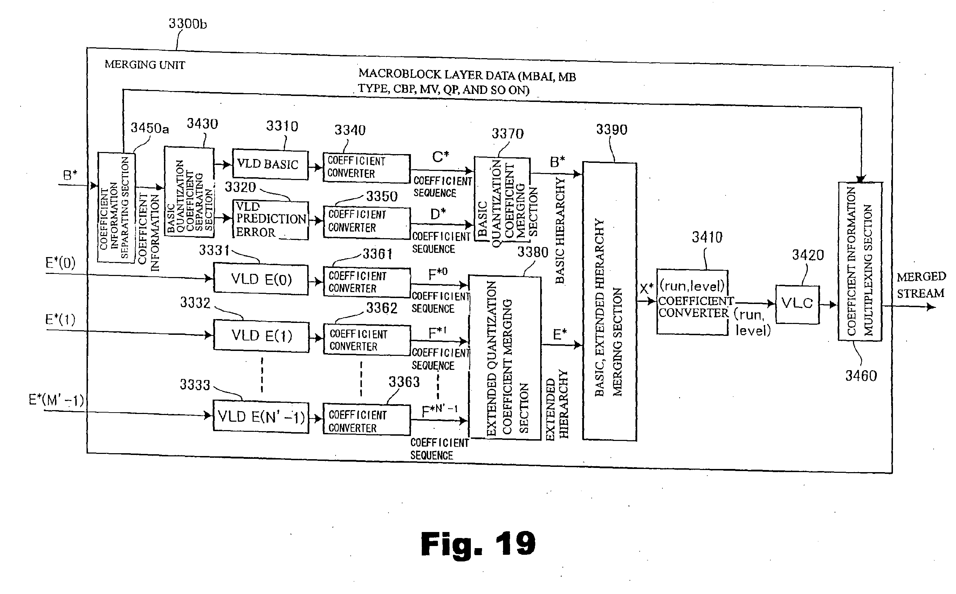

Next, regarding a process in the separating unit 1100 in the separator 1010, a process in the case where a prediction error coefficient sequence D is multiplexed with a basic quantization coefficient sequence C to generate a basic stream B to thereby substantially equalize the rates of separated streams St(1) $(0 \leq 1 \leq L - 1)$ will be described. In this embodiment, the relationship between an extended stream number m and an extended quantization coefficient sequence index number n is m = n.
A separating unit for multiplexing the basic quantization coefficient sequence C and the prediction error coefficient sequence D to generate the basic stream B is shown in FIG. 18.
As shown in FIG. 18, a separating unit 1100b has a similar configuration to that of the separating unit 1100a (refer to FIG. 13) described in the above-described embodiment, and further has a basic quantization coefficient multiplexer 1240.
The basic quantization coefficient multiplexer 1240 inputs a basic quantization coefficient sequence C outputted from a VLC basic 1210 and a prediction error coefficient sequence D outputted from a VLC prediction error 1220 and multiplexes the prediction error coefficient sequence D with the basic quantization coefficient sequence C to generate and outputs the basic stream B.
By the configuration as such, the separating unit 1100b multiplexes the prediction error coefficient sequence D with the basic quantization coefficient sequence C, so that the basic stream B can be generated.
Further, a merging unit 3300 of a merging device 3010 for the separating unit 1100b configured to generate such a basic stream B in which the basic quantization coefficient sequence C and the prediction error coefficient sequence D are multiplexed is shown in FIG. 19.

As shown in FIG. 19, the merging unit 3300b has a similar configuration to that of the merging unit 3300 (refer to FIG. 15) described in the above-described embodiment, and further has a basic quantization coefficient separating section 3430.

The basic quantization coefficient separating section 3430 separates an inputted basic stream B into a basic quantization coefficient sequence C and a prediction error coefficient sequence D, and outputs them to a VLD basic 3310 and a VLD prediction error 3320, respectively.

By the configuration as such, the merging unit 3300b can separate the basic quantization coefficient sequence C and the prediction error coefficient sequence D from the basic stream B.

(Third Embodiment)

Next, a case will be described in which the fact that the rates of separated streams St(1) are substantially even is utilized, and as a selecting method in the transmitting path selector 2010 in the router 2000, an optional transmitting path switch, by which the total output rate Rate[St out] of merged streams becomes equal to Rtarget or lower according to the target rate Rtarget, is turned on to enable reproduction of streams at the target rate.

In processing in the separator 1010, the rates Rate[E(m)] of extended streams E(m) are substantially even, and Rate[E(m)] $\fallingdotseq$ q is defined. Here, Rate[A] represents the rate of A. At this time, if the rate of a basic stream B is adequately low as compared to the rates of extended streams E(m), the rates of separated streams St(1) become substantially even, so that the rates become Rate[St(1)] $\fallingdotseq$ q. When the target rate Rtarget is Rtarget = 4q, rates Rate [St out] of output streams become Rate[St out] $\leq$ 4q by selecting any four separated streams St(1) (for example, selecting as shown in FIG. 6), thereby enabling reproduction of streams at the target rate.

(Fourth Embodiment)

Next, a case will be described in which, in a multiplexing unit 1600 in a separator 1010, extended streams E (m) are multiplexed to generate separated streams St(1) ($0 \leq 1 \leq L - 1$) each having a different rate.

By multiplexing extended streams E(m) in the multiplexing unit 1600, L number of separated streams according to the number of transmitting paths can be generated without changing the number M of extended streams outputted from a separating unit 1100, and the difference in rates of the separated streams St(1) is utilized so that the number of types of selectable rates becomes larger than the number of streams.

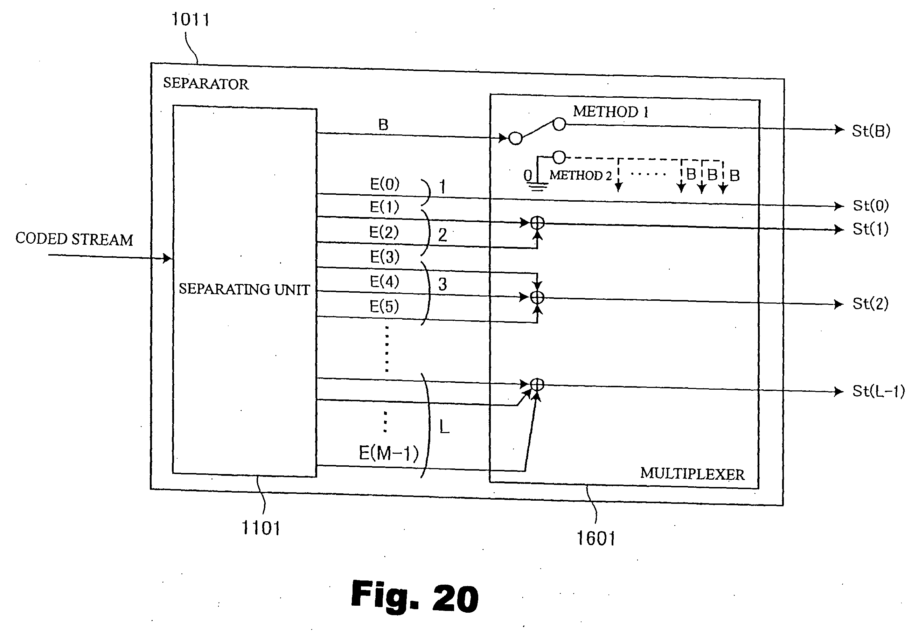

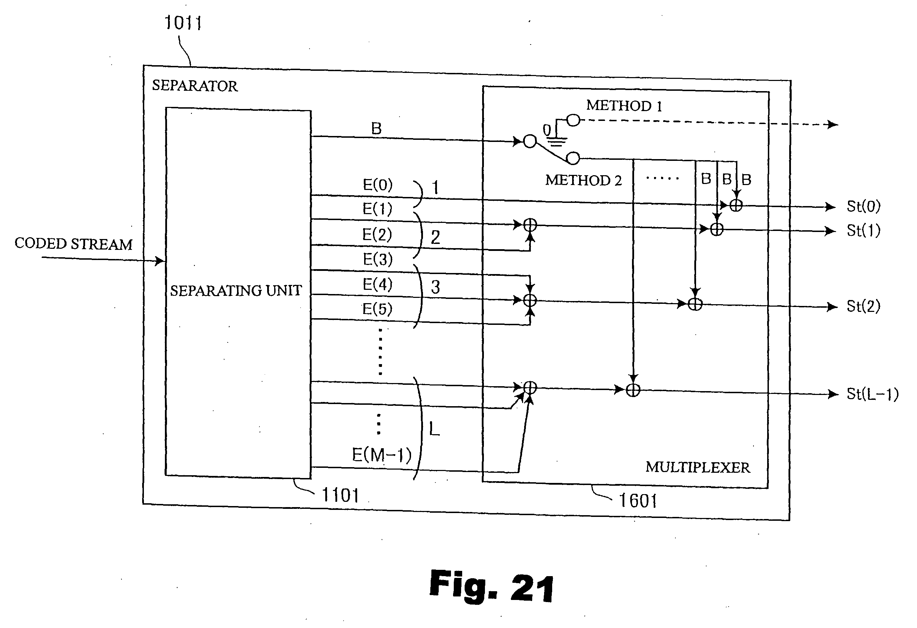

Block diagrams of a separator in this embodiment are shown in FIG. 20 and FIG. 21.

As shown in FIG. 20 and FIG. 21, by multiplexing extended streams E(m) in a multiplexer 1601 in a separator 1011, each of all separated streams St(1) can have a different rate. At this time, the extended streams E(m) are multiplexed by a number G1 to generate separated streams St(1). In this embodiment, merging by which the multiplexing parameter G1 becomes G1 = 1 + 1 is performed. The rates of separated streams St(1) become substantially equal to the total rate of the multiplexed extended streams, which is determined by the multiplexing parameter G1.

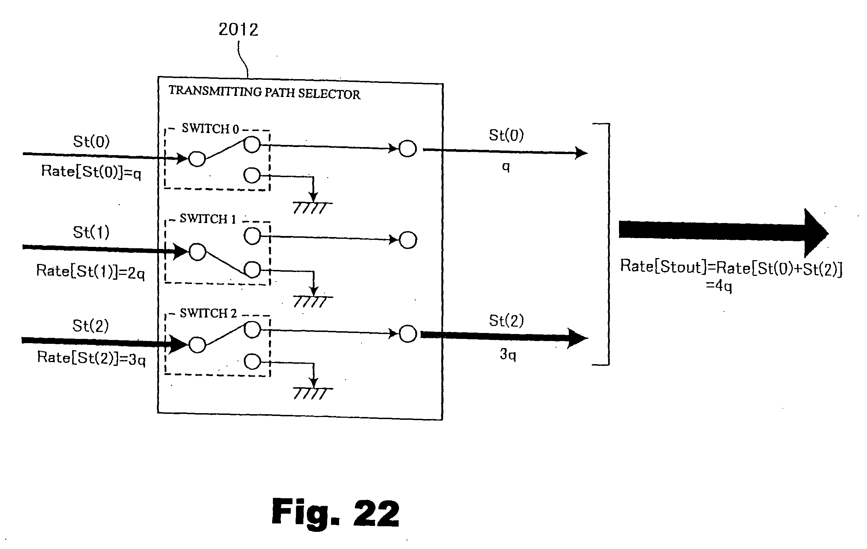

A concrete example of transmitting path selection in the transmitting path selector in the case where separated streams St(1) each having a different rate are generated as described above is shown in FIG. 22 and will be described below.

As shown in FIG. 22, in the multiplexing unit 1600 in the separator 1010, multiplexing of an extended stream to fulfill G1 = 1 + 1 is performed, the multiplexing of a basic stream is performed using either the method (1) or the method (2), and separated streams St(0), St(1), and St(2) are generated. At this time, it is assumed that L is L = 3, and separated streams St(1) are generated to have rates: Rate[St(0)] $\fallingdotseq$ q, Rate[St(1)] $\fallingdotseq$ 2q, and Rate[St(2)] $\fallingdotseq$ 3q, respectively. FIG. 22 shows that, when the target rate is Rtarget = 4q, the transmission path switches for the separated streams St(0) and St(2) are turned on and the transmission path switch for the separated stream St(1) is turned off, thereby realizing Rate[St (out)] $\leq$ 4q.

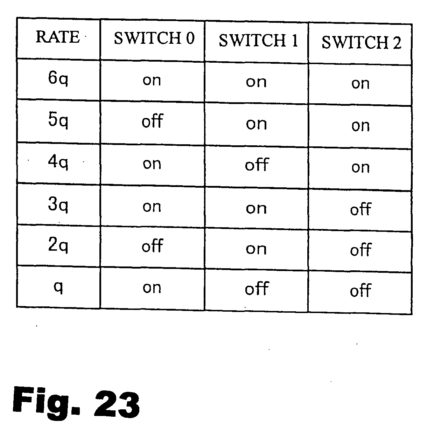

Here, operation of selecting an output rate and transmitting paths (changeover of switches) with L = 3 and G1 = 1 + 1 other than the above-described example of selection of transmitting paths is shown in FIG. 23. As shown in FIG. 23, in this embodiment, six types of rates can be realized from three streams, so that the number of selectable rates is larger than the number of streams.

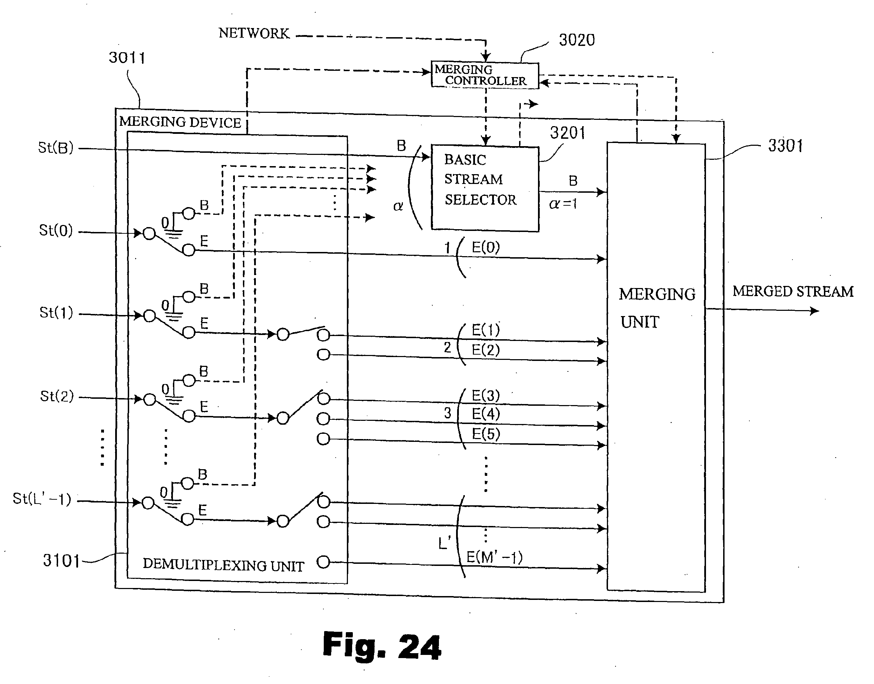

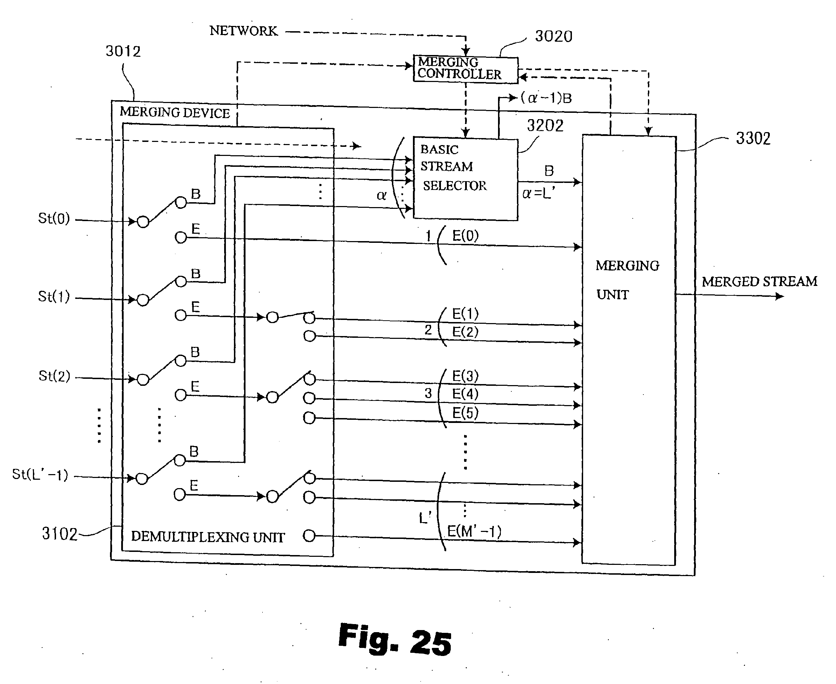

As block diagrams of the merging device 3010 in this embodiment, a merging device for the method (1) of multiplexing a basic stream is shown in FIG. 24, and a merging device for the method (2) thereof is shown in FIG. 25.

(Fifth Embodiment)

Next, a case of merging extended streams E(m) so that the multiplexing parameter G1 becomes G1 = $2^1$ and generating separated streams St(1) will be described.

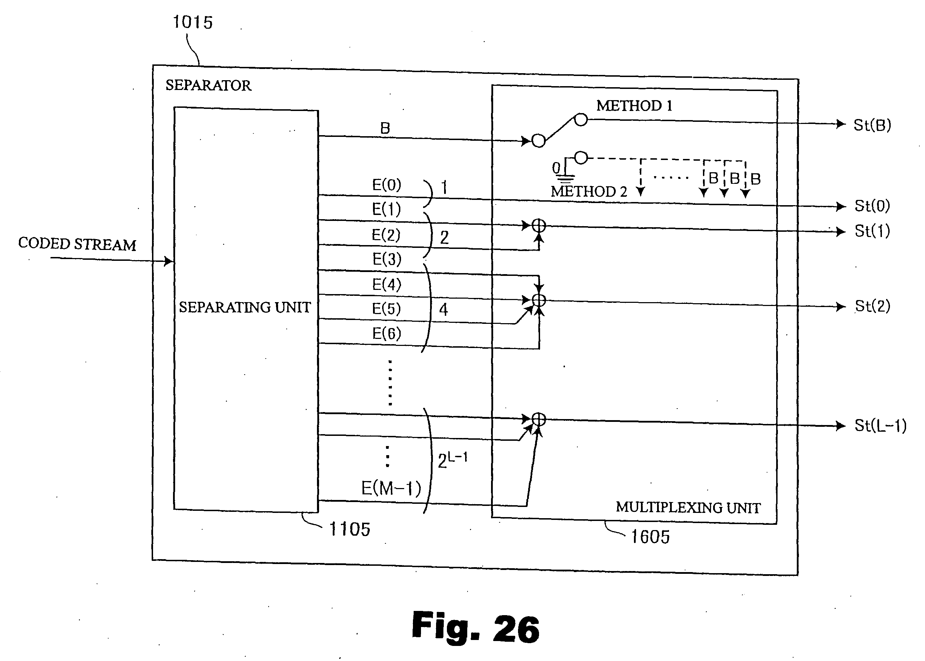

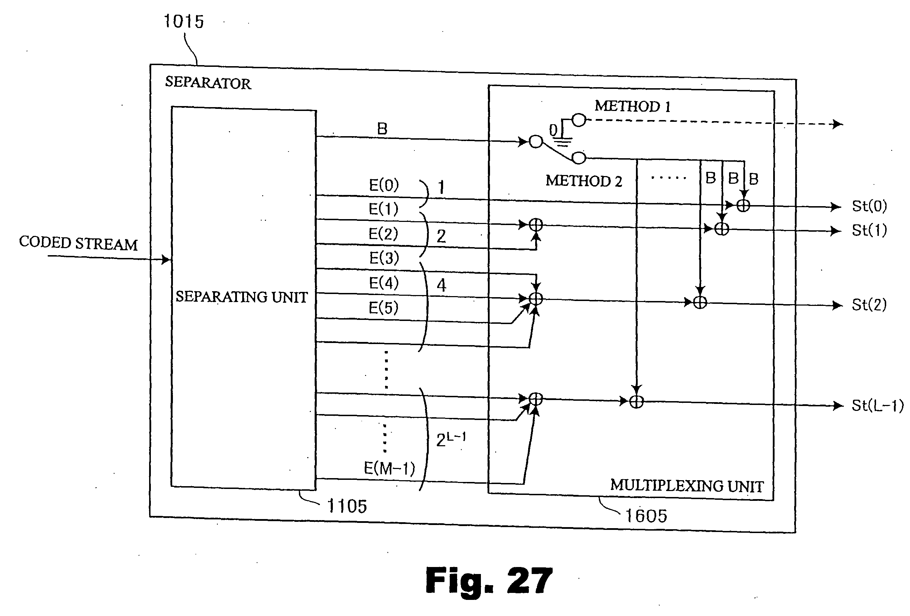

Block diagrams of a separator in this embodiment is shown in FIG. 26 and FIG. 27.

As shown in FIG. 26 and FIG. 27, inside a multiplexer 1605 of a separator 1015, separated streams St(1) each can have a different rate by multiplexing extended streams E(m). At this time, the extended streams E(m) are multiplexed by a number G1 to generate separated streams St(1). In this embodiment, merging by which the multiplexing parameter G1 becomes $G1 = 2^1$ is performed.

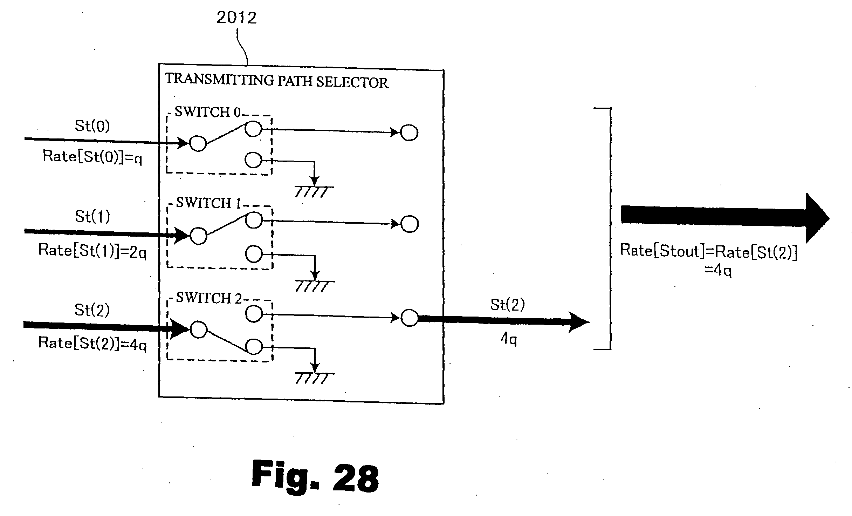

A concrete example of transmitting path selection in a transmitting path selector in the case where separated streams St(1) each having a different rate are generated as described above is shown in FIG. 28 and will be described below.

As shown in FIG. 28, in a multiplexing unit 1600 in a separator 1010, multiplexing of extended streams to fulfill $G1 = 2^1$ is performed, the multiplexing of a basic stream is performed using either the method (1) or the method (2), and separated streams St(0), St(1), and St(2) are generated. At this time, it is assumed that L is L = 3, and separated streams St(1) are generated with Rate[St(0)] $\fallingdotseq$ q, Rate[St(1)] $\fallingdotseq$ 2q, and Rate[St(2)] $\fallingdotseq$ 4q, respectively. FIG. 28 shows that, when the target rate is Rtarget = 4q, the transmitting path switch for the separated stream St(2) is turned on and the transmitting path switches for the separated streams St(0) and St(1) are turned off, thereby realizing Rate[St (out)] $\leq$ 4q.

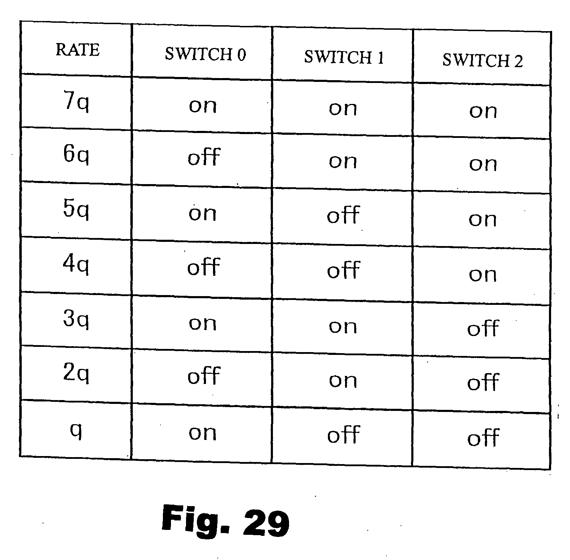

Here, operation of selecting an output rate and transmitting paths (changeover of switches) with L = 3 and $G1 = 2^1$ other than the above-described example of selection of transmitting paths is shown in FIG. 29. As shown in FIG. 29, in this embodiment, seven types of rates can be realized from three streams, so that the number of selectable rates becomes larger than the number of streams.

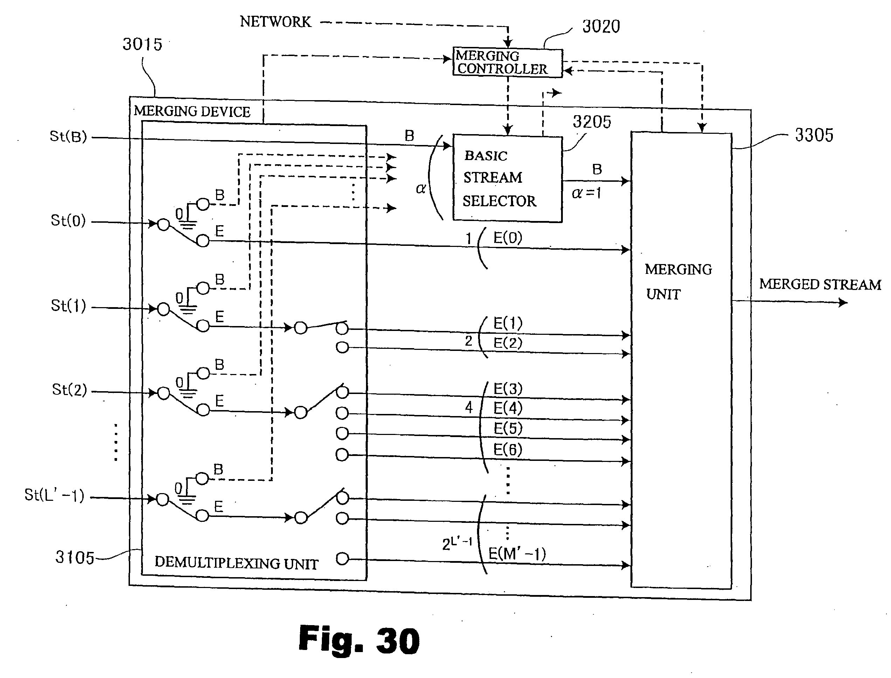

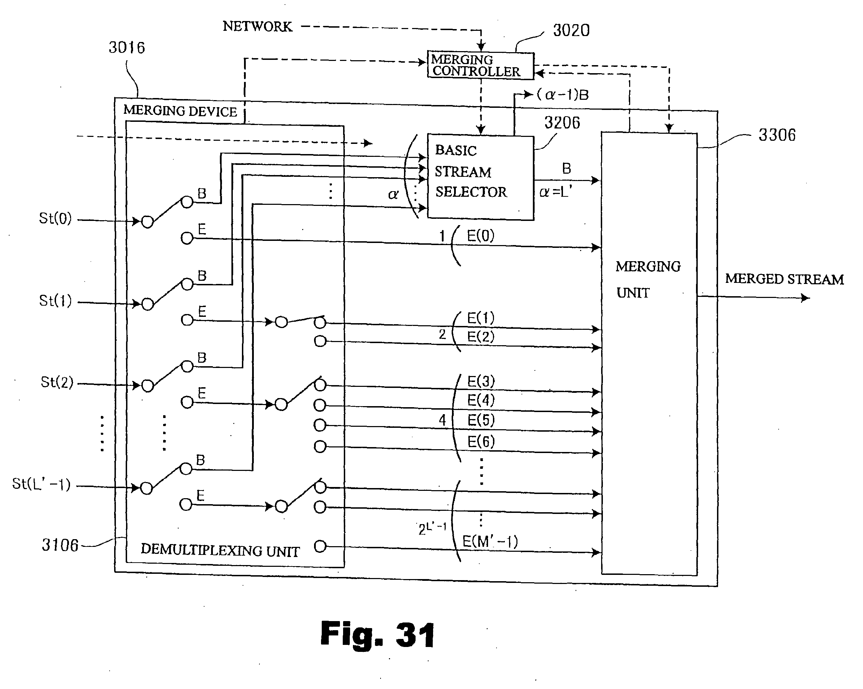

As block diagrams of the merging device 3010 in this embodiment, a merging device 3015 for the method (1) of multiplexing a basic stream is shown in FIG. 30, and a merging device 3016 for the method (2) thereof is shown in FIG. 31.

As above described method (1), when the basic coded signal and the extended coded signal are each transmitted as a separated transmission coded signal, in other words, when the basic coded signal is transmitted independently, this basic coded signal becomes the same kind of signal as conventional transcoded signals, and thus the basic coded signal can be received in a conventional manner by a regular receiving device on the receiving side. Therefore, a coded signal with a smaller, compressed code amount can be received.

Further, as above described method (2), when the basic coded signal is multiplexed with the extended coded signals respectively and transmitted as transmission coded signals, the basic coded signal can be obtained from any one of the transmission coded signals, so that even when a communication error occurs, the basic coded signal can be obtained from one transmission coded signal. Therefore, reproduced images can be safely and surely obtained.


(Sixth Embodiment)


Furthermore, a coded signal separating and merging system for coding quantization parameter reconstructing information within extended coded signals E(m) will be described in detail.

In the coded signal separating and merging system of this embodiment, there is generated a re-quantization parameter deriving constant to calculate an appropriate re-quantization parameter based on a re-quantization property, and an optimum re-quantization parameter is calculated by the re-quantization parameter deriving constant and an input quantization parameter. By coding information of the re-quantization parameter deriving constant used here as the quantization parameter reconstructing information within the extended coded signals E(m), the input quantization parameter is reconstructed from the basic coded signal B and the extended coded signal E(m).

Further, in this embodiment, extended hierarchy separating pattern information which defines a method of separating extended hierarchy coefficient values is used to separate coefficient values of an extended hierarchy into plural extended hierarchy coefficient sequences.

First, the re-quantization parameter deriving constant will be described. When inputted coefficient values are re-quantized (transcoded), the re-quantized coefficient values do not always become coefficient values of a constant percentage in accordance with the value of the re-quantization parameter. Accordingly, the value of the re-quantization parameter is restricted so that the coefficient values after re-quantization are efficiently quantized.

Here, the input quantization parameter is MQ1, and a re-quantization parameter obtained by calculation is MQ'2, and MQ1 and MQ'2 are used to calculate an integer h with the following equation (24) and equation (25).

Intra-picture:

$$h = \left\lfloor \frac{MQ_2{}' - 1}{2\ MQ_1} \right\rfloor \qquad\qquad \text{...... equation (24)}$$

Inter-picture:

$$h = \left\lfloor \frac{MQ_2{}' - 1}{MQ_1 + 0\,5} - 1 \right\rfloor \qquad\qquad \text{...... equation (25)}$$

Here, $\lfloor \ \rfloor$ represents rounding operation to an integer.

The above-described h and the input quantization parameter MQ1 are used to calculate the re-quantization parameter MQ2 with the following equation (26) and equation (27).

Intra-picture:

$$MQ_2 = \begin{cases} 2h \times MQ_1 + 1 & (\textit{if } h \neq 0) \\ MQ_1 & (\textit{if } h = 0) \end{cases} \qquad\qquad \text{...... equation (26)}$$

Inter-picture:

$$MQ2 = (h + 1) \times MQ1 \qquad\qquad \text{equation (27)}$$

Here, since the equation (26) and the equation (27) are integer operation, the re-quantization parameter MQ2 to be obtained is limited to a specific value. This h is defined as the re-quantization parameter deriving constant.

Hereinafter, the coded signal separating and merging system for separating the basic hierarchy and the extended hierarchy using the re-quantization parameter deriving constant h to code respective coefficient sequences will be described.

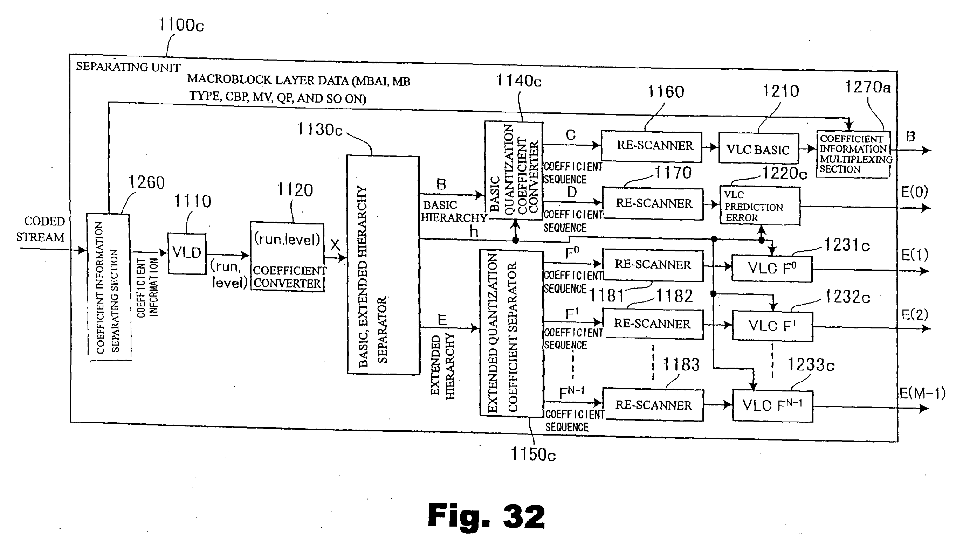

A separating unit of a separator configured to perform a coding process using the re-quantization parameter deriving constant h is shown in FIG. 32 and will be described below.

As shown in FIG. 32, a separating unit 1100c has a coefficient information separating section 1260, a variable length decoder (VLD) 1110, a run-level coefficient converter 1120, a basic extended hierarchy separator 1130c, a basic quantization coefficient converter 1140c, an extended quantization coefficient separator 1150c, a basic re-scanner 1160, a prediction error re-scanner 1170, extended re-scanners 1181, 1182..., 1183, a basic variable length coder (VLC basic) 1210, a prediction error variable length coder (VLC prediction error) 1220c, extended variable length coders (VLC/F°) 1231c, (VLC/F$^1$) 1232c ..., (VLC/F$^{N-1}$) 1233c, and a coefficient information multiplexing section 1270a.

The basic extended hierarchy separator 1130c calculates the re-quantization parameter deriving constant h and uses this re-quantization parameter deriving constant h to separate a quantization coefficient sequence X converted by the run-level coefficient converter 1120 into a basic hierarchy coefficient sequence B and an extended hierarchy coefficient sequence E. Here, a coefficient larger than the re-quantization parameter deriving constant h becomes a basic hierarchy coefficient value and a coefficient equal to or smaller than the re-quantization parameter deriving constant h becomes an extended hierarchy coefficient value.

The basic quantization coefficient converter 1140c inputs the basic hierarchy coefficient sequence B separated by the basic extended hierarchy separator 1130c, inputs the re-quantization parameter deriving constant h as well, calculates a re-quantization parameter MQ2 by the re-quantization parameter deriving constant h and the input quantization parameter MQ1, re-quantizes the inputted basic hierarchy coefficient sequence B using the calculated re-quantization parameter MQ2, and converts it into a basic quantization coefficient sequence C and a surplus coefficient sequence (prediction error coefficient sequence) D, which is differential information between the basic hierarchy coefficient sequence B and the basic quantization coefficient sequence C.

The extended quantization coefficient separator 1150c inputs the extended hierarchy coefficient sequence E separated by the basic extended hierarchy separator 1130c and separates it into plural extended quantization coefficient sequences $F^\circ$, F' ..., $F^{N-1}$ according to extended hierarchy separating pattern information which defines a method of separating the extended hierarchy.

Here, the extended hierarchy separating pattern information may be prepared internally in advance or inputted from the outside. Further, the extended hierarchy separating pattern information is, for example, information such as "an extended hierarchy coefficient sequence E is separated into four and assigned one by one in order from the first one of coefficient values."

The prediction error variable length coder (VLC prediction error) 1220c inputs the re-quantization parameter deriving constant h from the basic extended hierarchy separator 1130c, codes the surplus coefficient sequence (prediction error coefficient sequence) D, which is re-scanned by the re-scanner 1170, to variable length codes by a coding table in accordance with the re-quantization parameter deriving constant h to generate a surplus coefficient (prediction error coefficient) coded signal, and outputs it as an extended coded signal E(0).

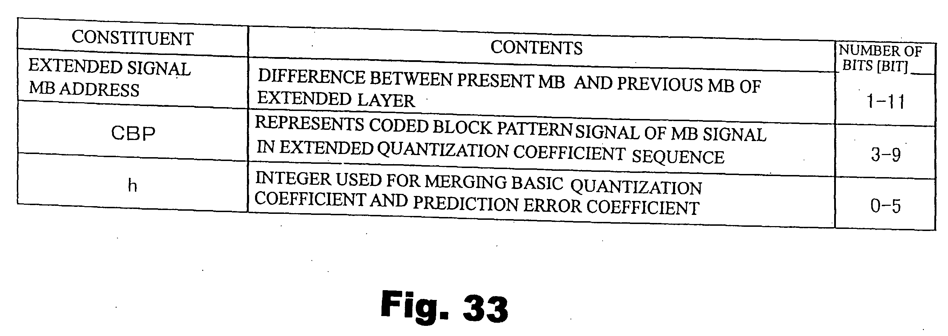

Further, at this time, quantization parameter reconstructing information is coded together in the extended coded signal E(0). As the quantization parameter reconstructing information, information of the re-quantization parameter deriving constant h is coded. Specifically, the re-quantization parameter deriving constant h is added to macroblock attribute information in the macroblock layer. In FIG. 33, contents of the macroblock attribute information in the macroblock layer are shown.

Further, the quantization parameter reconstructing information may be the re-quantization parameter deriving constant h as it is as described above, but differential values of the re-quantization parameter deriving constant h between macroblocks can be used as the quantization parameter reconstructing information to further reduce the code amount.

The extended variable length coders (VLC/$F^\circ$) 1231c, (VLC/$F^1$) 1232c ..., (VLC/$F^{N-1}$) 1233c input the re-quantization parameter deriving constant h from the basic extended hierarchy separator 1130c and respectively codes the extended quantization coefficient sequences $F^\circ$, $F^1$ ... $F^{N-1}$ respectively re-scanned by the re-scanner 1181, 1182 ..., 1183 to variable length codes by the coding table in accordance with the re-quantization parameter deriving constant h to thereby generate and output extended coded signals E(1), E(2) ..., E(M - 1).

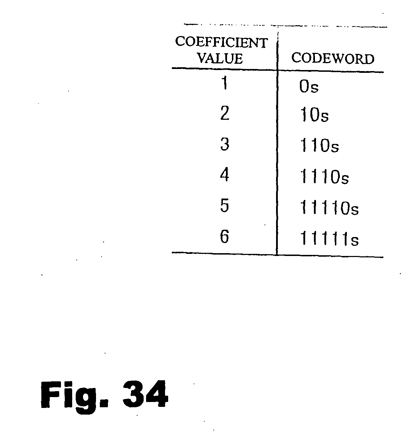

Here, a coding table of coefficient values (level values) in the case of using original variable length codewords according to the re-quantization parameter deriving constant h is shown in FIG. 34. The coding table shown in the view is a table denoting codewords for coefficient values when the re-quantization parameter deriving constant h is "6". Further, in a coding table of run, similarly, efficient coding can be performed by setting codewords according to the rate of run occurrence. As the coding table of run, for example; one described in FIG. 21 and so on in the above-mentioned Japanese Patent Application Laid-open No. 2002-135130 can be used.

Further, at this time, similarly to the prediction error variable length coder (VLC prediction error) 1220c, the quantization parameter reconstructing information is coded together in the extended coded signals E(1), E(2) ..., E (M - 1). Contents of the quantization parameter reconstructing information are the same as those for the prediction error variable length coder (VLC prediction error) 1220c.

Further, the coefficient information separating section 1260, variable length decoder (VLD) 1110, run-level coefficient converter 1120, basic re-scanner 1160, prediction error re-scanner 1170, extended re-scanners 1181, 1182 ..., 1183, basic variable length coder (VLC basic) 1210, and coefficient information multiplexing section 1270a of the separating unit 1100c are the same as those represented by the same numerals in the separating unit 1100a.

By the above configuration, in the separating unit 1100c, when a coded stream (first coded signal) is inputted, the quantization coefficient sequence X converted via the coefficient information separating section 1260, the variable length decoder (VLD) 1110, and the run-level coefficient converter 1120 is inputted to the basic extended hierarchy separator 1130c. In the basic extended hierarchy separator 1130c, the re-quantization parameter deriving constant h is calculated, and this re-quantization parameter deriving constant h is used to separate the inputted quantization coefficient sequence X into the basic hierarchy coefficient sequence B and the extended hierarchy coefficient sequence E.

The basic hierarchy coefficient sequence B separated by the basic extended hierarchy separator 1130c is inputted to the basic quantization coefficient converter 1140c. In the basic quantization coefficient converter 1140c, the inputted basic hierarchy coefficient sequence B is re-quantized using the re-quantization parameter MQ2 calculated with the re-quantization parameter deriving constant h, and converted into the basic quantization coefficient sequence C and the surplus coefficient sequence (prediction error coefficient sequence) D.

The basic quantization coefficient sequence C converted by the basic quantization coefficient converter 1140c is converted via the basic re-scanner 1160, the basic variable length coder (VLC basic) 1210, and the coefficient information multiplexing section 1270a into the basic coded signal B and outputted.

Further, the surplus coefficient sequence (prediction error coefficient sequence) D converted by the basic quantization coefficient converter 1140c is inputted via the prediction error re-scanner 1170 to the prediction error variable length coder (VLC prediction error) 1220c. The prediction error variable length coder (VLC prediction error) 1220c inputs the re-quantization parameter deriving constant h from the basic extended hierarchy separator 1130c, codes the surplus coefficient sequence (prediction error coefficient sequence) D to variable length codes by a coding table in accordance with the re-quantization parameter deriving constant h, generates the surplus coefficient (prediction error coefficient) coded signal, and outputs it as the extended coded signal E(0).

On the other hand, the extended hierarchy coefficient sequence E separated by the basic extended hierarchy separator 1130c is inputted to the extended quantization coefficient separator 1150c. In the extended quantization coefficient separator 1150c, the inputted extended hierarchy coefficient sequence E is separated into plural extended quantization coefficient sequences $F^\circ$, F' ..., $F^{N-1}$ according to the extended hierarchy separating pattern information.

The plural extended quantization coefficient sequences $F^0$, $F^1$ ..., $F^{N-1}$ separated by the extended quantization coefficient separator 1150c are inputted via the extended re-scanners 1181, 1182, ..., 1183 to the extended variable length coders (VLC/$F^\circ$) 1231c, (VLC/$F^1$) 1232c ..., (VLC/$F^{N-1}$) 1233c, respectively. The extended variable length coders (VLC/$F^\circ$) 1231c, (VLC/$F^1$) 1232c ..., (VLC/$F^{N-1}$) 1233c respectively input the re-quantization parameter deriving constant h from the basic extended hierarchy separator 1130c, codes the extended quantization coefficient sequences $F^\circ$, F' ..., $F^{N-1}$ to variable length codes by the coding table in accordance with the re-quantization parameter deriving constant h to thereby generate and output extended coded signals E(1), E(2) ..., E(M - 1).

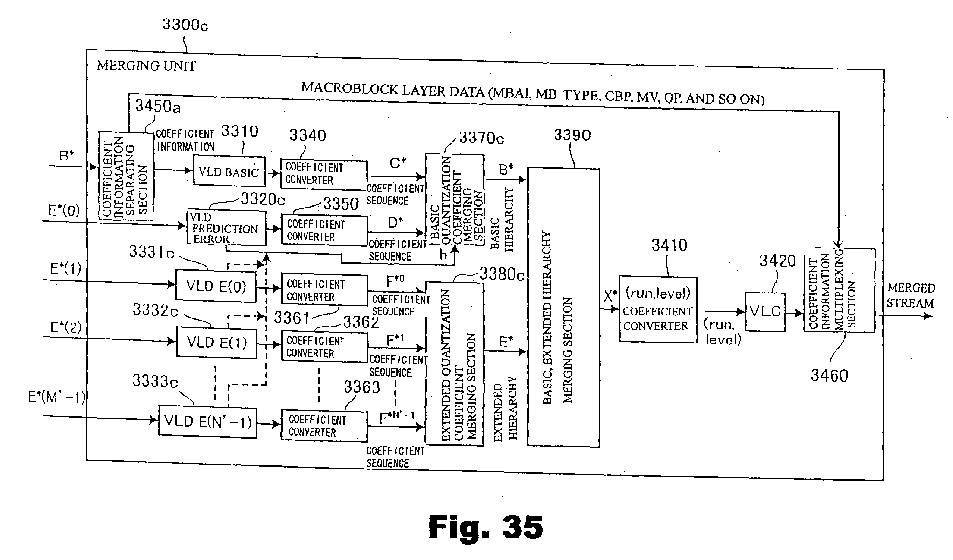

Next, a merging unit of a merging device for performing decoding processing using the re-quantization parameter deriving constant h is shown in FIG. 35 and will be described below.

As shown in FIG. 35, the merging unit 3300c has a coefficient information separating section 3450a, a basic variable length decoder (VLD basic) 3310, a prediction error variable length decoder (VLD prediction error) 3320c, the extended variable length decoders (VLD/E(0)) 3331c, (VLD/E(1)) 3332c ..., (VLD/E(N' - 1)) 3333c, a basic coefficient converter 3340, a prediction error coefficient converter 3350, extended coefficient converters 3361, 3362 ..., 3363, a basic quantization coefficient merging section 3370c, an extended quantization coefficient merging section 3380c, a basic extended hierarchy merging section 3390, a run-level coefficient converter 3410, a variable length coder (VLC) 3420, and a coefficient information multiplexing section 3460.

The prediction error variable length decoder (VLD prediction error) 3320c inputs an extended coded signal E*(0), obtains the re-quantization parameter deriving constant h from quantization parameter reconstructing information inside the extended coded signal E*(0), decodes surplus coefficient (prediction error coefficient) coded signal from variable length codes by a coding table in accordance with the re-quantization parameter deriving constant h, and outputs surplus coefficient (prediction error coefficient) information (run-level information).

Here, the coding table according to the re-quantization parameter deriving constant h is the same as the coding table used in the prediction error variable length coder (VLC prediction error) 1220c of the separating unit 1100c of the above-described separator.

The extended variable length decoders (VLD/E(0)) 3331c, (VLD/E(1)) 3332c ..., (VLD/E(N' - 1)) 3333c input extended coded signals E*(1), E*(2) ..., E*(M' - 1) respectively, obtain the re-quantization parameter deriving constant h from quantization parameter reconstructing information in the respective extended coded signals E*(1), E*(2) ..., E*(M' - 1), decode the extended coded signals E*(1), E*(2) ..., E*(M' - 1) from variable length codes by a coding table in accordance with the re-quantization parameter deriving constant h, and output extended quantization coefficient information (run-level information).

) Further, the coding table according to the re-quantization parameter deriving constant h is also the same as the coding table used in the extended variable length coders (VLC/$F^0$) 1231c, (VLC/$F^1$) 1232c ..., (VLC/$F^{N-1}$) 1233c of the separating unit 1100c of the above-described separator.

The basic quantization coefficient merging section 3370c inputs, along with the basic quantization coefficient sequence C* converted by the basic coefficient converter 3340 and the prediction error coefficient sequence D* converted by the prediction error coefficient converter 3350, the re-quantization parameter deriving constant h from one of the prediction error variable length decoders (VLD prediction error) 3320c and the extended variable length decoders (VLD/E(0)) 3331c, (VLD/E(1)) 3332c ..., (VLD/E(N' - 1)) 3333c. Then, the input quantization parameter MQ1 is reconstructed from the re-quantization parameter MQ2 and the re-quantization parameter deriving constant h. Furthermore, the reconstructed input quantization parameter MQ1 and the re-quantization parameter MQ2 are used to merge the inputted basic quantization coefficient sequence C* and the prediction error coefficient sequence D* to generate the basic hierarchy coefficient sequence B*.

The extended quantization coefficient merging section 3380c inputs extended quantization coefficient sequences $F^{*0}$, $F^{*1}$ ..., $F^{*N-1}$ converted by the extended coefficient converters 3361, 3362 ..., 3363 and internally or externally inputs extended hierarchy separating pattern information, and merges the extended quantization coefficient sequences $F^{*0}$, $F^{*1}$ ..., $F^{*N-1}$ into one extended hierarchy coefficient sequence $E^*$ according to the extended hierarchy separating pattern information.

The coefficient information separating section 3450a, basic variable length decoder (VLD basic) 3310, basic coefficient converter 3340, prediction error coefficient converter 3350, extended coefficient converters 3361, 3362 ..., 3363, basic extended hierarchy merging section 3390, run-level coefficient converter 3410, variable length coder (VLC) 3420, and coefficient information multiplexing section 3460 of the merging unit 3300c are the same as those represented by the same numerals in the merging unit 3300a.

By the above configuration, in the merging unit 3300c, when the basic coded signal B* is inputted, the basic quantization coefficient sequence C* converted via the coefficient information separating section 3450a, the basic variable length decoder (VLD basic) 3310, and the basic coefficient converter 3340 is inputted to the basic quantization coefficient merging section 3370.

Further, when the extended coded signal E*(0) is inputted, it is inputted to the prediction error variable length decoder (VLD prediction error) 3320c, the re-quantization parameter deriving constant h is obtained from quantization parameter reconstructing information inside the extended coded signal E*(0), and by the coding table in accordance with the re-quantization parameter deriving constant h, the extended coded signal E*(0) is decoded from variable length codes to the surplus coefficient (prediction error coefficient) information (run-level information). This decoded surplus coefficient (prediction error coefficient) information is converted into a prediction error coefficient sequence D* in the prediction error coefficient converter 3350 and inputted to the basic quantization coefficient merging section 3370c.

The basic quantization coefficient merging section 3370c inputs the re-quantization parameter deriving constant h with the basic quantization coefficient sequence C* and the prediction error coefficient sequence D*, and calculates the input quantization parameter MQ1 from the re-quantization parameter MQ2. Furthermore, the input quantization parameter MQ1 is used to merge the inputted basic quantization coefficient sequence C* and the prediction error coefficient sequence D* to generate a basic hierarchy coefficient sequence B*, which is outputted to the basic extended hierarchy merging section 3390.

On the other hand, when the extended coded signals E*(1), E*(2) ..., E*(M' - 1) are inputted, they are inputted respectively to the extended variable length decoders (VLD/E(0)) 3331c, (VLD/E(1)) 3332c ..., (VLD/E(N' - 1)) 3333c, the re-quantization parameter deriving constant h is obtained from the quantization parameter reconstructing information in the respective extended coded signals E*(1), E*(2) ..., E*(M' - 1), and by a coding table in accordance with the re-quantization parameter deriving constant h, the extended coded signals are decoded from variable length codes to the extended quantization coefficient information (run-level information). The decoded respective extended quantization coefficient information are converted in the extended coefficient converters 3361, 3362 ..., 3363 into the extended quantization coefficient sequences $F^{*0}$, $F^{*1}$ ..., $F^{*N-1}$ and inputted to the extended quantization coefficient merging section 3380c. In the extended quantization coefficient merging section 3380c, the inputted extended quantization coefficient sequences $F^{*0}$, $F^{*1}$ ..., $F^{*N-1}$ are merged into one extended hierarchy coefficient sequence $E^*$ according to the extended hierarchy separating pattern information and outputted to the basic extended hierarchy merging section 3390.

The basic extended hierarchy merging section 3390 inputs the basic hierarchy coefficient sequence B* and the extended hierarchy coefficient sequence E* and merges them to generate a merged quantization coefficient sequence (third quantization coefficient sequence) X*. The merged quantization coefficient sequence (third quantization coefficient sequence) $X^*$ is converted into a merged stream (third coded signal) via the run-level coefficient converter 3410, variable length coder (VLC) 3420, and coefficient information multiplexing section 3460 to be outputted.

As has been described above, in the coded signal separating and merging system in this embodiment, by coding the quantization parameter reconstructing information within the extended coded signal E(m), an original coded stream (first coded signal) including the input quantization parameter MQ1 can be completely reconstructed on the merging device side even from a conventional compressed coded signal (normal MPEG-2 bit stream) as it is, without incorporating information of the input quantization parameter MQ1 in the basic coded signal B, and the code amount of the extended coded signal E(m) can be made smaller as compared to the case where the input quantization parameter MQ1 itself is coded.

(Seventh Embodiment)

Next, there will be described a process in the case where a prediction error coefficient sequence D is multiplexed with a basic quantization coefficient sequence C to generate a basic stream B in a coded signal separating and merging system for coding quantization parameter reconstructing information within an extended coded signal E(m).

Hereinafter, a coded signal separating and merging system for separating a basic hierarchy and an extended hierarchy using a re-quantization parameter deriving constant h to code respective coefficient sequences will be described.

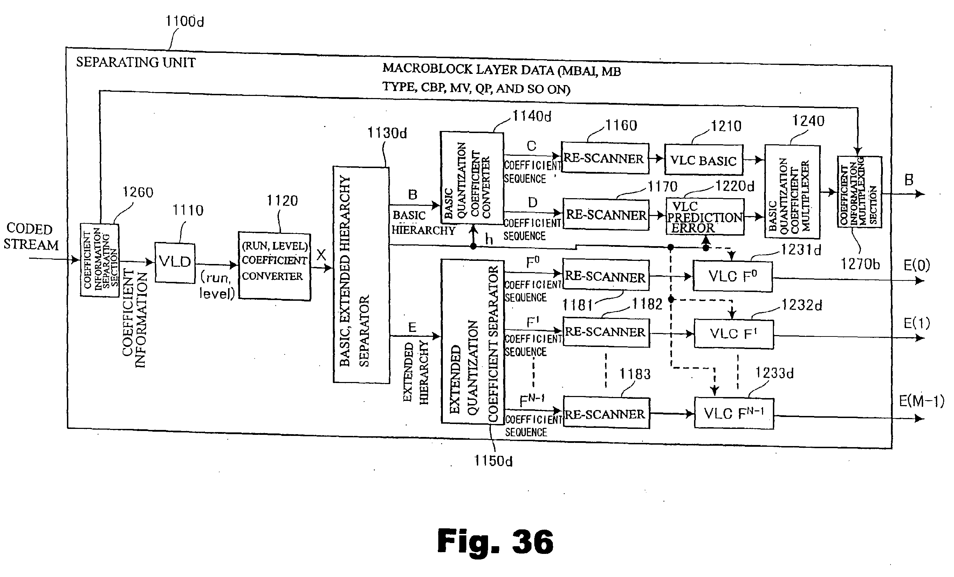

A separating unit of a separator configured to perform a coding process using the re-quantization ) parameter deriving constant h and multiplexing the prediction error coefficient sequence D with the basic quantization coefficient sequence C to generate the basic stream B is shown in FIG. 36 and will be described below.

As shown in FIG. 36, a separating unit 1100d has a coefficient information separating section 1260, a variable length decoder (VLD) 1110, a run-level coefficient converter 1120, a basic extended hierarchy separator 1130d, a basic quantization coefficient converter 1140d, an extended quantization coefficient separator 1150d, a basic re-scanner 1160, a prediction error re-scanner 1170, extended re-scanners 1181, 1182 ..., 1183, a basic variable length coder (VLC basic) 1210, a prediction error variable length coder (VLC prediction error) 1220d, extended variable length coders (VLC/F$^\circ$) 1231d, (VLC/F$^1$) 1232d ..., (VLC/F$^{N-1}$) 1233d, a basic quantization coefficient multiplexer 1240 and a coefficient information multiplexing section 1270b.

The basic extended hierarchy separator 1130d calculates the re-quantization parameter deriving constant h and uses this re-quantization parameter deriving constant h to separate a quantization coefficient sequence X converted by the run-level coefficient converter 1120 into a basic hierarchy coefficient sequence B and an extended hierarchy coefficient sequence E, and is the same as the basic extended hierarchy separator 1130c of the above-described separating unit 1100c.

The basic quantization coefficient converter 1140d inputs the basic hierarchy coefficient sequence B separated by the basic extended hierarchy separator 1130d, inputs the re-quantization parameter deriving constant h as well, calculates a re-quantization parameter MQ2 by the re-quantization parameter deriving constant h and the input quantization parameter MQ1, re-quantizes the inputted basic hierarchy coefficient sequence B using the calculated re-quantization parameter MQ2, and converts it into a basic quantization coefficient sequence C and a surplus coefficient sequence (prediction error coefficient sequence) D. The basic quantization coefficient converter 1140d is the same as the basic quantization coefficient converter 1140c of the above-described separating unit 1100c.

The extended quantization coefficient separator 1150d inputs the extended hierarchy coefficient sequence E separated by the basic extended hierarchy separator 1130d and separates it into plural extended quantization coefficient sequences F$^\circ$, F$^1$ ..., F$^{N-1}$ according to extended hierarchy separating pattern information which defines a method of separating the extended hierarchy, and is the same as the extended quantization coefficient separator 1150c of the above-described separating unit 1100c. Further, the extended hierarchy separating pattern information used in this extended quantization coefficient separator 1150d is the same as that in the description of the extended quantization coefficient separator 1150c of the above-described separating unit 1100c, which may be prepared internally in advance or inputted from the outside, similarly to the above description.

The prediction error variable length coder (VLC prediction error) 1220d inputs the re-quantization parameter deriving constant h from the basic extended hierarchy separator 1130d, and codes the surplus coefficient sequence (prediction error coefficient sequence) D, which is re-scanned by the re-scanner 1170, to variable length codes by a coding table in accordance with the re-quantization parameter deriving constant h to generate a surplus coefficient (prediction error coefficient) coded signal D.

) Further, at this time, quantization parameter reconstructing information is coded together in the surplus coefficient (prediction error coefficient) coded signal D, which is similar to that in the prediction error variable length coder (VLC prediction error) 1220c of the above-described separating unit 1100c. Also, the quantization parameter reconstructing information is the same as that in the description of the prediction error variable length coder (VLC prediction error) 1220c of the above-described separating unit 1100c.

The extended variable length coders (VLC/F$^0$) 1231d, (VLC/F') 1232d ..., (VLC/F$^{N-1}$) 1233d respectively code extended quantization coefficient sequences F$^\circ$, F' ... F$^{N-1}$, which are respectively re-scanned by the re-scanners 1181, 1182 ..., 1183, to variable length codes by a coding table in accordance with the re-quantization parameter deriving constant h to generate the extended coded signals E(0), E(1) ..., E(M - 1) and outputs them. The re-quantization parameter deriving constant h may be inputted from the basic extended hierarchy separator 1130d, or from the prediction error variable length coder (VLC prediction error) 1220d.

However, different from the prediction error variable length coder (VLC prediction error) 1220d, the quantization parameter reconstructing information is not coded within the extended coded signals E(0), E(1) ..., E(M - 1). This is because the surplus coefficient sequence (prediction error coefficient sequence) D in which the quantization parameter reconstructing information is coded is included in the basic coded signal B that is constantly received, and the quantization parameter reconstructing information coded in the surplus coefficient sequence (prediction error coefficient sequence) D can be used.

Further, the coefficient information separating section 1260, variable length decoder (VLD) 1110, run-level coefficient converter 1120, basic re-scanner 1160, prediction error re-scanner 1170, extended re-scanners 1181, 1182 ..., 1183, basic variable length coder (VLC basic) 1210, basic quantization coefficient multiplexer 1240, and coefficient information multiplexing section 1270b of the separating unit 1100d are the same as those represented by the same numerals in the separating unit 1100b.

By the above configuration, in the separating unit 1100d, when a coded stream (first coded signal) is inputted, the quantization coefficient sequence X converted via the coefficient information separating section 1260, the variable length decoder (VLD) 1110, and the run-level coefficient converter 1120 is inputted to the basic extended hierarchy separator 1130d. In the basic extended hierarchy separator 1130d, the re-quantization parameter deriving constant h is calculated, and this re-quantization parameter deriving constant h is used to separate the inputted quantization coefficient sequence X into the basic hierarchy coefficient sequence B and the extended hierarchy coefficient sequence E.

The basic hierarchy coefficient sequence B separated by the basic extended hierarchy separator 1130d is inputted to the basic quantization coefficient converter 1140d. In the basic quantization coefficient converter 1140d, the inputted basic hierarchy coefficient sequence B is re-quantized using the re-quantization parameter MQ2 calculated with the re-quantization parameter deriving constant h, and converted into the basic quantization coefficient sequence C and the surplus coefficient sequence (prediction error coefficient sequence) D.

The basic quantization coefficient sequence C converted by the basic quantization coefficient converter 1140d is converted via the basic re-scanner 1160 and the basic variable length coder (VLC basic) 1210 into the basic quantization coefficient coded signal and outputted to the basic quantization coefficient multiplexer 1240.

Further, the surplus coefficient sequence (prediction error coefficient sequence) D converted by the basic quantization coefficient converter 1140d is inputted via the prediction error re-scanner 1170 to the prediction error variable length coder (VLC prediction error) 1220d. The prediction error variable length coder (VLC prediction error) 1220d inputs the re-quantization parameter deriving constant h from the basic extended hierarchy separator 1130d, codes the surplus coefficient sequence (prediction error coefficient sequence) D to variable length codes by a coding table in accordance with the re-quantization parameter deriving constant h, generates the surplus coefficient (prediction error coefficient) coded signal, and outputs it to the basic quantization coefficient multiplexer 1240.

) Subsequently, in the basic quantization coefficient multiplexer 1240, the inputted basic quantization coefficient coded signal and the surplus coefficient (prediction error coefficient) coded signal are multiplexed, and a basic coded signal B is generated in the coefficient information multiplexing section 1270b and outputted.

On the other hand, the extended hierarchy coefficient sequence E separated by the basic extended hierarchy separator 1130d is inputted to the extended quantization coefficient separator 1150d, and in the extended quantization coefficient separator 1150d, the inputted extended hierarchy coefficient sequence E is separated according to the aforementioned extended hierarchy separating pattern information into plural extended quantization coefficient sequences $F^\circ$, $F^1$ ..., $F^{N-1}$.

The plural extended quantization coefficient sequences $F^\circ$, $F'$ ..., $F^{N-1}$ separated by the extended quantization coefficient separator 1150d are inputted via the extended re-scanners 1181, 1182 ..., 1183 to the extended variable length coders (VLC/$F^\circ$) 1231d, (VLC/$F^1$) 1232d ..., (VLC/$F^{N-1}$) 1233d respectively. The extended variable length coders (VLC/$F^\circ$) 1231d, (VLC/$F'$) 1232d ..., (VLC/$F^{N-1}$) 1233d respectively code the extended quantization coefficient sequences $F^\circ$, $F'$ ..., $F^{N-1}$ to variable length codes by the coding table in accordance with the re-quantization parameter deriving constant h to generate and output the extended coded signals E(0), E(1) ..., E(M - 1).

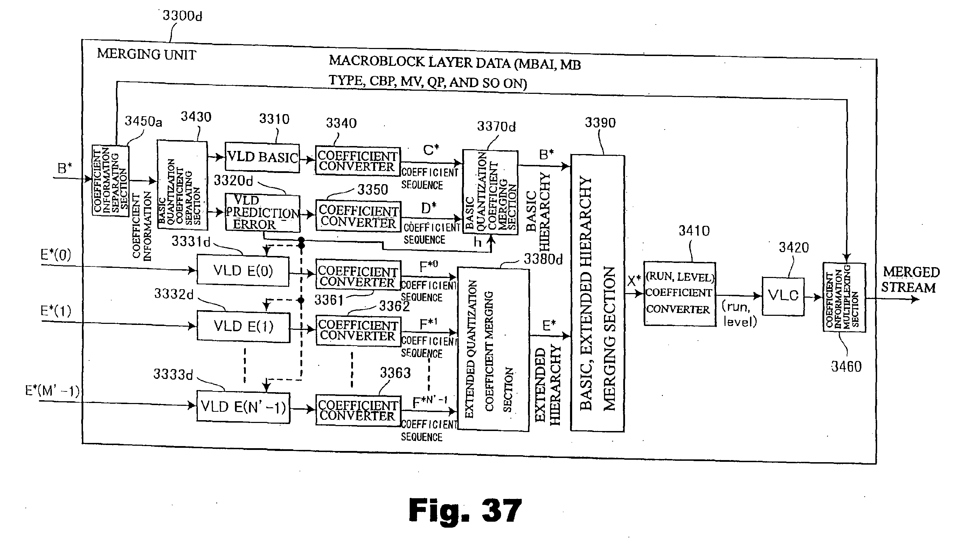

Next, a merging unit of a merging device configured to separate the basic quantization coefficient sequence C and the surplus coefficient sequence (prediction error coefficient sequence) D from the basic coded signal B and perform a decoding process using the re-quantization parameter deriving constant h is shown in FIG. 37 and will be described below.

As shown in FIG. 37, a merging unit 3300d has a coefficient information separating unit 3450a, a basic quantization coefficient separating section 3430, a basic variable length decoder (VLD basic) 3310, a prediction error variable length decoder (VLD prediction error) 3320d, an extended variable length decoder (VLD/E(0)) 3331d, (VLD/E(1)) 3332d ..., (VLD/E(N' - 1)) 3333d, a basic coefficient converter 3340, a prediction error coefficient converter 3350, an extended coefficient converters 3361, 3362 ..., 3363, a basic quantization coefficient merging section 3370d, an extended quantization coefficient merging section 3380d, a basic extended hierarchy merging section 3390, a run-level coefficient converter 3410, a variable length coder (VLC) 3420 and a coefficient information multiplexing section 3460.

The prediction error variable length decoder (VLD prediction error) 3320d inputs the surplus coefficient (prediction error coefficient) coded signal separated by the basic quantization coefficient separating section 3430, obtains the re-quantization parameter deriving constant h from the quantization parameter reconstructing information in the surplus coefficient (prediction error coefficient) coded signal, and decodes the surplus coefficient (prediction error coefficient) coded signal from variable length codes by a coding table in accordance with the re-quantization parameter deriving constant h to output surplus coefficient (prediction error coefficient) information (run-level information).

Here, the coding table according to the re-quantization parameter deriving constant h is the same as the coding table used in the prediction error variable length coder (VLC prediction error) 1220d of the separating unit 1100d of the above-described separator.

) The extended variable length decoders (VLD/E(0)) 3331d, (VLD/E(1)) 3332d ..., (VLD/E(N'- 1)) 3333d input extended coded signals E*(0), E*(1) ..., E*(M' - 1) respectively, input the re-quantization parameter deriving constant h from the prediction error variable length decoder (VLD prediction error) 3320d, decode the extended coded signals E*(0), E*(1) ..., E*(M' - 1) from variable length codes by a coding table in accordance with the re-quantization parameter deriving constant h, and respectively output extended quantization coefficient information (run-level information).

Further, the coding table according to the re-quantization parameter deriving constant h is the same as the coding table used in the extended variable length coders (VLC/F°) 1231c, (VLC/F') 1232c ..., (VLC/F$^{N-1}$) 1233c of the separating unit 1100d of the above-described separator.

The basic quantization coefficient merging section 3370d inputs, along with the basic quantization coefficient sequence C* converted by the basic coefficient converter 3340 and the prediction error coefficient sequence D* converted by the prediction error coefficient converter 3350, the re-quantization parameter deriving constant h from the prediction error variable length decoder (VLD prediction error) 3320d. Then, the input quantization parameter MQ1 is reconstructed from the re-quantization parameter MQ2 and the re-quantization parameter deriving constant h. Further, the reconstructed input quantization parameter MQ1 and the re-quantization parameter MQ2 are used to merge the inputted basic quantization coefficient sequence C* and the prediction error coefficient sequence D* to generate the basic hierarchy coefficient sequence B*.

The extended quantization coefficient merging section 3380d inputs extended quantization coefficient sequences F$^{*0}$, F$^{*1}$ ..., F$^{*N-1}$ converted by the extended coefficient converters 3361, 3362 ..., 3363 and merges the extended quantization coefficient sequences F$^{*0}$, F$^{*1}$ ..., F$^{*N-1}$ into one extended hierarchy coefficient E* according to the extended hierarchy separating pattern information, and is the same as the extended quantization coefficient merging section 3380c of the above-described merging unit 3300c. Further, the extended hierarchy separating pattern information may be provided internally or inputted from the outside, similarly to the extended quantization coefficient merging section 3380c of the merging unit 3300c.

The coefficient information separating section 3450a, basic quantization coefficient separating section 3430, basic variable length decoder (VLD basic) 3310, basic coefficient converter 3340, prediction error coefficient converter 3350, extended coefficient converters 3361, 3362 ..., 3363, basic extended hierarchy merging section 3390, run-level coefficient converter 3410, variable length coder (VLC) 3420 and coefficient information multiplexing section 3460 of the merging unit 3300d are the same as those represented by the same numerals in the merging unit 3300b.

By the above configuration, in the merging unit 3300d, when the basic coded signal B* is inputted, coefficient information of the basic hierarchy is inputted via the coefficient information separating section 3450a to the basic quantization coefficient separating section 3430 and separated in the basic quantization coefficient separating section 3430 into the basic quantization coefficient coded signal and the surplus coefficient (prediction error coefficient) coded signal.

The basic quantization coefficient coded signal separated in the basic quantization coefficient ) separating section 3430 is converted via the basic variable length decoder (VLD basic) 3310 and the basic coefficient converter 3340 into the basic quantization coefficient sequence C* and inputted to the basic quantization coefficient merging section 3370d:

The surplus coefficient (prediction error coefficient) coded signal separated in the basic quantization coefficient separating section 3430 is inputted to the prediction error variable length decoder (VLD prediction error) 3320d, the re-quantization parameter deriving constant h is obtained from the quantization parameter reconstructing information in the surplus coefficient (prediction error coefficient) coded signal, and the surplus coefficient (prediction error coefficient) coded signal is decoded from variable length codes by a coding table in accordance with the re-quantization parameter deriving constant h to surplus coefficient (prediction error coefficient) information (run-level information). This decoded surplus coefficient (prediction error coefficient) information is converted into a prediction error coefficient sequence D* in the prediction error coefficient converter 3350 and inputted to the basic quantization coefficient merging section 3370d.

The basic quantization coefficient merging section 3370d inputs the re-quantization parameter deriving constant h with the basic quantization coefficient sequence C* and the prediction error coefficient sequence D*, and calculates the input quantization parameter MQ1 from the re-quantization parameter MQ2. Further, the input quantization parameter MQ1 is used to merge the inputted basic quantization coefficient sequence C* and the prediction error coefficient sequence D* to generate a basic hierarchy coefficient sequence B*, which is outputted to the basic extended hierarchy merging section 3390.

On the other hand, when the extended coded signals E*(0), E*(1) ..., E*(M' - 1) are inputted, they are inputted respectively to the extended variable length decoders (VLD/E(0)) 3331d, (VLD/E(1)) 3332d ..., (VLD/E (N' - 1)) 3333d, the re-quantization parameter deriving constant h is inputted from the prediction error variable length decoder (VLD prediction error) 3320d, and by a coding table in accordance with the re-quantization parameter deriving constant h, the extended coded signals are decoded from variable length codes to the extended quantization coefficient information (run-level information). The decoded respective extended quantization coefficient information are converted in the extended coefficient converters 3361, 3362 ..., 3363 respectively into the extended quantization coefficient sequences F$^{*0}$, F$^{*1}$ ..., F$^{*N'-1}$ and inputted to the extended quantization coefficient merging section 3380d. In the extended quantization coefficient merging section 3380d, the inputted extended quantization coefficient sequences F$^{*0}$, F$^{*1}$ ..., F$^{*N'-1}$

are merged into one extended hierarchy coefficient sequence E* according to the extended hierarchy separating pattern information and outputted to the basic extended hierarchy merging section 3390.

The basic extended hierarchy merging section 3390 inputs the basic hierarchy coefficient sequence B* and the extended hierarchy coefficient sequence E* and merges them to generate a merged quantization coefficient sequence (third quantization coefficient sequence) X*. The merged quantization coefficient sequence (third quantization coefficient sequence) X* is converted into a merged stream (third coded signal) via the run-level coefficient converter 3410, variable length coder (VLC) 3420, and coefficient information multiplexing section 3460 to be outputted.

As has been described above, in the coded signal separating and merging system of this embodiment, since the quantization parameter reconstructing information is handled as the surplus coefficient sequence (prediction error coefficient sequence) D and multiplexed to the basic coded signal B, it is unnecessary to include any information for reconstructing the quantization parameter in the extended coded signals E(m), so that the code amounts of many extended coded signals E(m) can be reduced, and also an original quantization parameter MQ1 can be obtained by receiving only the basic coded signal B.

Although the separator input means is not illustrated in those embodiments, it is arranged in the separator 1010, 1010a, 1010b, 1011 and 1015, or it is arranged besides each separator , and is arranged anyway at the preceding of the separating unit 1100, 1100a, 1100b, 1101, and 1105. This separator input means stores for example, coded streams temporarily, or carries out operation which reads the function of a processing program. Moreover, the separator separating means is equivalent to the separating unit 1100, 1100a, 1100b, 1101, and 1105 in each figure, and the separator multiplexing means is equivalent to the multiplexing unit 1600, 1600a, 1600b, 1601, and 1605. Moreover, although the separator output means is not illustrated, it is arranged in the separator, or it is arranged out of the separator, and is arranged anyway at the rear of the multiplexing unit. This the separator output means outputs for example, transmission coded signals for every lump, or carries out operation which reads the function which performs to output.

It is desirable that the basic stream B used as the basic coded signal has 1/10~1/20 of the amount of a first coded signal when it is taken into consideration the quality and the access speed of pictures. Moreover, although it is made for the extended stream used as extended coded signals to serve as the respectively equal amount of data with the form of above-mentioned embodiments, there is no necessity of making it division into equal amount.

Moreover, although the first coefficient converting means consists of VLD1100 and the run level coefficient converter 1120, it is good also as equipment which summarized both functions to one. Furthermore, as for the basic extended hierarchy separating means, the basic extended hierarchy separator 1130 corresponds, and, in the composition of Fig. 13, the basic coded signal generating means consists of the basic quantization coefficient converter 1140, re-scanner 1160, VLC basic 1210, and coefficient information multiplexing section 1270a. In the composition of Fig. 13, the extended coded signal generating means consists of the basic quantization coefficient converter 1140, the extended quantization coefficient separator 1150, the re-scanner 1170, 1181, 1182, and 1183, the VLC prediction error 1220, VLC/F$^0$1231, VLC/F$^1$ 1232, and VLC/F$^{N-1}$1233.

Although the merging device input means is not illustrated, it is arranged in the merging device 3010, 3010a, 3010b, 3010n,3011,3015 and 3016, or it is arranged besides each merging device , and is arranged anyway at the preceding of the demultiplexing unit 3100, 3100a, 3100b, 3101, 3102, 3105and 3106. This merging device input means stores two or more streams temporarily, or carries out operation which reads the function of a processing program. Moreover, the merging device separating means is equivalent to the demultiplexing unit 3100, 3100a, 3100b, 3101, 3102, 3105, and 3106 in each figure, and the merging device merging means is equivalent to the merging unit 3300, 3300a, 3300b, 3301, 3302, 3305, and 3306. Moreover, although the merging device output means is not illustrated, it is arranged in the merging device , or it is arranged out of the merging device , and is arranged anyway at the rear of the merging unit. This merging device output means outputs for example, the third coded signal for every lump, or carries out operation which reads the function which performs to output.

For example, the basic coded signal converting means consists of coefficient information separating section 3450a, VLD basic 3310, the coefficient converter 3340, and the basic quantization coefficient merging section 3370 in Fig. 15. For example, the extended coded signal converting means consists of VLD prediction error 3320, the coefficient converter 3350, the basic quantization coefficient merging section 3370, VLD E(0)3331, the coefficient converter 3361, VLD E(1)3332, the coefficient converter 3362, VLD E(N'-1)3333, the coefficient converter 3363 and the extended quantization coefficient merging section 3380 in Fig. 15. Moreover, the basic extended hierarchy merging means is equivalent to the basic extended hierarchy merging section 3390. For example, the third coefficient converting means consists of the run level coefficient converter 3410, VLC3420, and the coefficient information multiplexing section 3460 in Fig. 15.

As described above, the coded signal separating and merging system according to the present 5 invention achieves an advantage that the scalable transmission of images can be realized, and is useful as a server, transcoder, and the like for transmitting streams.

**Reference numerals**

**Fig. 1**

| | |
|---|---|
| 600 | CAMERA |
| 700 | CODER |
| 800 | CONTENTS |
| 1000 | SERVER |
| 1010 | SEPARATOR |
| 2000 | ROUTER |
| 2010 | TRANSMITTING PATH SELECTOR |
| 3000a | RECEIVER |
| 3000b | RECEIVER |
| 3000n | RECEIVER |
| 3010a | MERGING DEVICE |
| 3010b | MERGING DEVICE |
| 3010n | MERGING DEVICE |
| 3030a | DECODER |
| 3030b | DECODER |
| 3030n | DECODER |

**Fig. 2**

| | |
|---|---|
| 1010 | SEPARATOR |
| 1100 | SEPARATING UNIT |
| 1600 | MULTIPLEXING UNIT |

**Fig. 3**

| | |
|---|---|
| 1010a | SEPARATOR |
| 1100 | SEPARATING UNIT |
| 1600a | MULTIPLEXING UNIT |

**Fig. 4**

| | |
|---|---|
| 1010b | SEPARATOR |
| 1100 | SEPARATING UNIT |
| 1600b | MULTIPLEXING UNIT |

**Fig. 5**

| | |
|---|---|
| 2010 | TRANSMITTING PATH SELECTOR |

**Fig. 6**

| | |
|---|---|
| 2011 | TRANSMITTING PATH SELECTOR |

**Fig. 7**

| | |
|---|---|
| 3010 | MERGING DEVICE |
| 3020 | MERGING CONTROLLER |
| 3100 | DEMULTIPLEXING UNIT |
| 3200 | BASIC STREAM SELECTOR |
| 3300 | MERGING UNIT |

**Fig. 8**

3010x    MERGING DEVICE
3020     MERGING CONTROLLER
3100a    DEMULTIPLEXING UNIT
3200a    BASIC STREAM SELECTOR
3300     MERGING UNIT

**Fig. 9**

3010y    MERGING DEVICE
3020     MERGING CONTROLLER
3100b    DEMULTIPLEXING UNIT
3200b    BASIC STREAM SELECTOR
3300     MERGING UNIT

**Fig. 13**

1100a            SEPARATING UNIT
1120 ( run, level)    (RUN, LEVEL) COEFFICIENT CONVERTER
1130            BASIC, EXTENDED HIERARCHY SEPARATOR
1140            BASIC QUANTIZATION COEFFICIENT CONVERTER
1150            EXTENDED QUANTIZATION COEFFICIENT SEPARATOR
1160            RE-SCANNER
1170            RE-SCANNER
1181            RE-SCANNER
1182            RE-SCANNER
1183            RE-SCANNER
1210            VLC BASIC
1220            VLC PREDICTION ERROR
1260            COEFFICIENT INFORMATION SEPARATING SECTION
1270a           COEFFICIENT INFORMATION MULTIPLEXING SECTION

**Fig. 15**

3300a            MERGING UNIT
3310            VLD BASIC
3320            VLD PREDICTION ERROR
3340            COEFFICIENT CONVERTER
3350            COEFFICIENT CONVERTER
3361            COEFFICIENT CONVERTER
3362            COEFFICIENT CONVERTER
3363            COEFFICIENT CONVERTER
3370            BASIC QUANTIZATION COEFFICIENT MERGING SECTION
3380            EXTENDED QUANTIZATION COEFFICIENT MERGING SECTION
3390            BASIC, EXTENDED HIERARCHY MERGING SECTION
3410 (run, level)    (RUN, LEVEL) COEFFICIENT CONVERTER
3450a           COEFFICIENT INFORMATION SEPARATING SECTION
3460            COEFFICIENT INFORMATION MULTIPLEXING SECTION

**Fig. 18**

1100b            SEPARATING UNIT
1120 (run, level)    (RUN, LEVEL) COEFFICIENT CONVERTER
1130            BASIC, EXTENDED HIERARCHY SEPARATOR
1140            BASIC QUANTIZATION COEFFICIENT CONVERTER
1150            EXTENDED QUANTIZATION COEFFICIENT SEPARATOR
1160            RE-SCANNER
1170            RE-SCANNER
1181            RE-SCANNER

| | |
|---|---|
| 1182 | RE-SCANNER |
| 1183 | RE-SCANNER |
| 1210 | VLC BASIC |
| 1220 | VLC PREDICTION ERROR |
| 1240 | BASIC QUANTIZATION COEFFICIENT MULTIPLEXER |
| 1260 | COEFFICIENT INFORMATION SEPARATING SECTION |
| 1270b | COEFFICIENT INFORMATION MULTIPLEXING SECTION |

**Fig. 19**

| | |
|---|---|
| 03300b | MERGING UNIT |
| 3310 | VLD BASIC |
| 3320 | VLD PREDICTION ERROR |
| 3340 | COEFFICIENT CONVERTER |
| 3350 | COEFFICIENT CONVERTER |
| 3361 | COEFFICIENT CONVERTER |
| 3362 | COEFFICIENT CONVERTER |
| 3363 | COEFFICIENT CONVERTER |
| 3370 | BASIC QUANTIZATION COEFFICIENT MERGING SECTION |
| 3380 | EXTENDED QUANTIZATION COEFFICIENT MERGING SECTION |
| 3390 | BASIC, EXTENDED HIERARCHY MERGING SECTION |
| 3410 (run, level | (RUN, LEVEL) COEFFICIENT CONVERTER |
| 3430 | BASIC QUANTIZATION COEFFICIENT SEPARATING SECTION |
| 3450a | COEFFICIENT INFORMATION SEPARATING SECTION |
| 3460 | COEFFICIENT INFORMATION MULTIPLEXING SECTION |

**Fig. 20**

| | |
|---|---|
| 1011 | SEPARATOR |
| 1101 | SEPARATING UNIT |
| 1601 | MULTIPLEXER |

**Fig. 21**

| | |
|---|---|
| 1011 | SEPARATOR |
| 1101 | SEPARATING UNIT |
| 1601 | MULTIPLEXER |

**Fig. 22**

| | |
|---|---|
| 2012 | TRANSMITTING PATH SELECTOR |

**Fig. 24**

| | |
|---|---|
| 3011 | MERGING DEVICE |
| 3101 | DEMULTIPLEXING UNIT |
| 3020 | MERGING CONTROLLER |
| 103201 | BASIC STREAM SELECTOR |
| 3301 | MERGING UNIT |

**Fig. 25**

| | |
|---|---|
| 3012 | MERGING DEVICE |
| 153102 | DEMULTIPLEXING UNIT |
| 3020 | MERGING CONTROLLER |
| 3202 | BASIC STREAM SELECTOR |
| 3302 | MERGING UNIT |

**Fig. 26**

| | |
|---|---|
| 1015 | SEPARATOR |
| 1105 | SEPARATING UNIT |
| 1605 | MULTIPLEXING UNIT |

**Fig. 27**

| | |
|---|---|
| 1015 | SEPARATOR |
| 1105 | SEPARATING UNIT |
| 1605 | MULTIPLEXING UNIT |

**Fig. 28**

| | |
|---|---|
| 2012 | TRANSMITTING PATH SELECTOR |

**Fig. 30**

| | |
|---|---|
| 3015 | MERGING DEVICE |
| 53020 | MERGING CONTROLLER |
| 3105 | DEMULTIPLEXING UNIT |
| 3205 | BASIC STREAM SELECTOR |
| 3305 | MERGING UNIT |

**Fig. 31**

| | |
|---|---|
| 3016 | MERGING DEVICE |
| 3020 | MERGING CONTROLLER |
| 3106 | DEMULTIPLEXING UNIT |
| 53206 | BASIC STREAM SELECTOR |
| 3306 | MERGING UNIT |

**Fig. 32**

| | |
|---|---|
| 1100c | SEPARATING UNIT |
| 01120 (run, level) | (RUN, LEVEL) COEFFICIENT CONVERTER |
| 1130c | BASIC, EXTENDED HIERARCHY SEPARATOR |
| 1140c | BASIC QUANTIZATION COEFFICIENT CONVERTER |
| 1150c | EXTENDED QUANTIZATION COEFFICIENT SEPARATOR |
| 1160 | RE-SCANNER |
| 1170 | RE-SCANNER |
| 1181 | RE-SCANNER |
| 1182 | RE-SCANNER |
| 1183 | RE-SCANNER |
| 1210 | VLC BASIC |
| 1220c | VLC PREDICTION ERROR |
| 1260 | COEFFICIENT INFORMATION SEPARATING SECTION |
| 1270a | COEFFICIENT INFORMATION MULTIPLEXING SECTION |

**Fig. 35**

| | |
|---|---|
| 3300c | MERGING UNIT |
| 3310 | VLD BASIC |
| 3320c | VLD PREDICTION ERROR |
| 3340 | COEFFICIENT CONVERTER |
| 3350 | COEFFICIENT CONVERTER |
| 3361 | COEFFICIENT CONVERTER |
| 3362 | COEFFICIENT CONVERTER |

EP 1 531 628 A2

| 53363 | COEFFICIENT CONVERTER |
| 3370c | BASIC QUANTIZATION COEFFICIENT MERGING SECTION |
| 3380c | EXTENDED QUANTIZATION COEFFICIENT MERGING SECTION |
| 3390 | BASIC, EXTENDED HIERARCHY MERGING SECTION |
| 3410 (run, level) | (RUN, LEVEL) COEFFICIENT CONVERTER |
| 3450a | COEFFICIENT INFORMATION SEPARATING SECTION |
| 3460 | COEFFICIENT INFORMATION MULTIPLEXING SECTION |

**Fig. 36**

| 1100d | SEPARATING UNIT |
| 1260 | COEFFICIENT INFORMATION SEPARATING SECTION |
| 1120 (run, level) | (RUN, LEVEL) COEFFICIENT CONVERTER |
| 1130d | BASIC, EXTENDED HIERARCHY SEPARATOR |
| 1140d | BASIC QUANTIZATION COEFFICIENT CONVERTER |
| 1160 | RE-SCANNER |
| 1210 | VLC BASIC |
| 1170 | RE-SCANNER |
| 1220d | VLC PREDICTION ERROR |
| 1240 | BASIC QUANTIZATION COEFFICIENT MULTIPLEXER |
| 1270b | COEFFICIENT INFORMATION MULTIPLEXING SECTION |
| 1150d | EXTENDED QUANTIZATION COEFFICIENT SEPARATOR |
| 1181 | RE-SCANNER |
| 1182 | RE-SCANNER |
| 1183 | RE-SCANNER |

**Fig. 37**

| 3300d | MERGING UNIT |
| 3310 | VLD BASIC |
| 3320 | VLD PREDICTION ERROR |
| 3340 | COEFFICIENT CONVERTER |
| 3350 | COEFFICIENT CONVERTER |
| 3361 | COEFFICIENT CONVERTER |
| 3362 | COEFFICIENT CONVERTER |
| 3363 | COEFFICIENT CONVERTER |
| 3370d | BASIC QUANTIZATION COEFFICIENT MERGING SECTION |
| 3380d | EXTENDED QUANTIZATION COEFFICIENT MERGING SECTION |
| 3390 | BASIC, EXTENDED HIERARCHY MERGING SECTION |
| 3410 (run, level) | (RUN, LEVEL) COEFFICIENT CONVERTER |
| 3430 | BASIC QUANTIZATION COEFFICIENT SEPARATING SECTION |
| 3450a | COEFFICIENT INFORMATION SEPARATING SECTION |
| 3460 | COEFFICIENT INFORMATION MULTIPLEXING SECTION |

**Fig. 38**

| 53 | INVERSE QUANTIZER |
| 55 | QUANTIZER |
| 59 | RATE CONTROLLER |

**Fig. 39**

| A1 | INITIALIZE n = 1 |
| A2 | CALCULATE INDICATORS Xi, Xp, Xb OF COMPLEXITY OF IMAGES |
| A3 | CALCULATE ASSIGNED CODE AMOUNT Ti, Tp, Tb FOR EACH PICTURE IN GOP |
| A5 | INITIALIZE ASSIGNED CODE AMOUNT R FOR UNCODED PICTURE IN GOP |
| A6 | UPDATE ASSIGNED CODE AMOUNT R FOR UNCODED PICTURE IN GOP |
| A8 | CALCULATE OCCUPANCY AMOUNT OF VIRTUAL BUFFER WHEN CODING J-TH MACROBLOCK |

47

A9      CALCULATE QUANTIZATION SCALE CODE FOR J-TH MACROBLOCK
A10     CODE J-TH MB END

**Fig. 40**

55      QUANTIZER
61      DELAY CIRCUIT
63      BIT RATE PERCENTAGE CALCULATOR
65      INPUT CODE AMOUNT INTEGRATOR
67      DIFFERENTIAL CODE AMOUNT CALCULATOR
69      TARGET OUTPUT CODE AMOUNT UPDATING UNIT
71      QUANTIZATION SCALE CODE CALCULATOR

**Fig. 41**

B1      INITIALIZE n = 1
B2      CALCULATE INPUT/OUTPUT BIT RATE PERCENTAGE FROM INPUT BIT RATE VALUE AND OUTPUT
        BIT RATE VALUE
B3      CALCULATE DIFFERENTIAL CODE AMOUNT BETWEEN RELEVANT TARGET OUTPUT CODE
        AMOUNT AND ACTUAL OUTPUT CODE AMOUNT
B4      INTEGRATE RELEVANT PICTURE CODE AMOUNT IN INPUT BIT STREAM
B5      CALCULATE RELEVANT PICTURE TARGET OUTPUT CODE AMOUNT
B7      CALCULATE OCCUPANCY AMOUNT OF VIRTUAL BUFFER WHEN CODING J-TH MACROBLOCK
B8      CALCULATE QUANTIZATION SCALE CODE FOR J-TH MACROBLOCK
B9      CODE J-TH MB

**Fig. 42**

53      INVERSE QUANTIZER
55      QUANTIZER
63      BIT RATE PERCENTAGE CALCULATOR
67      DIFFERENTIAL CODE AMOUNT CALCULATOR
83      TARGET OUTPUT CODE AMOUNT UPDATING UNIT
85      QUANTIZATION SCALE CODE CALCULATOR

**Fig. 43**

C1      INITIALIZE n = 1
C2      CALCULATE INPUT/OUTPUT BIT RATE PERCENTAGE FROM INPUT BIT RATE VALUE AND OUTPUT
        BIT RATE VALUE
C3      CALCULATE DIFFERENTIAL CODE AMOUNT BETWEEN RELEVANT TARGET OUTPUT CODE
        AMOUNT AND ACTUAL OUTPUT CODE AMOUNT
C4      OBTAIN RELEVANT PICTURE INPUT CODE AMOUNT INFORMATION BY DECODING INPUT BIT
        STREAM
C5      CALCULATE RELEVANT PICTURE TARGET OUTPUT CODE AMOUNT
C7      CALCULATE OCCUPANCY AMOUNT OF VIRTUAL BUFFER WHEN CODING J-TH MACROBLOCK
C8      CALCULATE QUANTIZATION SCALE CODE FOR J-TH MACROBLOCK
C9      CODE J-TH MB

**Claims**

1.  A coded signal separating apparatus, comprising:

    a separator input means for inputting a first coded signal in which a first moving picture 5 constituted of a
    plurality of image information is coded;
    a separator separating means for separating the first coded signal inputted to said separator input means into
    a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal;

a separator multiplexing means for optionally combining and multiplexing the basic coded signal with the plurality of extended coded signals, which are separated by said separator separating means, to generate a plurality of transmission coded signals; and

a separator output means for outputting the plurality of transmission coded signals multiplexed by said separator multiplexing means.

2. The coded signal separating apparatus according to claim 1,
wherein said separator separating means comprises:

a first coefficient converting means for converting the first coded signal into first quantization coefficient values for reconstructing the first moving picture;

a basic extended hierarchy separating means for separating the first quantization coefficient values converted by said first coefficient converting means into basic hierarchy coefficient values of a basic hierarchy for reconstructing the second moving picture and extended hierarchy coefficient values of an extended hierarchy used when reconstructing the third moving picture;

a basic coded signal generating means for generating the basic coded signal from the extended hierarchy coefficient values; and

an extended coded signal generating means for generating the plurality of extended coded signals from the extended hierarchy coefficient values.

3. The coded signal separating apparatus according to claim 1 or claim 2,
wherein said separator multiplexing means generates each of the basic coded signal and the plurality of extended coded signals as each of the transmission coded signals.

4. The coded signal separating apparatus according to claim 1 or claim 2,
wherein said separator multiplexing means multiplexes the basic coded signal to each of the plurality of extended coded signals to generate the plurality of transmission coded signals.

5. The coded signal separating apparatus according to claim 1 or claim 2,
wherein said separator multiplexing means multiplexes the plurality of extended coded signals to generate the plurality of transmission coded signals each having a different code amount.

6. The coded signal separating apparatus according to claim 2,
wherein said basic extended hierarchy separating means of said separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,
wherein said separator separating means further comprises:

a basic quantization coefficient converting means for converting the basic hierarchy coefficient values separated by said basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and

an extended quantization coefficient separating means for separating the plurality of extended hierarchy coefficient values separated by said basic extended hierarchy separating means to generate a plurality of extended quantization coefficient sequences each constituted of the respective separated extended hierarchy coefficient values,

wherein said basic coded signal generating means of said separator separating means codes a basic quantization coefficient sequence constituted of the basic quantization coefficient values converted by said basic quantization coefficient converting means to generate the basic coded signal, and
wherein said extended coded signal generating means of said separator separating means codes a prediction error coefficient sequence constituted of the prediction error coefficient values converted by said basic quantization coefficient converting means and the plurality of extended quantization coefficient sequences separated by said extended quantization coefficient separating means respectively to generate the plurality of extended coded signals.

**7.** The coded signal separating apparatus according to claim 6,
wherein said extended coded signal generating means of said separator separating means codes quantization parameter reconstructing information, which is for reconstructing the input quantization parameter from the re-quantization parameter, within each of the plurality of extended coded signals.

**8.** The coded signal separating apparatus according to claim 6 or claim 7, further comprising:

a separating information input means for inputting extended hierarchy separating pattern information defining a method of separating the extended hierarchy coefficient values into the plurality of extended quantization coefficient sequences,

wherein said extended quantization coefficient separating means of said separator separating means separates the extended hierarchy coefficient values separated by said basic extended hierarchy separating means according to the extended hierarchy separating pattern information inputted by said separating information input means into the plurality of extended quantization coefficient sequences.

**9.** The coded signal separating apparatus according to claim 2,
wherein said basic extended hierarchy separating means of said separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,
wherein said separator separating means further comprises:

a basic quantization coefficient converting means for converting the basic hierarchy coefficient 5 values separated by said basic extended hierarchy separating means into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and
an extended quantization coefficient separating means for separating the plurality of extended hierarchy coefficient values separated by said basic extended hierarchy separating means to generate a plurality of extended quantization coefficient sequences each constituted of the respective separated extended hierarchy coefficient values,

wherein said basic coded signal generating means of said separator separating means comprises:

a basic quantization coefficient sequence coding means for coding a basic quantization coefficient sequence constituted of the basic quantization coefficient values converted by said basic quantization coefficient converting means to generate a basic quantization coded sequence;
a prediction error coefficient sequence coding means for coding a prediction error coefficient sequence constituted of the prediction error coefficient values converted by said basic quantization coefficient converting means to generate a prediction error coded sequence; and
a basic coded signal multiplexing means for multiplexing the basic quantization coded sequence and the prediction error coded sequence to generate the basic coded signal, and

wherein said extended coded signal generating means of said separator separating means codes the plurality of extended quantization coefficient sequences separated by said extended quantization coefficient separating means respectively to generate the plurality of extended coded signals.

**10.** The coded signal separating apparatus according to claim 9, further comprising:

a separating information input means for inputting extended hierarchy separating pattern information defining a method of separating the extended hierarchy coefficient values into the plurality of extended quantization coefficient sequences,

wherein said extended quantization coefficient separating means of said separator separating means separates the extended hierarchy coefficient values separated by said basic extended hierarchy 5 separating means according to the extended hierarchy separating pattern information inputted by said separating information input means into the plurality of extended quantization coefficient sequences.

**11.** A coded signal merging apparatus, comprising:

a merging device input means for inputting a plurality of independent transmission coded signals 0 in which a first moving picture constituted of a plurality of image information is coded;

a merging device separating means for separating the plurality of transmission coded signals inputted to said merging device input means into a basic coded signal having a smaller code amount than a first coded signal and configured to reconstruct a second moving picture, which is a pseudo moving picture of the first moving picture, and a plurality of extended coded signals which are used with the basic coded 5 signal to reconstruct a third moving picture closer to the first moving picture than the second moving picture reconstructed with the basic coded signal;

a merging device merging means for merging the basic coded signal with the plurality of extended coded signals, which are separated by said merging device separating means, to generate a third coded signal for reconstructing the third moving picture; and

a merging device output means for outputting the third coded signal merged by said merging device merging means.

**12.** The coded signal merging apparatus according to claim 11,
wherein said merging device merging means comprises:

a basic coded signal converting means for converting the basic coded signal into basic hierarchy coefficient values of a basic hierarchy for reconstructing the second moving picture;

an extended coded signal converting means for converting the plurality of extended coded signals into extended hierarchy coefficient values of an extended hierarchy used when reconstructing the third moving picture;

a basic extended hierarchy merging means for merging the basic hierarchy coefficient values converted by said basic coded signal converting means with the extended hierarchy coefficient values converted by said extended coded signal converting means to generate third quantization coefficient values; and

a third coefficient converting means for converting the third quantization coefficient values merged by said basic extended hierarchy merging means into the third coded signal.

**13.** The coded signal merging apparatus according to claim 11 or claim 12,
wherein said merging device separating means separates the plurality of transmission coded signals into the plurality of basic coded signals in which the same information is coded and the plurality of extended coded signals.

**14.** The coded signal merging apparatus according to claim 13, further comprising:

a signal error notifying means for selecting a basic coded signal having less received signal errors from a plurality of basic coded signals separated by said merging device separating means and notifying the selected basic coded signal to said merging device merging means,

wherein said merging device merging means selects the basic coded signal notified by said signal error notifying means and merges the selected basic coded signal and the plurality of extended coded signals. 0

**15.** The coded signal merging apparatus according to claim I or claim 12, further comprising:

a merging control means for receiving error correcting status information from an error detector on a network and notifying the error correcting status information to said merging device merging means,

wherein said merging device merging means merges the basic coded signal and the plurality of 5 extended coded signals based on the error correcting status information notified by said merging control means.

**16.** The coded signal merging apparatus according to claim 11 or claim 12, further comprising:

a coded signal decoding apparatus for inputting the third coded signal and decoding the third coded signal to reproduce the third moving picture.

**17.** A coded signal separating and merging system, comprising:

a separator for separating a first coded signal in which a first moving picture constituted of a plurality of image information is coded into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal, and reconstructing and converting the separated signals into a plurality of transmission coded signals to be transmitting to a network;
a transmitting path selector for inputting the plurality of transmission coded signals, selecting the transmission coded signal to be transmitted, and transmitting the selected transmission coded signal; and
a merging device for inputting the plurality of transmission coded signals transmitted by said transmitting path selector and merging a third coded signal for reconstructing the third moving picture,

wherein said separator comprises:

a separator input means for inputting the first coded signal;
a separator separating means for separating the first coded signal inputted to said separator input means into the basic coded signal and the plurality of extended coded signals;
a separator multiplexing means for optionally combining and multiplexing the basic coded signal with the plurality of extended coded signals, which are separated by said separator separating means, to generate the plurality of transmission coded signals; and
a separator output means for outputting the plurality of transmission coded signals multiplexed by said separator multiplexing means, and

wherein said merging device comprises:

a merging device input means for inputting the plurality of transmission coded signals;
a merging device separating means for separating the plurality of transmission coded signals inputted to said merging device input means into the basic coded signal and the plurality of extended coded signals;
a merging device merging means for merging the basic coded signal with the plurality of extended coded signals, which are separated by said merging device separating means, to generate a third coded signal for reconstructing the third moving picture; and
a merging device output means for outputting the third coded signal merged by said merging device merging means.

**18.** The coded signal separating and merging system according to claim 17,
wherein said separator separating means comprises:

a first coefficient converting means for converting the first coded signal into first quantization coefficient values for reconstructing the first moving picture;
a basic extended hierarchy separating means for separating the first quantization coefficient values converted by said first coefficient converting means into basic hierarchy coefficient values of a basic hierarchy for reconstructing the second moving picture and extended hierarchy coefficient values of an extended hierarchy used when reconstructing the third moving picture;
a basic coded signal generating means for generating the basic coded signal from the extended hierarchy coefficient values; and
an extended coded signal generating means for generating the plurality of extended coded signals from the extended hierarchy coefficient values, and

wherein said merging device merging means comprises:

a basic coded signal converting means for converting the basic coded signal into the basic hierarchy coefficient values of the basic hierarchy;

an extended coded signal converting means for converting the plurality of extended coded signals into the extended hierarchy coefficient values of the extended hierarchy;

a basic extended hierarchy merging means for merging the basic hierarchy coefficient values converted by said basic coded signal converting means with the extended hierarchy coefficient values converted by said extended coded signal converting means to generate third quantization coefficient values; and

a third coefficient converting means for converting the third quantization coefficient values merged by said basic extended hierarchy merging means into the third coded signal.

19. The coded signal separating and merging system according to claim 18,

wherein, in said separator,

said separator separating means further comprises a basic quantization coefficient converting means for converting the basic hierarchy coefficient values separated by said basic extended hierarchy separating means into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values,

said basic coded signal generating means of said separator separating means comprises a basic quantization coefficient sequence coding means for inputting the basic quantization coefficient values and coding the basic quantization coefficient values to a basic quantization coefficient coded sequence which is the basic coded signal, and

said extended coded signal generating means of said separator separating means inputs the prediction error coefficient values converted by said basic quantization coefficient converting means and the extended hierarchy coefficient values separated by said basic extended hierarchy separating means to generate the plurality of extended coded signals from the prediction error coefficient values and the extended hierarchy coefficient values, and

wherein, in said merging device, said merging device separating means separates the plurality of transmission coded signals into the basic quantization coded sequence, a prediction error coded sequence in which the prediction error coefficient values are coded, and an extended hierarchy coded sequence in which the extended hierarchy coefficient values are coded,

said basic coded signal converting means of said merging device merging means comprises a basic quantization coefficient sequence converting means for inputting the basic quantization coded sequence and converting the basic quantization coded sequence into the basic quantization coefficient values,

said extended coded signal converting means of said merging device merging means comprises:

a prediction error coefficient sequence converting means for converting the prediction error coded sequence into the prediction error coefficient values; and

a plurality of extended hierarchy coefficient sequence converting means for converting the plurality of extended hierarchy coded sequences into the extended hierarchy coefficient values respectively,

said merging device merging means further comprises a basic hierarchy coefficient merging means for converting the basic quantization coefficient values, the re-quantization parameter, and the prediction error coefficient values into the basic hierarchy coefficient values, and

said basic extended hierarchy merging means of said merging device merging means merges the basic hierarchy coefficient values and the extended hierarchy coefficient values to generate the third quantization coefficient values.

20. The coded signal separating and merging system according to claim 18,

wherein, in said separator,

said separator separating means further comprises a basic quantization coefficient converting means for converting the basic hierarchy coefficient values separated by said basic extended hierarchy 5 separating means into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values,

said basic coded signal generating means of said separator separating means comprises:

a basic quantization coefficient sequence coding means for inputting the basic quantization coefficient values and coding the basic quantization coefficient values to a basic quantization coded sequence;

a prediction error coefficient sequence coding means for inputting the prediction error coefficient values and coding the prediction error coefficient values to a prediction error coded sequence; and
5 a basic coded signal merging means for merging the basic quantization coded sequence with the prediction error coded sequence to generate the basic coded signal, and

wherein, in said merging device, said merging device merging means further comprises a basic coded signal separating means for inputting the basic coded signal and separating the basic coded signal into the basic quantization coded sequence and the prediction error coded sequence,
said basic coded signal converting means of said merging device merging means comprises:

a basic quantization coefficient sequence converting means for inputting the basic quantization coded sequence and converting the basic quantization coded sequence into the basic quantization coefficient values; and
a prediction error coefficient sequence converting means for inputting the prediction error coded sequence and converting the prediction error coded sequence into the prediction error coefficient values,
said merging device merging means further comprises a basic hierarchy coefficient merging means for converting the basic quantization coefficient values, the re-quantization parameter, and the prediction error coefficient values into the basic hierarchy coefficient values, and
said basic extended hierarchy merging means of said merging device merging means merges the basic hierarchy coefficient values and the extended hierarchy coefficient values to generate the third quantization coefficient values.

21. The coded signal separating and merging system according to claim 18,
wherein said basic extended hierarchy separating means of said separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,
wherein said separator separating means further comprises:

a basic quantization coefficient converting means for converting the basic hierarchy coefficient values separated by said basic extended hierarchy separating means into basic quantization coefficient values, 5 which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and
an extended quantization coefficient separating means for separating the plurality of extended hierarchy coefficient values separated by said basic extended hierarchy separating means to generate a plurality of extended quantization coefficient sequences each constituted of the respective separated extended hierarchy coefficient values,

wherein said basic coded signal generating means of said separator separating means codes a basic quantization coefficient sequence constituted of the basic quantization coefficient values converted by said basic quantization coefficient converting means to generate the basic coded signal, wherein said extended coded signal generating means of said separator separating means codes a prediction error coefficient sequence constituted of the prediction error coefficient values converted by said basic quantization coefficient converting means and the plurality of extended quantization coefficient sequences separated by said extended quantization coefficient separating means respectively to generate the plurality of extended coded signals, and
wherein, in said merging device,
said merging device separating means separates the plurality of transmission coded signals into the basic coded signal, an extended coded signal in which the prediction error coefficient sequence is coded, and an extended coded signal in which the extended quantization coefficient sequence is coded,
said basic coded signal converting means of said merging device merging means comprises a basic quantization coefficient sequence converting means for converting the basic coded signal into the basic quantization coefficient sequence,
said extended coded signal converting means of said merging device merging means comprises:

a prediction error coefficient sequence converting means for converting the extended coded signal in which the prediction error coefficient sequence is coded into the prediction error coefficient sequence; and
a plurality of extended quantization coefficient sequence converting means for respectively converting the plurality of extended coded signals in which the extended quantization coefficient sequence is coded into the extended quantization coefficient sequence,
said merging device merging means further comprises:

a basic quantization coefficient merging means for merging a sequence of the basic hierarchy coefficient values from the basic quantization coefficient sequence, the re-quantization parameter, and the prediction error coefficient sequence; and
an extended quantization coefficient merging means for merging a sequence of the extended hierarchy coefficient values from the plurality of extended quantization coefficient sequences, and

said basic extended hierarchy merging means of said merging device merging means merges the sequence of the basic hierarchy coefficient values and the sequence of the extended hierarchy coefficient values to generate the third quantization coefficient values.

22. The coded signal separating and merging system according to claim 18,
wherein said basic extended hierarchy separating means of said separator separating means separates the basic hierarchy coefficient values and the extended hierarchy coefficient values according to the value of an input quantization parameter for quantizing coefficient values of the first moving picture to the first quantization coefficient values and the value of a re-quantization parameter for re-quantizing the coefficient values of the first moving picture,
wherein said separator separating means further comprises:

a basic quantization coefficient converting means for converting the basic hierarchy coefficient values separated by said basic extended hierarchy separating means into basic quantization coefficient values, 5 which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and
an extended quantization coefficient separating means for separating the plurality of extended hierarchy coefficient values separated by said basic extended hierarchy separating means to generate a plurality of extended quantization coefficient sequences each constituted of the respective separated extended hierarchy coefficient values,

wherein said basic coded signal generating means of said separator separating means comprises:

a basic quantization coefficient sequence coding means for coding a basic quantization coefficient sequence constituted of the basic quantization coefficient values converted by said basic quantization coefficient converting means to generate a basic quantization coded sequence;
a prediction error coefficient sequence coding means for coding a prediction error coefficient sequence constituted of the prediction error coefficient values converted by said basic quantization coefficient converting means to generate a prediction error coded sequence; and
a basic coded signal multiplexing means for multiplexing the basic quantization coded sequence and the prediction error coded sequence to generate the basic coded signal,

wherein said extended coded signal generating means of said separator separating means codes the plurality of extended quantization coefficient sequences separated by said extended quantization coefficient separating means respectively to generate the plurality of extended coded signals, and
wherein, in said merging device,
said basic coded signal converting means of said merging device merging means comprises:

a basic quantization coefficient separating means for demultiplexing the basic quantization coded sequence and the prediction error coded sequence from the basic coded signal;
a basic quantization coefficient sequence converting means for converting the basic quantization coded sequence separated by said basic quantization coefficient separating means into the basic quantization coefficient sequence; and
a prediction error coefficient sequence converting means for converting the prediction error coded 5 sequence separated by said basic quantization coefficient separating means into the prediction error coefficient sequence,

said extended coded signal converting means of said merging device merging means comprises a plurality of extended quantization coefficient sequence converting means for converting the plurality of extended coded signals into the extended quantization coefficient sequences, respectively,

0 said merging device merging means further comprises:

a basic quantization coefficient merging means for merging a sequence of the basic hierarchy coefficient values from the basic quantization coefficient sequence, the re-quantization parameter, and the prediction error coefficient sequence; and

an extended quantization coefficient merging means for merging a sequence of the extended 5 hierarchy coefficient values from the plurality of extended quantization coefficient sequences, and

said basic extended hierarchy merging means of said merging device merging means merges the sequence of the basic hierarchy coefficient values and the sequence of the extended hierarchy coefficient values to generate the third quantization coefficient values.

23. The coded signal separating and merging system according to claim 17 or claim 18,

wherein said separator multiplexing means multiplexes the basic coded signal to each of the plurality of extended coded signals to generate the plurality of transmission coded signals,

wherein said merging device separating means separates the plurality of transmission coded signals into the plurality of basic coded signals and the plurality of extended coded signals, and

wherein said merging device merging means selects one basic coded signal from the plurality of basic coded signals separated by said merging device separating means and merges the selected basic coded signal and the plurality of extended coded signals.

24. The coded signal separating and merging system according to claim 17 or claim 18,

0 wherein said separator multiplexing means multiplexes the plurality of extended coded signals to generate the plurality of transmission coded signals each having a different code amount, and

wherein said merging device separating means separates the plurality of transmission coded signals into the basic coded signal and the plurality of extended coded signals.

25. The coded signal separating and merging system according to claim 21,

wherein said extended coded signal generating means of said separator separating means codes quantization parameter reconstructing information, which is for reconstructing the input quantization parameter from the re-quantization parameter, within each of the plurality of extended coded signals,

wherein said extended coded signal converting means of said converting device converting means decodes the quantization parameter reconstructing information from the extended coded signal,

wherein said basic quantization coefficient merging means of said merging device merging means merges the sequence of the basic hierarchy coefficient values according to the quantization parameter 5 reconstructing information, and

wherein said third coefficient converting means of said converting device converting means codes an input quantization parameter, which is reconstructed according to the re-quantization parameter and the quantization parameter reconstructing information, within the third coded signal.

26. The coded signal separating and merging system according to claim 23, further comprising:

a signal error notifying means for selecting a basic coded signal having less received signal errors from a plurality of basic coded signals separated by said merging device separating means and notifying the selected basic coded signal to said merging device merging means,.

wherein said merging device merging means selects the basic coded signal notified by said signal 5 error notifying means and merges the selected basic coded signal and the plurality of extended coded signals.

27. The coded signal separating and merging system according to claim 24,

wherein said separator multiplexing means generates the transmission coded signals so that a code amount ratio of the plurality of transmission coded signals each having a different code amount becomes power of 2.

**28.** The coded signal separating and merging system according to claim 17 or claim 18, further comprising:

a merging control means for receiving error correcting status information from an error detector on a network and notifying the error correcting status information to said merging device merging means,

wherein said merging device merging means merges the basic coded signal and the plurality of extended coded signals based on the error correcting status information notified by said merging control means.

**29.** The coded signal separating and merging system according to any one of claim 17, claim 18, claim 21 and claim 22, further comprising:

a coded signal decoding apparatus for inputting the third coded signal from said coded signal merging device and decoding the third coded signal to reproduce the third moving picture.

**30.** A method of separating a coded signal, comprising:

a separator input step of inputting a first coded signal in which a first moving picture constituted of a plurality of image information is coded;
a separator separating step of separating the first coded signal inputted in said separator input step into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal;
a separator multiplexing step of optionally combining and multiplexing the basic coded signal with the plurality of extended coded signals, which are separated in said separator separating step, to generate a plurality of transmission coded signals; and
a separator output step of outputting the plurality of transmission coded signals multiplexed in said separator multiplexing step.

**31.** The method of separating a coded signal according to claim 30,
wherein said separator separating step comprises:

a first coefficient converting step of converting the first coded signal into first quantization coefficient values for reconstructing the first moving picture;
a basic extended hierarchy separating step of separating the first quantization coefficient values converted in said first coefficient converting step into basic hierarchy coefficient values of a basic hierarchy for reconstructing the second moving picture and extended hierarchy coefficient values of an extended hierarchy used when reconstructing the third moving picture;
a basic coded signal generating step of generating the basic coded signal from the extended hierarchy coefficient values; and
an extended coded signal generating step of generating the plurality of extended coded signals from the extended hierarchy coefficient values.

**32.** The method of separating a coded signal according to claim 31,
wherein, in said basic extended hierarchy separating step in said separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,
wherein said separator separating step further comprises:

a basic quantization coefficient converting step of converting the basic hierarchy coefficient values separated in said basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and
an extended quantization coefficient separating step of separating the plurality of extended hierarchy coefficient values separated in said basic extended hierarchy separating step to generate a plurality of extended quantization coefficient sequences each constituted of the respective separated extended hierarchy coefficient values,

wherein, in said basic coded signal generating step in said separator separating step, a basic quantization coefficient sequence constituted of the basic quantization coefficient values converted in said basic quantization coefficient converting step is coded to generate the basic coded signal, and

wherein, in said extended coded signal generating step in said separator separating step, a prediction error coefficient sequence constituted of the prediction error coefficient values converted in said basic quantization coefficient converting step and the plurality of extended quantization coefficient sequences separated in said extended quantization coefficient separating step are coded respectively to generate the plurality of extended coded signals.

33. The method of separating a coded signal according to claim 31,

wherein, in said basic extended hierarchy separating step in said separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

wherein said separator separating step further comprises:

a basic quantization coefficient converting step of converting the basic hierarchy coefficient values separated in said basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and
an extended quantization coefficient separating step of separating the plurality of extended hierarchy coefficient values separated in said basic extended hierarchy separating step to generate a plurality of extended quantization coefficient sequences each constituted of the respective separated extended hierarchy coefficient values,

wherein said basic coded signal generating step in said separator separating step comprises:

a basic quantization coefficient sequence coding step of coding a basic quantization coefficient sequence constituted of the basic quantization coefficient values converted in said basic quantization coefficient converting step to generate a basic quantization coded sequence;
a prediction error coefficient sequence coding step of coding a prediction error coefficient sequence constituted of the prediction error coefficient values converted in said basic quantization coefficient converting step to generate a prediction error coded sequence; and
a basic coded signal multiplexing step of multiplexing the basic quantization coded sequence and the prediction error coded sequence to generate the basic coded signal, and

wherein, in said extended coded signal generating step in said separator separating step, the plurality of extended quantization coefficient sequences separated in said extended quantization coefficient separating step are coded respectively to generate the plurality of extended coded signals.

34. A method of merging a coded signal, comprising:

a merging device input step of inputting a plurality of independent transmission coded signals in which a first moving picture constituted of a plurality of image information is coded;
a merging device separating step of separating the plurality of transmission coded signals inputted in said merging device input step into a basic coded signal having a smaller code amount than a first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal;
a merging device merging step of merging the basic coded signal with the plurality of extended coded signals, which are separated in said merging device separating step, to generate a third coded signal for reconstructing the third moving picture; and

a merging device output step of outputting the third coded signal merged in said merging device merging step.

**35.** The method of merging a coded signal according to claim 34,

wherein, in said merging device separating step, the plurality of transmission coded signals are separated into the plurality of basic coded signals in which the same information is coded and the plurality of extended coded signals,

further comprising a signal error notifying step of selecting a basic coded signal having less received signal errors from a plurality of basic coded signals separated in said merging device separating step and notifying the selected basic coded signal to said merging device merging step, and

wherein, in said merging device merging step, the basic coded signal notified in said signal error notifying step is selected and merged with the plurality of extended coded signals.

**36.** The method of merging a coded signal according to claim 34 or claim 35, further comprising:

a merging control step of receiving error correcting status information from an error detector on a network and notifying the error correcting status information to said merging device merging step,

wherein, in said merging device merging step, the basic coded signal is merged with the plurality of extended coded signals based on the error correcting status information notified in said merging control step.

**37.** A method of separating and merging a coded signal, comprising:

a separator controlling step of controlling a separator for separating a first coded signal in which a first moving picture constituted of a plurality of image information is coded into a basic coded signal having a smaller code amount than the first coded signal and configured to reconstruct a second moving picture, which is a pseudo moving picture of the first moving picture, and a plurality of extended coded signals which are used with the basic coded signal to reconstruct a third moving picture closer to the first moving picture than the second moving picture reconstructed with the basic coded signal, and reconstructing and converting the separated signals into a plurality of transmission coded signals to be transmitting to a network;

a transmitting path selector controlling step of controlling a transmitting path selector for inputting the plurality of transmission coded signals, selecting the transmission coded signal to be transmitted, and transmitting the selected transmission coded signal; and

a merging device controlling step of controlling a merging device for inputting the plurality of transmission coded signals transmitted by the transmitting path selector and merging a third coded signal for reconstructing the third moving picture,

wherein said separator controlling step comprises:

a separator input step of inputting the first coded signal;

a separator separating step of separating the first coded signal inputted in said separator input step into the basic coded signal and the plurality of extended coded signals;

a separator multiplexing step of optionally combining and multiplexing the basic coded signal with the plurality of extended coded signals, which are separated in said separator separating step, to generate the plurality of transmission coded signals; and

a separator output step of outputting the plurality of transmission coded signals multiplexed in said separator multiplexing step, and

wherein said merging device comprises:

a merging device input step of inputting the plurality of transmission coded signals;

a merging device separating step of separating the plurality of transmission coded signals inputted in said merging device input step into the basic coded signal and the plurality of extended coded signals;

a merging device merging step of merging the basic coded signal with the plurality of extended coded signals, which are separated in said merging device separating step, to generate a third coded signal for reconstructing the third moving picture; and

a merging device output step of outputting the third coded signal merged in said merging device merging step.

**38.** The method of separating and merging a coded signal according to claim 37,
wherein said separator separating step comprises:

a first coefficient converting step of converting the first coded signal into first quantization coefficient values for reconstructing the first moving picture;
a basic extended hierarchy separating step of separating the first quantization coefficient values converted in said first coefficient converting step into basic hierarchy coefficient values of a basic hierarchy for reconstructing the second moving picture and extended hierarchy coefficient values of an extended hierarchy used when reconstructing the third moving picture;
a basic coded signal generating step of generating the basic coded signal from the extended hierarchy coefficient values; and
an extended coded signal generating step of generating the plurality of extended coded signals from the extended hierarchy coefficient values, and

wherein said merging device merging step comprises:

a basic coded signal converting step of converting the basic coded signal into the basic hierarchy coefficient values of the basic hierarchy;
an extended coded signal converting step of converting the plurality of extended coded signals into the extended hierarchy coefficient values of the extended hierarchy;
a basic extended hierarchy merging step of merging the basic hierarchy coefficient values converted in said basic coded signal converting step with the extended hierarchy coefficient values converted in said extended coded signal converting step to generate third quantization coefficient values; and
a third coefficient converting step of converting the third quantization coefficient values merged in said basic extended hierarchy merging step into the third coded signal.

**39.** The method of separating and merging a coded signal according to claim 38,
wherein, in said separator controlling step, said separator separating step further comprises a basic quantization coefficient converting step of converting the basic hierarchy coefficient values separated in said basic extended hierarchy separating step into basic quantization coefficient values, which are re-quantization output coefficients obtained by re-quantizing the basic hierarchy coefficient values with a re-quantization parameter, and prediction error coefficient values obtained from difference between values predicted by the basic quantization coefficient values and the re-quantization parameter and the basic hierarchy coefficient values,
said basic coded signal generating step in said separator separating step comprises a basic quantization coefficient sequence coding step of inputting the basic quantization coefficient values and coding the basic quantization coefficient values to a basic quantization coefficient coded sequence which is the basic coded signal, and
in said extended coded signal generating step in said separator separating step, the prediction error coefficient values converted in said basic quantization coefficient converting step and the extended hierarchy coefficient values separated in said basic extended hierarchy separating step are inputted to generate the plurality of extended coded signals from the prediction error coefficient values and the extended hierarchy coefficient values, and
wherein, in said merging device controlling step,
in said merging device separating step, the plurality of transmission coded signals are separated into the basic quantization coded sequence, a prediction error coded sequence in which the prediction error coefficient values are coded, and an extended hierarchy coded sequence in which the extended hierarchy coefficient values are coded,
said basic coded signal converting step in said merging device merging step comprises a basic quantization coefficient sequence converting step of inputting the basic quantization coded sequence and converting the basic quantization coded sequence into the basic quantization coefficient values,
said extended coded signal converting step in said merging device merging step comprises:

a prediction error coefficient sequence converting step of converting the prediction error coded sequence into the prediction error coefficient values; and
a plurality of extended hierarchy coefficient sequence converting steps of converting the plurality of extended hierarchy coded sequences into the extended hierarchy coefficient values respectively,

said merging device merging step further comprises a basic hierarchy coefficient merging step of converting the basic quantization coefficient values, the re-quantization parameter, and the prediction error coefficient values into the basic hierarchy coefficient values, and

in said basic extended hierarchy merging step in said merging device merging step, the basic hierarchy coefficient values are merged with the extended hierarchy coefficient values to generate the third quantization coefficient values.

**40.** The method of separating and merging a coded signal according to claim 38,

wherein, in said basic extended hierarchy separating step in said separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

wherein said separator separating step further comprises:

a basic quantization coefficient converting step of converting the basic hierarchy coefficient values separated in said basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and

an extended quantization coefficient separating step of separating the plurality of extended hierarchy coefficient values separated in said basic extended hierarchy separating step to generate a plurality of extended quantization coefficient sequences each constituted of the respective separated extended hierarchy coefficient values,

wherein, in said basic coded signal generating step in said separator separating step, a basic quantization coefficient sequence constituted of the basic quantization coefficient values converted in said basic quantization coefficient converting step is coded to generate the basic coded signal,

wherein, in said extended coded signal generating step in said separator separating step, a prediction error coefficient sequence constituted of the prediction error coefficient values converted in said basic quantization coefficient converting step and the plurality of extended quantization coefficient sequences separated in said extended quantization coefficient separating step are coded respectively to generate the plurality of extended coded signals, and

wherein, in said merging device controlling step,

in said merging device separating step, the plurality of transmission coded signals are separated into the basic coded signal, an extended coded signal in which the prediction error coefficient sequence is coded, and an extended coded signal in which the extended quantization coefficient sequence is coded,

said basic coded signal converting step in said merging device merging step comprises a basic quantization coefficient sequence converting step of converting the basic coded signal into the basic quantization coefficient sequence,

said extended coded signal converting step in said merging device merging step comprises:

a prediction error coefficient sequence converting step of converting the extended coded signal in which the prediction error coefficient sequence is coded into the prediction error coefficient sequence; and

a plurality of extended quantization coefficient sequence converting steps of respectively 5 converting the plurality of extended coded signals in which the extended quantization coefficient sequence is coded into the extended quantization coefficient sequence,

said merging device merging step further comprises:

a basic quantization coefficient merging step of merging a sequence of the basic hierarchy coefficient values from the basic quantization coefficient sequence, the re-quantization parameter, and the prediction error coefficient sequence; and

an extended quantization coefficient merging step of merging a sequence of the extended hierarchy coefficient values from the plurality of extended quantization coefficient sequences, and

in said basic extended hierarchy merging step in said merging device merging step, the sequence of the basic hierarchy coefficient values are merged with the sequence of the extended hierarchy coefficient values to generate the third quantization coefficient values.

**41.** The method of separating and merging a coded signal according to claim 38,

wherein, in said basic extended hierarchy separating step in said separator separating step, the basic hierarchy coefficient values and the extended hierarchy coefficient values are separated according to the value of an input quantization parameter for quantizing coefficient values of the first moving picture to the first quantization coefficient values and the value of a re-quantization parameter for re-quantizing the coefficient values of the first moving picture,

wherein said separator separating step further comprises:

a basic quantization coefficient converting step of converting the basic hierarchy coefficient values 5 separated in said basic extended hierarchy separating step into basic quantization coefficient values, which are re-quantization output coefficients obtained by re-quantizing the basic hierarchy coefficient values with the re-quantization parameter, and prediction error coefficient values obtained from difference between predicted coefficient values, which are predicted by the basic quantization coefficient values and the re-quantization parameter, and the basic hierarchy coefficient values; and

an extended quantization coefficient separating step of separating the plurality of extended hierarchy coefficient values separated in said basic extended hierarchy separating step to generate a plurality of extended quantization coefficient sequences each constituted of the respective separated extended hierarchy coefficient values,

wherein said basic coded signal generating step in said separator separating step comprises:

a basic quantization coefficient sequence coding step of coding a basic quantization coefficient sequence constituted of the basic quantization coefficient values converted in said basic quantization coefficient converting step to generate a basic quantization coded sequence;

a prediction error coefficient sequence coding step of coding a prediction error coefficient sequence constituted of the prediction error coefficient values converted in said basic quantization coefficient converting step to generate a prediction error coded sequence; and

a basic coded signal multiplexing step of multiplexing the basic quantization coded sequence and the prediction error coded sequence to generate the basic coded signal,

wherein, in said extended coded signal generating step in said separator separating step, the plurality of extended quantization coefficient sequences separated in said extended quantization coefficient separating step respectively are coded to generate the plurality of extended coded signals, and

wherein, in said merging device controlling step,

said basic coded signal converting step in said merging device merging step comprises:

a basic quantization coefficient separating step of demultiplexing the basic quantization coded sequence and the prediction error coded sequence from the basic coded signal;

a basic quantization coefficient sequence converting step of converting the basic quantization coded sequence separated in said basic quantization coefficient separating step into the basic quantization coefficient sequence; and

a prediction error coefficient sequence converting step of converting the prediction error coded sequence separated in said basic quantization coefficient separating step into the prediction error coefficient sequence,

said extended coded signal converting step in said merging device merging step comprises a plurality of extended quantization coefficient sequence converting steps of converting the plurality of extended coded signals into the extended quantization coefficient sequences, respectively,

said merging device merging step further comprises:

a basic quantization coefficient merging step of merging a sequence of the basic hierarchy coefficient values from the basic quantization coefficient sequence, the re-quantization parameter, and the prediction error coefficient sequence; and

an extended quantization coefficient merging step of merging a sequence of the extended hierarchy coefficient values from the plurality of extended quantization coefficient sequences, and

in said basic extended hierarchy merging step in said merging device merging step, the sequence of the basic hierarchy coefficient values is merged with the sequence of the extended hierarchy coefficient values to generate the third quantization coefficient values.

**42.** A computer program comprising computer executable program code for enabling the computer to carry out a method according to one of the claims 30 through 41.

**43.** A data carrier comprising a computer program according to claim 42.

**Fig. 1**

EP 1 531 628 A2

1010

SEPARATOR

CODED STREAM → SEPARATING UNIT

1100

B
E(0)
E(1)
⋮
E(M−1)

MULTIPLEXING UNIT

1600

→ St(B)
→ St(0)
→ St(1)
⋮
→ St(L−1)

# Fig. 2

Fig. 3

**Fig. 4**

Fig. 5

Fig. 6

Rate[Stout]=Rate[St(0)+St(2)+St(3)+St(5)]

EP 1 531 628 A2

**Fig. 7**

**Fig. 8**

**Fig. 9**

**Fig. 10**

| CONSTITUENT | CONTENTS | NUMBER OF BITS [BIT] |
|---|---|---|
| EXTENDED STREAM NUMBER | INDEX NUMBER ASSIGNED TO EXTENDED STREAM | 1~4 |

**Fig. 11**

EP 1 531 628 A2

| CONSTITUENT | CONTENTS | NUMBER OF BITS [BIT] |
|---|---|---|
| EXTENDED SIGNAL MB ADDRESS | DIFFERENCE BETWEEN PRESENT MB AND PREVIOUS MB OF EXTENDED LAYER | 1-11 |
| CBP | REPRESENTS CODED BLOCK PATTERN SIGNAL OF MB SIGNAL IN EXTENDED QUANTIZATION COEFFICIENT SEQUENCE | 3-9 |

**Fig. 12**

EP 1 531 628 A2

Fig. 13

SEPARATING UNIT 1100a

CODED STREAM → COEFFICIENT INFORMATION SEPARATING SECTION 1260 → COEFFICIENT INFORMATION

MACROBLOCK LAYER DATA (MBAI, MB TYPE, CBP, MV, QP, AND SO ON)

VLD 1110 → (run, level) → COEFFICIENT CONVERTER 1120 → (run, level) X

BASIC, EXTENDED HIERARCHY SEPARATOR 1130

BASIC HIERARCHY B → BASIC QUANTIZATION COEFFICIENT CONVERTER 1140

EXTENDED HIERARCHY E → EXTENDED QUANTIZATION COEFFICIENT SEPARATOR 1150

C → COEFFICIENT SEQUENCE → RE-SCANNER 1160 → VLC BASIC 1210 → COEFFICIENT INFORMATION MULTIPLEXING SECTION 1270a → B

D → COEFFICIENT SEQUENCE → RE-SCANNER 1170 → VLC PREDICTION ERROR 1220 → E(0)

$F^0$ → COEFFICIENT SEQUENCE → RE-SCANNER 1181 → VLC $F^0$ 1231 → E(1)

$F^1$ → COEFFICIENT SEQUENCE → RE-SCANNER 1182 → VLC $F^1$ 1232 → E(2)

$F^{N-1}$ → COEFFICIENT SEQUENCE → RE-SCANNER 1183 → VLC $F^{N-1}$ 1233 → E(M-1)

**Fig. 14**

EP 1 531 628 A2

**Fig. 15**

3300a

MERGING UNIT

MACROBLOCK LAYER DATA (MBAI, MB TYPE, CBP, MV, QP, AND SO ON)

3450a

B* → COEFFICIENT INFORMATION SEPARATING SECTION

COEFFICIENT INFORMATION

3310 VLD BASIC → 3340 COEFFICIENT CONVERTER → C* COEFFICIENT SEQUENCE

3320 VLD PREDICTION ERROR → 3350 COEFFICIENT CONVERTER → D* COEFFICIENT SEQUENCE

3370 BASIC QUANTIZATION COEFFICIENT MERGING SECTION → B* BASIC HIERARCHY

E*(0) →

E*(1) → 3331 VLD E(0) → 3361 COEFFICIENT CONVERTER → F*0 COEFFICIENT SEQUENCE

E*(2) → 3332 VLD E(1) → 3362 COEFFICIENT CONVERTER → F*1 COEFFICIENT SEQUENCE

E*(M'−1) → 3333 VLD E(N'−1) → 3363 COEFFICIENT CONVERTER → F*N'−1 COEFFICIENT SEQUENCE

3380 EXTENDED QUANTIZATION COEFFICIENT MERGING SECTION → E* EXTENDED HIERARCHY

3390 BASIC, EXTENDED HIERARCHY MERGING SECTION → X*

3410 (run,level) COEFFICIENT CONVERTER → (run, level)

3420 VLC

3460 COEFFICIENT INFORMATION MULTIPLEXING SECTION → MERGED STREAM

EP 1 531 628 A2

78

Fig. 16

EXTENDED STREAM 1  E*(1)  —VLD→  (0,2)(0,-3)(0,1)EOB

EXTENDED STREAM 2  E*(2)  —→  (2,1)EOB

EXTENDED STREAM 4  E*(4)  —→  (0,1)(2,1)EOB

(run, level)
COEFFICIENT
CONVERSION

EXTENDED QUANTIZATION
COEFFICIENT SEQUENCE 0 F*0
EXTENDED QUANTIZATION
COEFFICIENT SEQUENCE 1 F*1
EXTENDED QUANTIZATION
COEFFICIENT SEQUENCE 2 F*2
EXTENDED QUANTIZATION
COEFFICIENT SEQUENCE 3 F*3

WHEN EXTENDED STREAM 3 IS
MISSING, IT IS HANDLED AS
COEFFICIENT OF 0 (ZERO) IN ALL MB
(NO CODING IN MB)

E*

MERGED STREAM

VLC

(0,8)(0,2)(2,1)(0,-3)(1,6)···EOB

X*

MERGED QUANTIZATION COEFFICIENT
SEQUENCE
EXTENDED STREAM 0

RE-SCAN

B*

BASIC STREAM B*   VLD

0,2,1,0

D*

func3(C)

VLD

(run, level)
COEFFICIENT
CONVERSION

C*

func3

(0,2)(6,1)(0,1)(9,-1)EOB

**Fig. 17**

EP 1 531 628 A2

**Fig. 18**

Fig. 19

**Fig. 20**

EP 1 531 628 A2

**Fig. 21**

**Fig. 22**

EP 1 531 628 A2

| RATE | SWITCH 0 | SWITCH 1 | SWITCH 2 |
|------|----------|----------|----------|
| 6q | on | on | on |
| 5q | off | on | on |
| 4q | on | off | on |
| 3q | on | on | off |
| 2q | off | on | off |
| q | on | off | off |

**Fig. 23**

**Fig. 24**

**Fig. 25**

St(B)

St(0)
St(1)

St(2)

St(L−1)

1015

SEPARATOR

METHOD 1

METHOD 2

B

B B B

MULTIPLEXING UNIT

1605

1105

SEPARATING UNIT

E(0)
E(1)
E(2)
E(3)
E(4)
E(5)
E(6)

E(M−1)

1

2

4

$2^{L-1}$

B

CODED STREAM

**Fig. 26**

**Fig. 27**

EP 1 531 628 A2

2012

TRANSMITTING PATH SELECTOR

SWITCH 0

St(0)

Rate[St(0)]=q

SWITCH 1

St(1)

Rate[St(1)]=2q

SWITCH 2

St(2)

Rate[St(2)]=4q

St(2)

4q

Rate[Stout]=Rate[St(2)]
=4q

# Fig. 28

| RATE | SWITCH 0 | SWITCH 1 | SWITCH 2 |
|------|----------|----------|----------|
| 7q | on | on | on |
| 6q | off | on | on |
| 5q | on | off | on |
| 4q | off | off | on |
| 3q | on | on | off |
| 2q | off | on | off |
| q | on | off | off |

**Fig. 29**

**Fig. 30**

EP 1 531 628 A2

**Fig. 31**

EP 1 531 628 A2

Fig. 32

| CONSTITUENT | CONTENTS | NUMBER OF BITS [BIT] |
|---|---|---|
| EXTENDED SIGNAL MB ADDRESS | DIFFERENCE BETWEEN PRESENT MB AND PREVIOUS MB OF EXTENDED LAYER | 1-11 |
| CBP | REPRESENTS CODED BLOCK PATTERN SIGNAL OF MB SIGNAL IN EXTENDED QUANTIZATION COEFFICIENT SEQUENCE | 3-9 |
| h | INTEGER USED FOR MERGING BASIC QUANTIZATION COEFFICIENT AND PREDICTION ERROR COEFFICIENT | 0-5 |

**Fig. 33**

| COEFFICIENT VALUE | CODEWORD |
|---|---|
| 1 | 0s |
| 2 | 10s |
| 3 | 110s |
| 4 | 1110s |
| 5 | 11110s |
| 6 | 11111s |

# Fig. 34

**Fig. 35**

Fig. 36

**Fig. 37**

MERGING UNIT 3300d

MACROBLOCK LAYER DATA (MBAI, MB TYPE, CBP, MV, QP, AND SO ON)

COEFFICIENT INFORMATION SEPARATING SECTION 3450a

COEFFICIENT INFORMATION

BASIC QUANTIZATION COEFFICIENT SEPARATING SECTION 3430

B* → VLD BASIC 3310 → C* → COEFFICIENT CONVERTER 3340 → COEFFICIENT SEQUENCE

VLD PREDICTION_ERROR 3320d → D* → COEFFICIENT CONVERTER 3350 → COEFFICIENT SEQUENCE

E*(0) → VLD E(0) 3331d → F*0 → COEFFICIENT CONVERTER 3361 → COEFFICIENT SEQUENCE 3362

E*(1) → VLD E(1) 3332d → F*1 → COEFFICIENT CONVERTER → COEFFICIENT SEQUENCE 3363

E*(M'−1) → VLD E(N'−1) 3333d → F*N'−1 → COEFFICIENT CONVERTER → COEFFICIENT SEQUENCE

BASIC QUANTIZATION COEFFICIENT MERGING SECTION 3370d → B*

BASIC HIERARCHY 3380d

EXTENDED QUANTIZATION COEFFICIENT MERGING SECTION → E*

EXTENDED HIERARCHY

BASIC, EXTENDED HIERARCHY MERGING SECTION 3390 → X* → (RUN, LEVEL) COEFFICIENT CONVERTER 3410 → (run, level) → VLC 3420 → COEFFICIENT INFORMATION MULTIPLEXING SECTION 3460 → MERGED STREAM

100

INPUT MPEG-2 BIT STREAM → b1 → [51 VLD] → [53 INVERSE QUANTIZER] → [55 QUANTIZER] → [57 VLC] → b2 → OUTPUT MPEG-2 BIT STREAM

[59 RATE CONTROLLER]

50

**Fig. 38**

START

A1 — INITIALIZE n = 1

A2 — CALCULATE INDICATORS Xi, Xp, Xb OF COMPLEXITY OF IMAGES

A3 — CALCULATE ASSIGNED CODE AMOUNT Ti. Tp. Tb FOR EACH PICTURE IN GOP

A4 — $n = 1$? — NO

YES

A5 — INITIALIZE ASSIGNED CODE AMOUNT R FOR UNCODED PICTURE IN GOP

A6 — UPDATE ASSIGNED CODE AMOUNT R FOR UNCODED PICTURE IN GOP

A7 — $j = 1$

A8 — CALCULATE OCCUPANCY AMOUNT OF VIRTUAL BUFFER WHEN CODING J-TH MACROBLOCK

A9 — CALCULATE QUANTIZATION SCALE CODE FOR J-TH MACROBLOCK

A10 — CODE J-TH MB

A11 — $j++$

A12 — $j > NMB$? — NO

YES

A13 — $n++$

A14 — $n > NPIC$? — NO

YES

END

**Fig. 39**

EP 1 531 628 A2

TARGET BIT RATE ○

63

BIT RATE
PERCENTAGE
CALCULATOR

Input_Bitrate

ioRatio

65

INPUT CODE
AMOUNT
INTEGRATOR

69

TARGET OUTPUT
CODE AMOUNT
UPDATING UNIT

67

DIFFERENTIAL
CODE AMOUNT
CALCULATOR

Tin

Tdiff

71

QUANTIZATION
SCALE CODE
CALCULATOR

b1

51

61

53

55

57

b2

INPUT MPEG-2 BIT STREAM ○→

VLD

DELAY
CIRCUIT

INVERSE
QUANTIZER

QUANTIZER

VLC

○ OUTPUT MPEG-2

60

BIT STREAM

**Fig. 40**

START

B1 — INITIALIZE n = 1

B2 — CALCULATE INPUT/OUTPUT BIT RATE PERCENTAGE FROM INPUT BIT RATE VALUE AND OUTPUT BIT RATE VALUE

B3 — CALCULATE DIFFERENTIAL CODE AMOUNT BETWEEN RELEVANT TARGET OUTPUT CODE AMOUNT AND ACTUAL OUTPUT CODE AMOUNT

B4 — INTEGRATE RELEVANT PICTURE CODE AMOUNT IN INPUT BIT STREAM

B5 — CALCULATE RELEVANT PICTURE – TARGET OUTPUT CODE AMOUNT

B6 — j = 1

B7 — CALCULATE OCCUPANCY AMOUNT OF VIRTUAL BUFFER WHEN CODING J-TH MACROBLOCK

B8 — CALCULATE QUANTIZATION SCALE CODE FOR J-TH MACROBLOCK

B9 — CODE J-TH MB

B10 — j++

B11 — j > NMB?  NO

B12 — n++  YES

**Fig. 41**

B13 — n > NPIC?  NO

YES

END

EP 1 531 628 A2

TARGET BIT RATE ○——————————→ BIT RATE PERCENTAGE CALCULATOR — 63

Input_Bitrate

ioRatio

83 — TARGET OUTPUT CODE AMOUNT UPDATING UNIT ←—— DIFFERENTIAL CODE AMOUNT CALCULATOR — 67

Tin

85 — QUANTIZATION SCALE CODE CALCULATOR

b3

INPUT BIT STREAM ○——→ VLD — 81 —→ INVERSE QUANTIZER — 53 —→ QUANTIZER — 55 —→ VLC — 57 ——→ b4 ○ OUTPUT BIT STREAM

80

# Fig. 42

START

C1 — INITIALIZE n = 1

C2 — CALCULATE INPUT/OUTPUT BIT RATE PERCENTAGE FROM INPUT BIT RATE VALUE AND OUTPUT BIT RATE VALUE

C3 — CALCULATE DIFFERENTIAL CODE AMOUNT BETWEEN RELEVANT TARGET OUTPUT CODE AMOUNT AND ACTUAL OUTPUT CODE AMOUNT

C4 — OBTAIN RELEVANT PICTURE INPUT CODE AMOUNT INFORMATION BY DECODING INPUT BIT STREAM

C5 — CALCULATE RELEVANT PICTURE TARGET OUTPUT CODE AMOUNT

C6 — j=1

C7 — CALCULATE OCCUPANCY AMOUNT OF VIRTUAL BUFFER WHEN CODING J-TH MACROBLOCK

C8 — CALCULATE QUANTIZATION SCALE CODE FOR J-TH MACROBLOCK

C9 — CODE J-TH MB

C10 — j++

C11 — j>NMB?    NO

C12 — n++    YES

C13 — n>NPIC?    NO

YES

END

**Fig. 43**